# EUROPEAN PATENT APPLICATION

(11) **EP 4 838 966 A1**
(43) Date of publication of application: **11.11.2026**
(21) Application number: 26176921.0
(22) Date of filing: 06.05.2026
(51) Int. Cl.: H04W 52/14, H04B 17/309, H04L 5/00, H04W 36/00, H04W 52/24, H04W 52/32, H04W 52/50, H04W 74/0833, H04W 74/0836

(54) **CELL SWITCH IN ASYMMETRIC TRANSMISSION AND RECEPTION POINTS**

(30) Priority: 06.05.2025 US 202563800922 P
(71) Applicant: Comcast Cable Communications, LLC, Philadelphia, PA 19103 (US)
(72) Inventor: CIRIK, Ali Cagatay, Philadelphia, 19103 (US); DINAN, Esmael Hejazi, Philadelphia, 19103 (US)
(74) Representative: V.O.

(57) **Abstract**

A wireless device may be configured to communicate via a candidate cell that supports asymmetric operation. A pathloss offset may be indicated in a control message and by one or more configuration messages for the candidate cell. The pathloss offset may be applied for an uplink transmission via the candidate cell by using a transmission power that is based on the pathloss offset.

## Description

### CROSS-REFERENCE TO RELATED APPLICATIONS

This application claims the benefit of U.S. Provisional Application No. 63/800,922 filed on May 6, 2025. The above-referenced application is hereby incorporated by reference in its entirety.

### BACKGROUND

A wireless device communicates with a base station. The wireless device receives configuration parameters for communicating with the base station via a cell.

### SUMMARY

The following summary presents a simplified summary of certain features. The summary is not an extensive overview and is not intended to identify key or critical elements.

A wireless device may communicate with one or more base stations and/or communication points. An uplink-only communication point may not perform downlink transmissions to a wireless device in an asymmetric communication operation. A pathloss offset for uplink transmissions to the uplink-only communication point may be configured in a transmission state indicated for the uplink-only communication point. If a candidate cell supports asymmetric communication operation, the candidate cell may not yet have an indicated transmission state, and the wireless device may not know which pathloss offset to apply for uplink transmission to the uplink-only communication point of the candidate cell. To address this, one or more messages (e.g., radio resource control (RRC) messages) comprising a configuration of the candidate cell indicating the pathloss offset may be sent to a wireless device. A command for uplink communication may be provided, where the command may include a value indicating the candidate cell and a field indicating the pathloss offset to apply for the uplink transmission. A transmission power for an uplink signal may be determined by the wireless device, for example, by using the pathloss offset.

These and other features and advantages are described in greater detail below.

### BRIEF DESCRIPTION OF THE DRAWINGS

Examples of several of the various embodiments of the present disclosure are described herein with reference to the drawings.
FIG. 1A and FIG. 1B show example communication networks.
FIG. 2A shows an example user plane.
FIG. 2B shows an example control plane configuration.
FIG. 3 shows example of protocol layers.
FIG. 4A shows an example downlink data flow for a user plane configuration.
FIG. 4B shows an example format of a Medium Access Control (MAC) subheader in a MAC Protocol Data Unit (PDU).
FIG. 5A shows an example mapping for downlink channels.
FIG. 5B shows an example mapping for uplink channels.
FIG. 6 shows example radio resource control (RRC) states and RRC state transitions.
FIG. 7 shows an example configuration of a frame.
FIG. 8 shows an example resource configuration of one or more carriers.
FIG. 9 shows an example configuration of bandwidth parts (BWPs).
FIG. 10A shows example carrier aggregation configurations based on component carriers.
FIG. 10B shows example group of cells.
FIG. 11A shows an example mapping of one or more synchronization signal/physical broadcast channel (SS/PBCH) blocks.
FIG. 11B shows an example mapping of one or more channel state information reference signals (CSI-RSs).
FIG. 12A shows examples of downlink beam management procedures.
FIG. 12B shows examples of uplink beam management procedures.
FIG. 13A shows an example four-step random access procedure.
FIG. 13B shows an example two-step random access procedure.
FIG. 13C shows an example two-step random access procedure.
FIG. 14A shows an example of control resource set (CORESET) configurations.
FIG. 14B shows an example of a control channel element to resource element group (CCE-to-REG) mapping.
FIG. 15A shows an example of communications between a wireless device and a base station.
FIG. 15B shows example elements of a computing device that may be used to implement any of the various devices described herein
FIG. 16A, FIG. 16B, FIG. 16C, and FIG. 16D show examples of uplink and downlink signal transmission.
FIG. 17A and FIG. 17B show signal flow examples showing aspects of transmission configuration indicator (TCI) state indication.
FIG. 18 shows a signal flow example for aspects of layer-1/layer-2 triggered mobility (LTM) according to the present disclosure.
FIG. 19 shows examples of asymmetric uplink and downlink channels.
FIG. 20A and FIG. 20B show examples of asymmetric uplink and downlink channels.
FIG. 21 shows an example of TCI state configuration.
FIG. 22 shows an example of application of pathloss for LTM.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

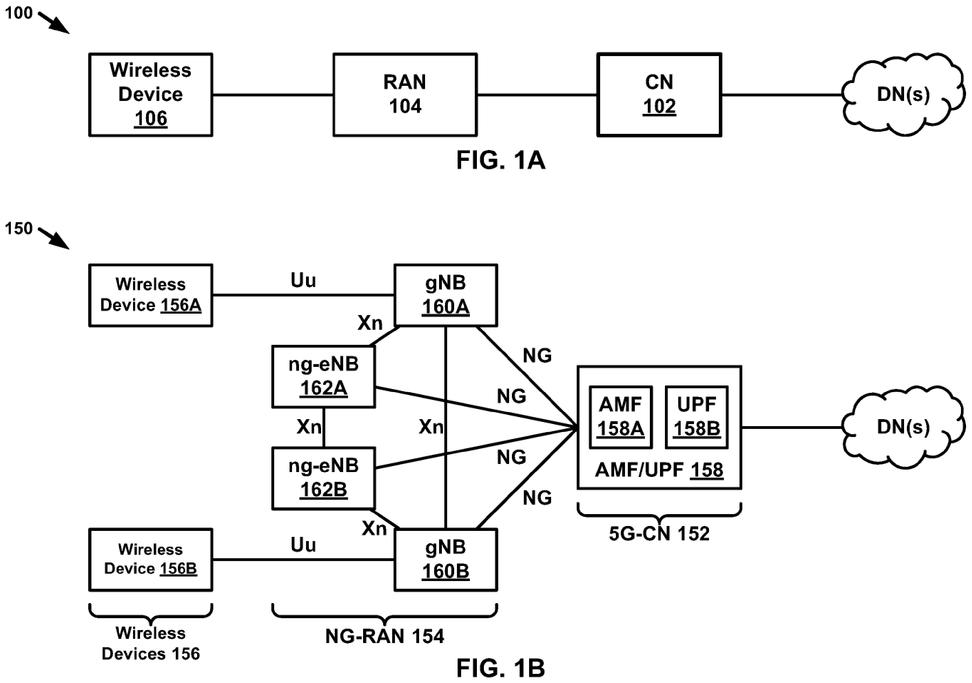

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle roadside unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode user equipment (UE) reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

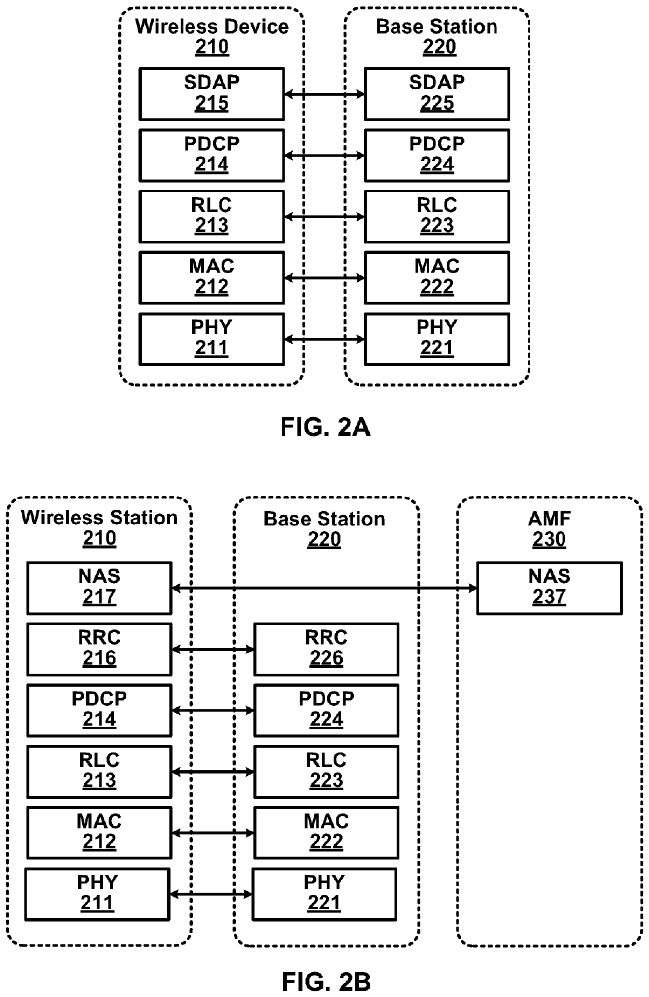

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

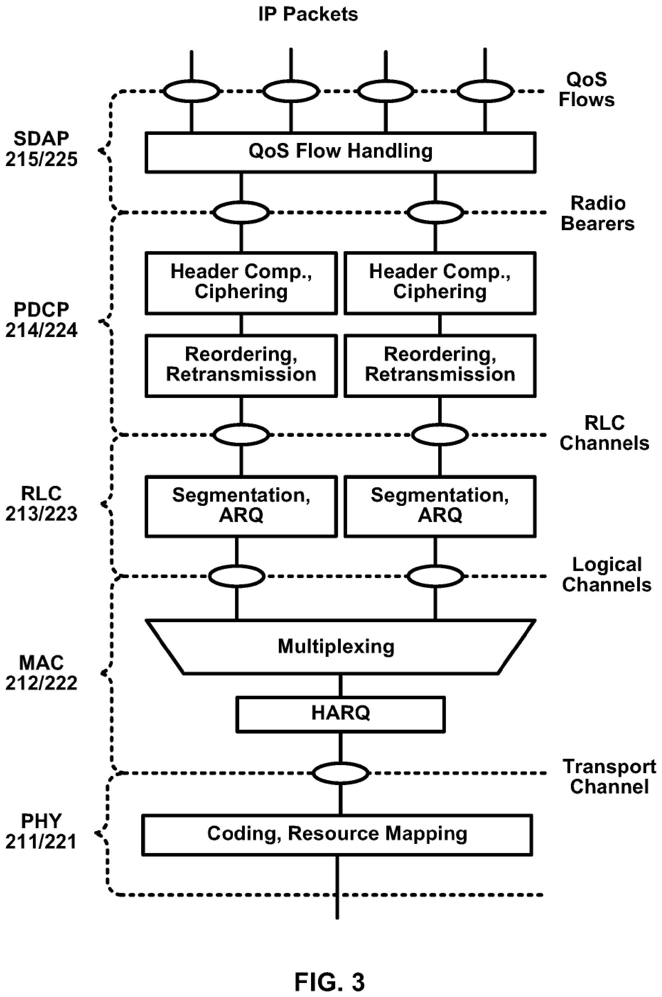

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

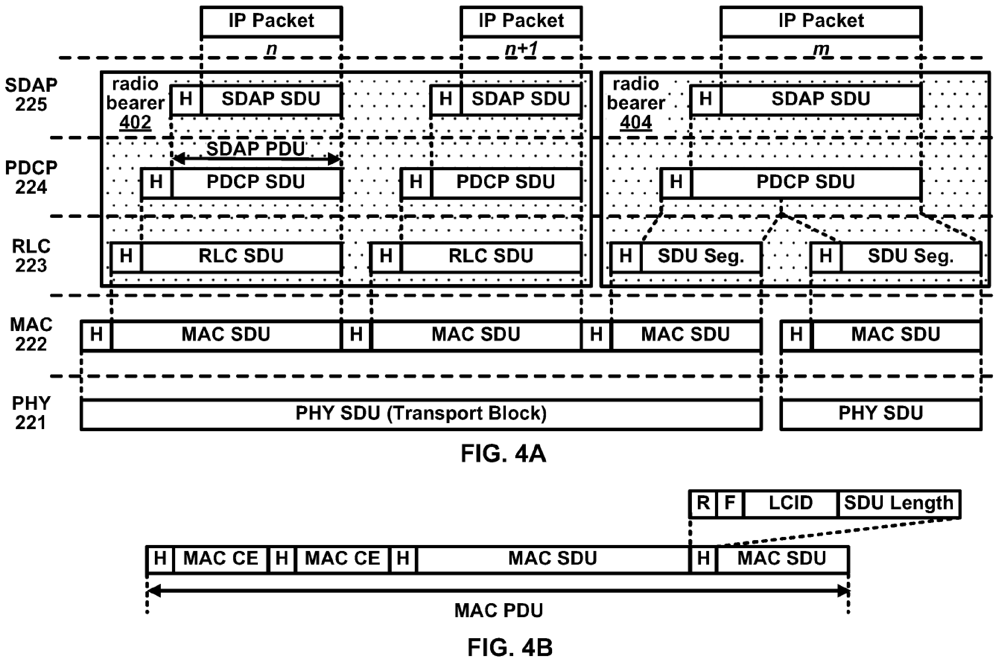

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

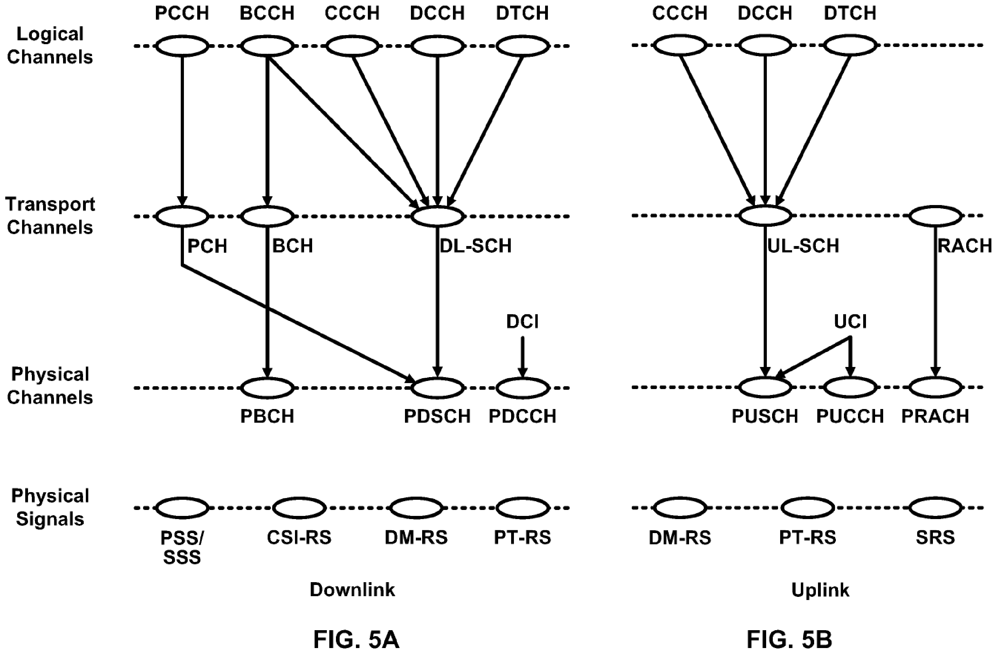

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

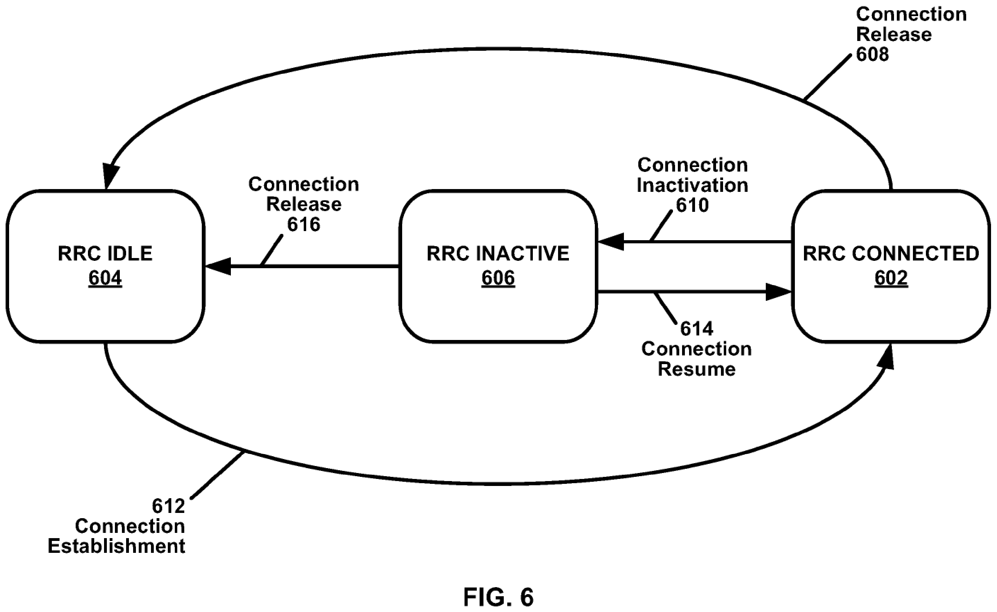

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split into two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

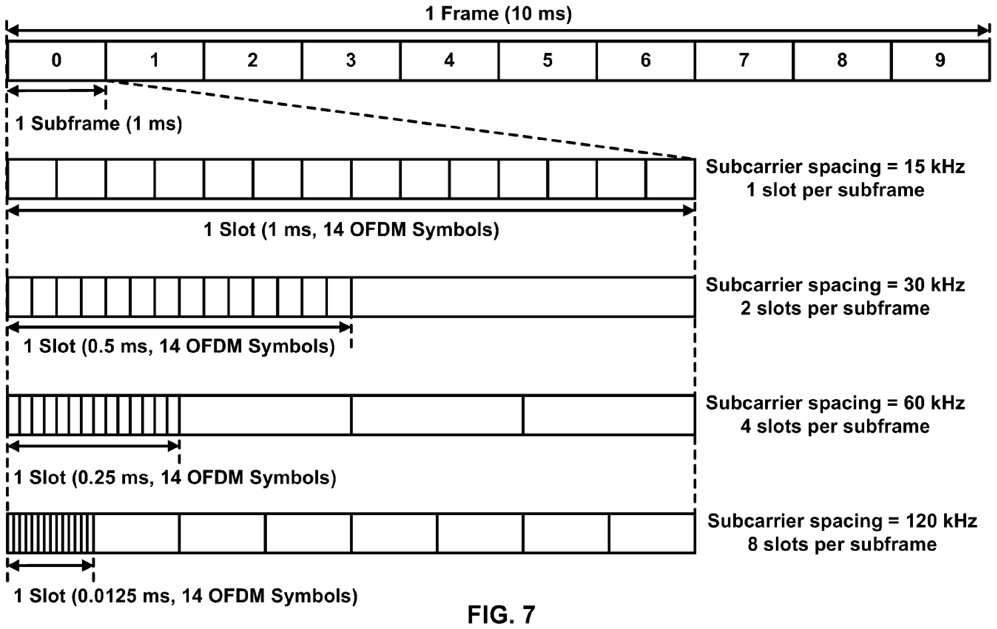

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 µs, for example, for a numerology in an NR configuration or any other radio configurations. Numerologies may be defined with the following subcarrier spacing/cyclic prefix duration combinations: 15 kHz/4.7 µs; 30 kHz/2.3 µs; 60 kHz/1.2 µs; 120 kHz/0.59 µs; 240 kHz/0.29 µs, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

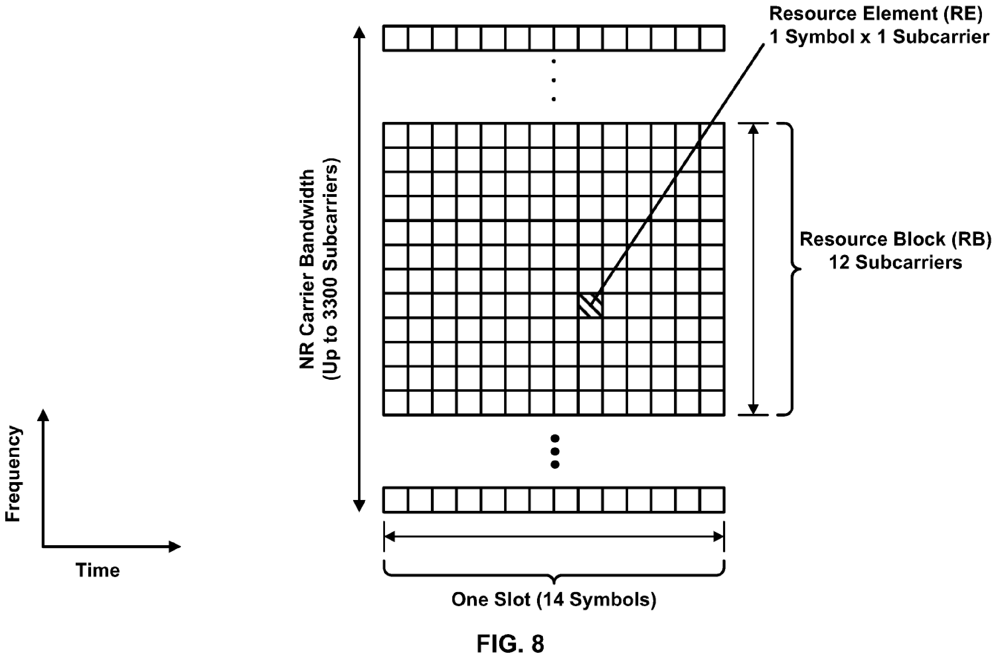

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

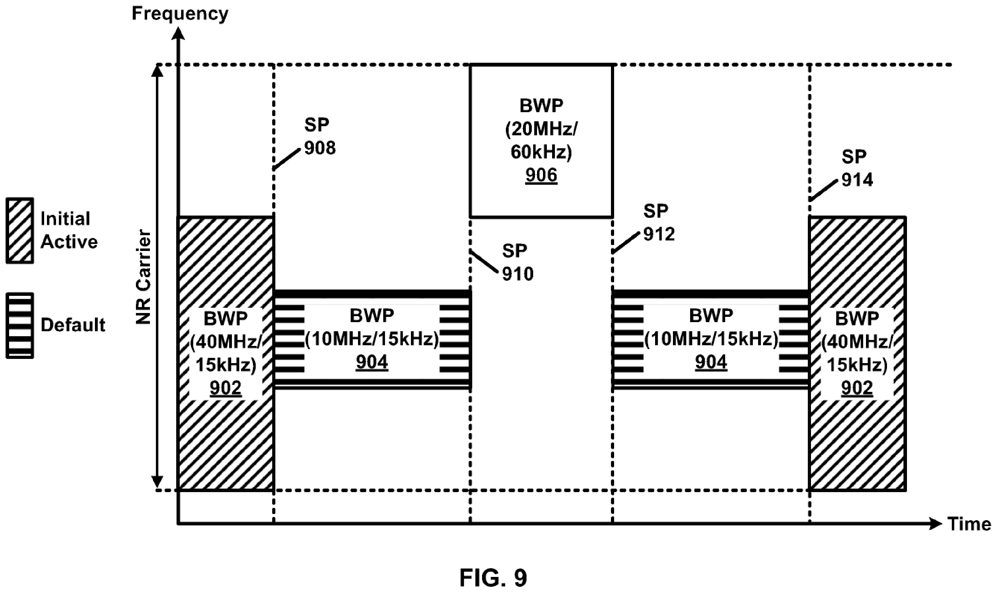

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response to receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response to receiving DCI indicating BWP 904 as a new active BWP. The wireless device may switch at a switching point 914 from an active BWP 904 to the BWP 902, for example, after or in response to receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

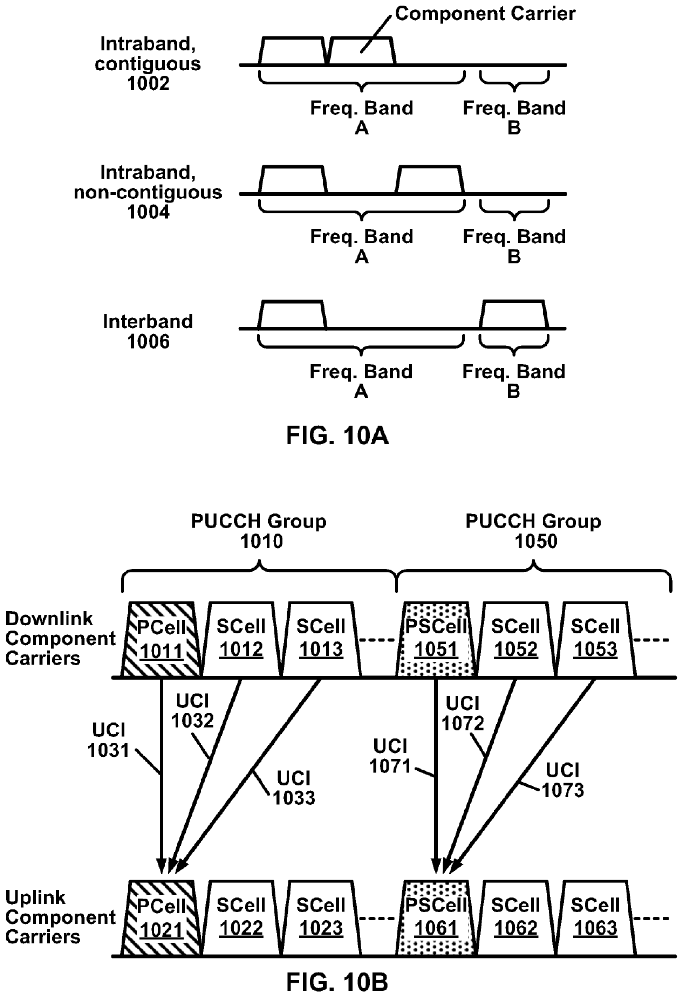

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCIbetween the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

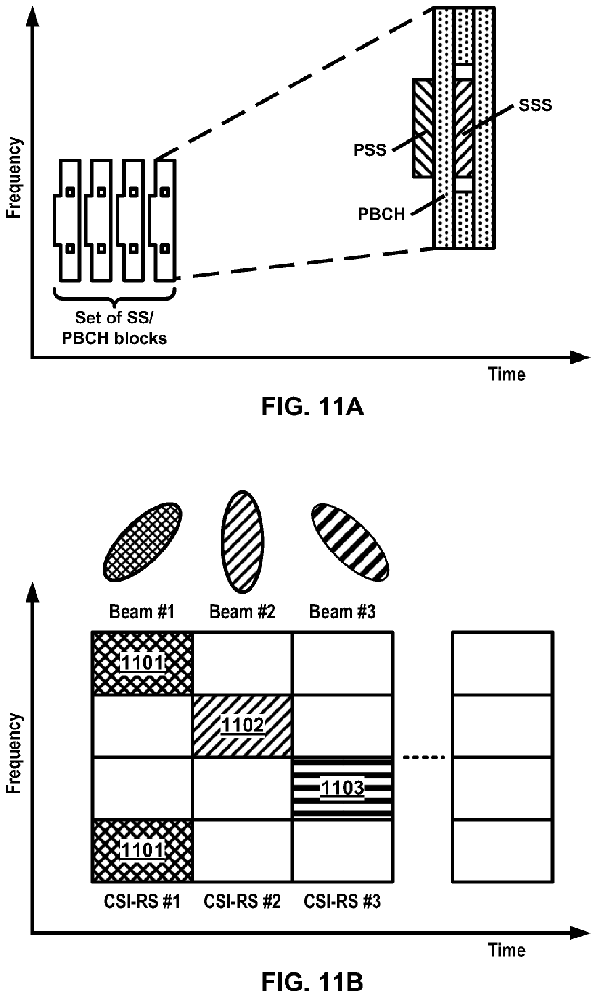

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1.The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*)*,* and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS **1101** that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

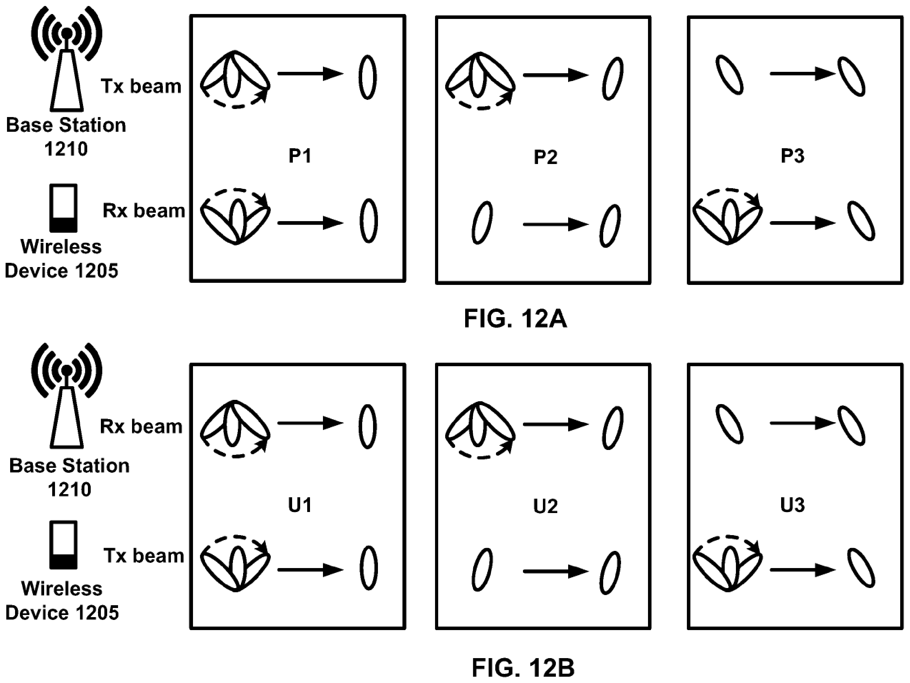

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

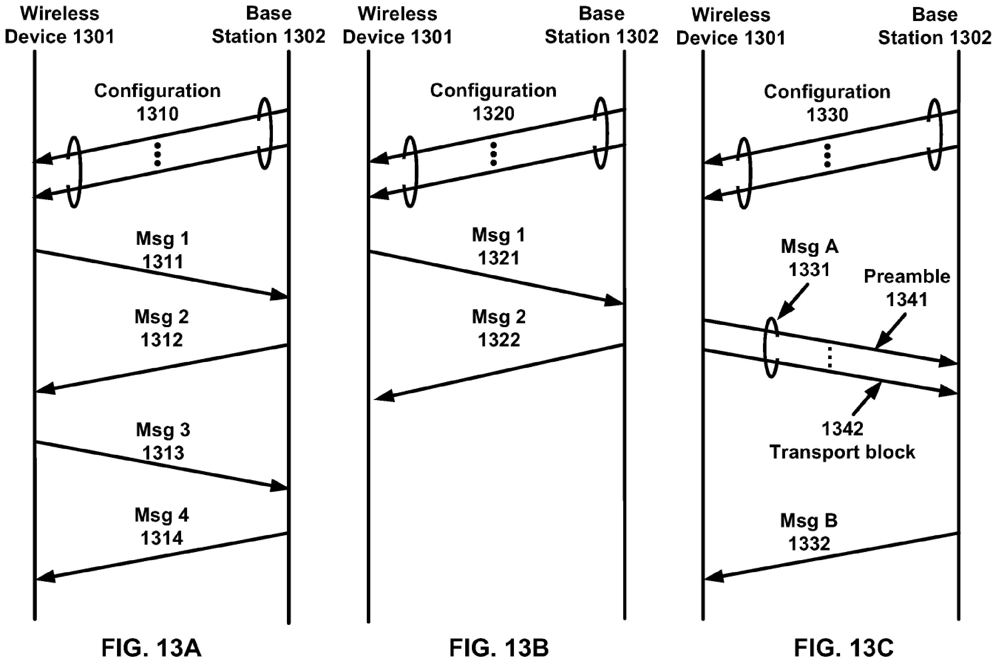

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-*configGeneral*); cell-specific parameters (e.g., *RACH-ConfigCommon*)*;* and/or dedicated parameters (e.g., RACH-*configDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs).The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList*) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., *PREAMBLE_TRANSMISSION_COUNTER*). The wireless device may determine that a random access procedure has been completed unsuccessfully, for example, if the quantity/number of preamble transmissions exceeds a threshold configured by the one or more RACH parameters (e.g., *preambleTransMax*) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., *ra-ResponseWindow*) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Typel-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows: $RA - RNTI = 1 + s _ id + 14 \times t _ id + 14 \times 80 \times f _ id + 14 + 80 \times 8 \times ul _ carrier _ id$ where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e.g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., *ra-PreambleIndex*)*.*

The wireless device may start a time window (e.g., *ra-ResponseWindow*) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., *recoverySearchSpaceId*). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

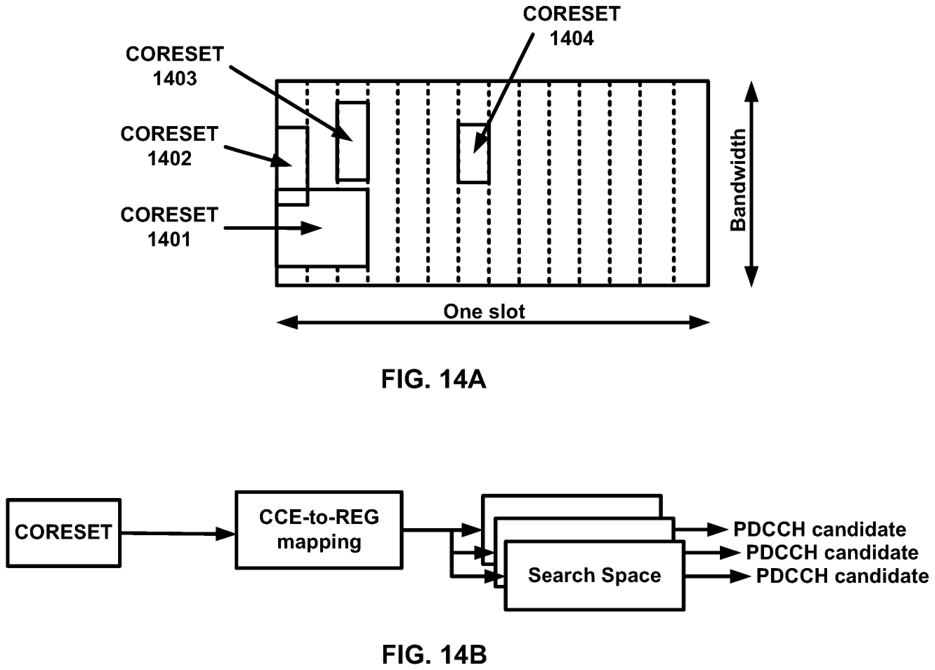

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

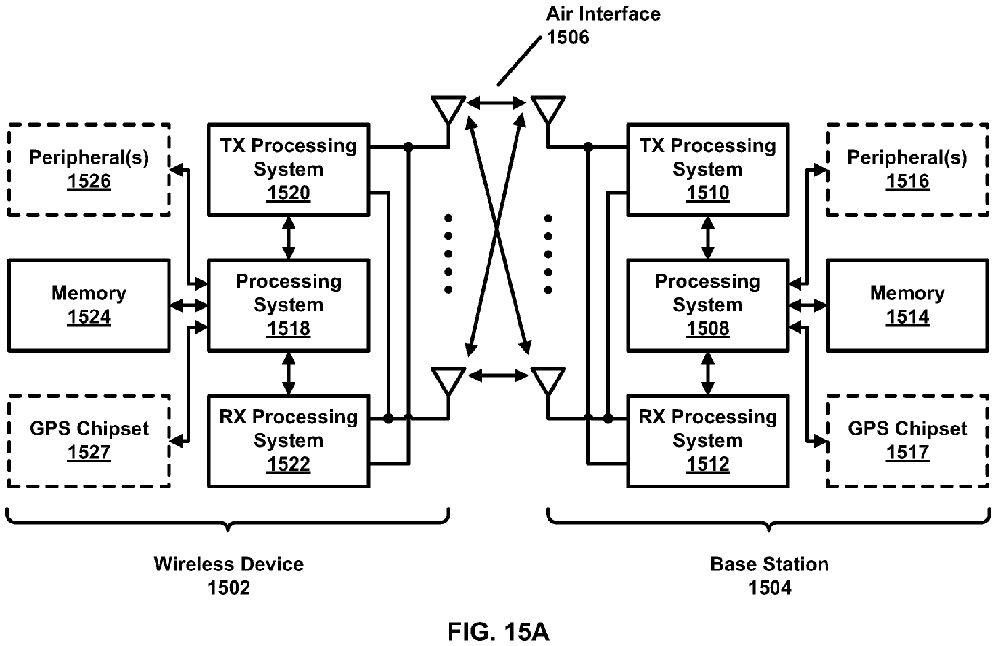

FIG. 15A shows example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

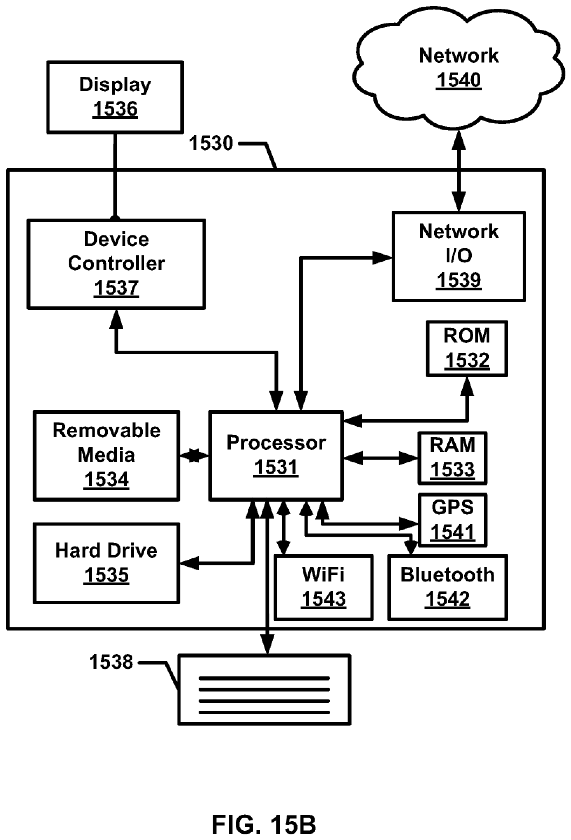

FIG. 15B shows example elements of a computing device that may be used to implement any of the various devices described herein, including, for example, the base station 160A, 160B, 162A, 162B, 220, 1210, 1302, 1720, 1760, 1810, 1830, 1850, 1910, 1930, 1950, and/or 2110, the wireless device 106, 156A, 156B, 210, 1205, 1301, 1700, 1740, 1800, 1820, 1840, 1900, 1920, 1940, and/or 2120 or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

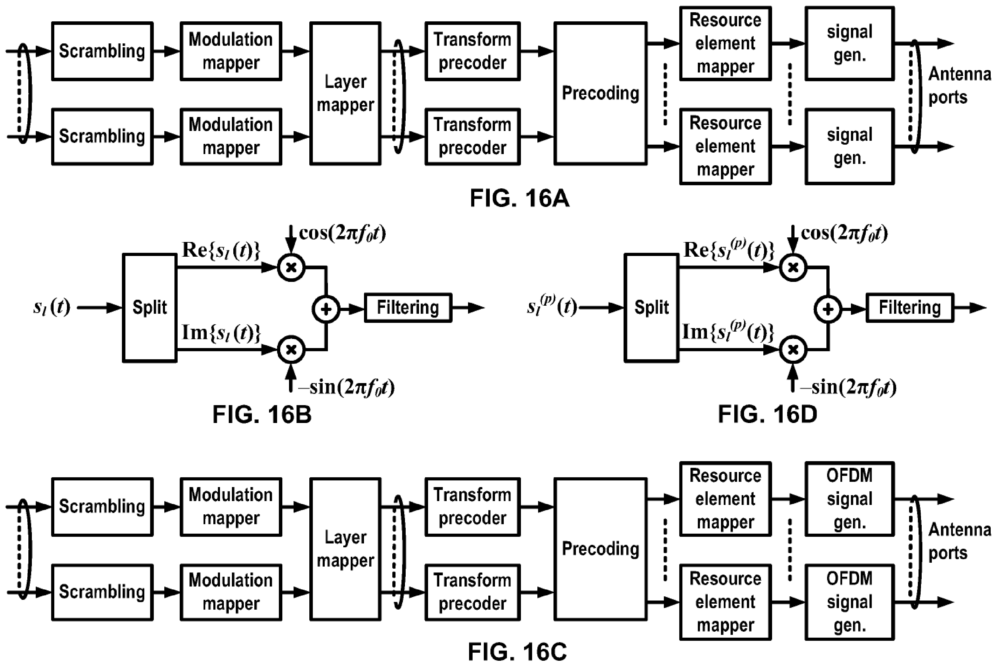

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

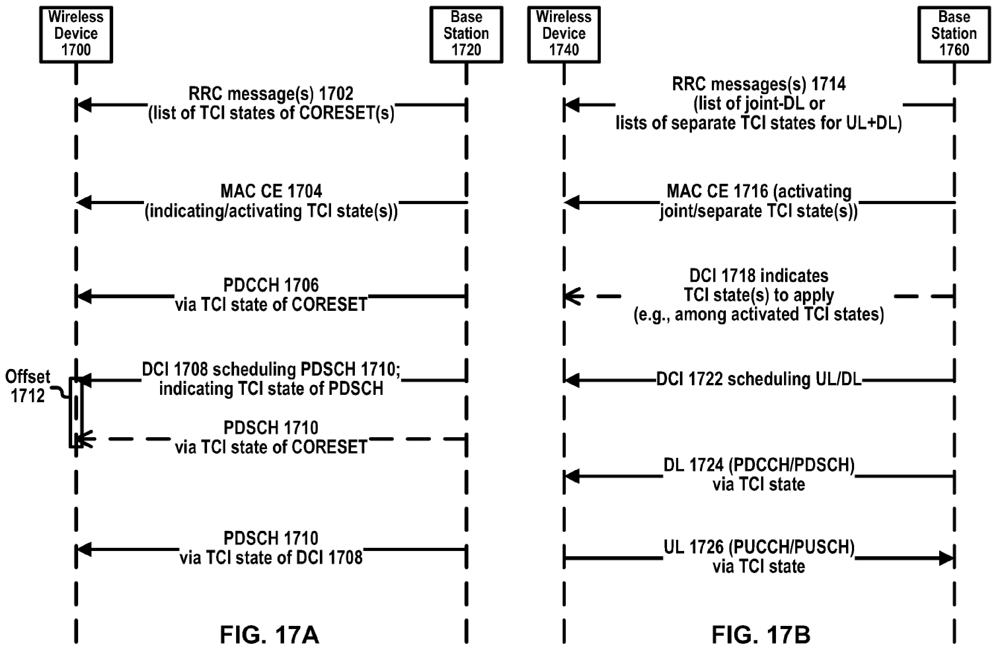

FIG. 17A and FIG. 17B show examples procedures for beam indication based on TCI states. FIG. 17A shows an example of a wireless device 1700 receiving, from a base station 1720, channel-specific beam indications for separate downlink physical channels, such as the PDCCH and the PDSCH. FIG. 17B shows an example of a wireless device 1740 receiving, from a base station 1760, beam indications applicable to multiple physical channels (i.e., common among physical channels), such as TCI states for downlink receptions and/or uplink transmissions. This approach of using a TCI state for multiple physical channels as shown in FIG. 17B may be referred to as a unified TCI framework.

Wireless device 1700, as shown in FIG. 17A, may receive one or more RRC messages 1702 from base station 1720. One or more RRC messages 1702 may indicate one or more TCI states for one or more CORESETs. For example, RRC messages 1702 may comprise a list of TCI states (e.g., a list of IDs of TCI states) for CORESETs of wireless device 1700.

Each TCI state may indicate one or more reference signals. For example, each TCI state may comprise one or more IDs of one or more reference signals. The one or more reference signals of a TCI state may be used for channel estimation (including beam determination) such that a signal that is quasi co-located (QCL'ed) with the reference signal of a TCI state may experience the same channel conditions (e.g., channel distortions) and properties as the reference signal of the TCI state. The effects of the channel on the signal may be inferred from the effects of the channel on the reference signal. The effects of the channel on the signal may be inferred from the effects of the channel on the reference signal, for example, if the reference signal is a known sequence (e.g., a pilot signal).

A TCI state may indicate which, so-called, large-scale channel properties may be inferred from the QCL association between a signal and a reference signal indicated by a TCI state. Each of the one or more reference signals indicated by a TCI state may be associated with a QCL type. There may be four QCL types, such as QCL Type-A, QCL Type-B, QCL Type-C, and QCL Type-D. QCL Type-A may be used to estimate Doppler shift, Doppler spread, average delay, and delay spread. QCL Type-B may be used to estimate Doppler shift and Doppler spread. QCL Type-C may be used to estimate average delay and Doppler shift. QCL Type-D may be used for spatial domain parameters (e.g., one or more parameters for spatial domain filters, and/or QCL relationships between antenna ports, used to receive downlink signals).

A reference signal of a TCI state with a QCL type of QCL Type-D may be used for beam determination. Wireless device 1700 may determine (e.g., assume or infer) that base station 1720 applies the same spatial (domain) filter to both the signal and the reference signal of the TCI states. Wireless device 1700 may determine (e.g., assume or infer) that base station 1720 applies the same spatial (domain) filter to both the signal and the reference signal of the TCI states, for example, if a signal is quasi co-located with a reference signal of a TCI state with QCL Type-D. Wireless device 1700 may use a spatial domain (reception) filter suitable to receive the signal, by being able to determine (e.g., assume or infer) the spatial domain (transmission) filter applied by base station 1720 to a signal (from the spatial domain filter applied to the QCL'd reference signal). The spatial domain filter used to receive a downlink signal may be referred to as a spatial filter, a spatial domain filter parameter, a spatial domain reception filter, quasi co-location of (e.g., antenna ports of) a downlink signal with (e.g., antenna ports of) a reference signal. The quasi co-location of the downlink signal with the reference signal may be referred to as a QCL assumption, a QCL relationship, and/or QCL information.

Returning to FIG. 17A, wireless device 1700 may receive one or more RRC messages 1702 that indicate TCI states. For example, one or more RRC messages 1702 may comprise a list of TCI states of a CORESET (e.g., a list of IDs of TCI states). Wireless device 1700 may use the TCI states in the list for receiving PDCCHs on the CORESETs. The TCI states indicated by one or more RRC messages 1702 may be referred to as configured TCI states or RRC-configured TCI states.

FIG. 17A shows that wireless device 1700 may receive MAC CE 1704 from base station 1720. MAC CE 1704 may indicate, or activate, one or more TCI states configured by one or more RRC messages 1702. For example, MAC CE 1704 may indicate a (e.g., single) TCI state for one or more CORESETs (e.g., for PDCCH receptions via the one or more CORESETs). MAC CE 1704 may activate a plurality of TCI states that may be used (applied) for PDCCH receptions via CORESETs. The TCI states indicated by MAC CE 1704 may be referred to as activated TCI states or Media Access Control Protocol Control Element (MAC-CE) activated TCI states.

Wireless device 1700 may determine one or more spatial domain filter parameters (e.g., QCL information) based on a reference signal indicated by the TCI state. For example, FIG. 17A shows that wireless device 1700 may receive PDCCH 1706, of a CORESET, via a TCI state of the CORESET.

DCI For PDSCH reception may be used to indicate which TCI state, among the TCI states (e.g., for the CORESETs) activated by MAC CE 1704, wireless device 1700 is to use (apply) for receiving PDSCH receptions (e.g., data, transport blocks, code block groups of a transport block). Wireless device 1700 may receive DCI 1708. DCI 1708 may schedule a PDSCH reception 1710 and indicate which TCI state, among the activated TCI states, wireless device 1700 is to use (apply) for receiving PDSCH reception 1710. A TCI state indicated by DCI may be referred to as an indicated TCI state. A TCI state indicated by a message (e.g., MAC CE) that indicates one single TCI (e.g., one TCI state) state may be referred to as an indicated TCI state.

Wireless device 1700 may use (e.g., apply) a different TCI state depending on an offset (e.g., in time) between receiving DCI 1708 and PDSCH reception 1710, although DCI 1708 indicates a TCI state to use for receiving PDSCH reception 1710. For example, DCI 1708 may schedule PDSCH reception 1710 within an offset 1712. Offset 1712 may be referred to as a scheduling offset. Offset 1712 may be a duration or a number of symbols. Offset 1712 may be based on a UE-capability of wireless device 1700.

Wireless device 1700 may use (e.g., apply) the TCI state of the CORESET (e.g., instead of the TCI state indicated by DCI 1708), based on DCI 1708 scheduling PDSCH reception 1710 within offset 1712. Wireless device 1700 may apply the TCI state used to receive PDCCH 1706 (e.g., and does not use/apply the TCI state indicated by DCI 1708 for receiving PDSCH reception 1710).

Wireless device 1700, within offset 1712, may be unable to (successfully) decode DCI 1708, update the spatial filtering, and/or retune RF chains in time for receiving PDSCH reception 1710. Using the TCI state of the CORESET may be used to receive PDCCH 1706 (instead of the TCI state indicated in DCI 1708 for receiving the PDSCH reception 1710). Using the TCI state of the CORESET may allow wireless device 1700 to receive PDSCH reception 1710 within offset 1712.

Wireless device 1700 may use/apply the TCI state indicated by DCI 1708 for receiving PDSCH reception 1710. Wireless device 1700 may use/apply the TCI state indicated by DCI 1708 for receiving PDSCH reception 1710, for example, if PDSCH reception 1710 is scheduled after offset 1712. For example, FIG. 17A shows that wireless device 1700 may receive, from base station 1720, PDSCH reception 1710 via the TCI state indicated by DCI 1708. Wireless device 1700, as another example (e.g., regardless of offset 1712), may use (e.g., apply) the TCI state of the CORESET for PDSCH reception 1710, based on (e.g., in response to) DCI 1708 not comprising a field indicating a TCI state (any TCI state) for PDSCH reception 1710 (e.g., based on a DCI format of DCI 1708, such as DCI 1_0).

Base station 1720, as shown in FIG. 17A, may send (e.g., transmit) separate beam indications for the PDCCH and the PDSCH, along with separate beam indications for each PDSCH transmission. FIG. 17B shows an example of a unified TCI state framework. A single TCI state (or a set of TCI states), under the unified TCI state framework, may be indicated for each of the downlink physical channels, such as a single TCI state applied to both PDCCH and PDSCH transmissions. A TCI state that is applied to both the PDCCH and PDSCH may be referred to as a downlink TCI state (or a joint-downlink TCI state). A TCI state (or a set of TCI states), for uplink beam indications under the unified TCI state framework, may be indicated for each of the uplink physical channels, such as a single TCI state applied to both PUCCH and PUSCH transmissions. A TCI state that is applied to both the PUCCH and PUSCH may be referred to as an uplink TCI state.

The unified TCI state framework may also be used to indicate a single TCI state (or a set of TCI states) for both downlink and uplink, in addition to providing TCI states that are applied to each of the physical channels in the downlink or uplink. The TCI state may be applied to each of the downlink and uplink physical channels, such as the PDCCH, PDSCH, PUCCH, and PUSCH. A TCI state that is applicable to both downlink and uplink may be referred to as a joint TCI state, a joint-downlink TCI state, a joint DL/UL TCI state, or a common TCI state. A TCI state applicable to the unified TCI state framework may be referred to as a unified TCI state.

FIG. 17B shows that wireless device 1740 receives, from base station 1760, one or more RRC messages 1714, as an example of the unified TCI state framework. One or more RRC messages 1714 may indicate a plurality of TCI states. The plurality of TCI states may be a plurality of unified TCI states. One or more RRC messages 1714 may comprise a list of TCI states. The list of TCI states may be applicable to downlink and/or uplink (e.g., each of the downlink physical channels and/or each of the uplink physical channels). The list of TCI states may be a list of downlink TCI states, and the absence of a (separate) list of uplink TCI states may imply that the list of downlink TCI states is applicable to both the downlink and uplink (physical channels). The list of downlink TCI states may be referred to as a list of joint-downlink TCI states.

One or more RRC messages 1714 may comprise separate lists of TCI states for downlink and uplink. For example, the list of TCI states may comprise a list of downlink TCI states and a list of uplink TCI states. The list of downlink TCI states may be applicable to the downlink (physical channels) and the list of uplink TCI states may be applicable to the uplink (physical channels). Additionally or alternatively, one or more RRC messages 1714 may comprise a parameter set to joint or separate to indicate that the list of TCI states is (e.g., jointly) applicable for both downlink and uplink or that separate lists are configured for downlink and uplink. A list of TCI states applicable to downlink may be referred to as a list of joint-downlink TCI states. A list of TCI states applicable to downlink may be referred to as a list of joint-downlink TCI states, for example, if a separate list of uplink TCI states are configured.

One or more RRC messages 1714 may indicate one (e.g., a single) TCI state instead of a plurality of TCI states. Wireless device 1740 may (e.g., start to) use/apply the TCI state (e.g., without additional signaling via MAC CE and/or DCI), based on (e.g., in response to) one or more RRC messages 1714 indicating one TCI state. The plurality of TCI states indicated by one or more RRC messages 1714, similar to the TCI states indicated by one or more RRC messages 1702 of FIG. 17A, may be referred to as configured TCI states or RRC-configured TCI states.

Wireless device 1740, as shown in FIG. 17B, may receive a MAC CE 1716 indicating activation of one or more TCI states (e.g., of the plurality of TCI states configured by one or more RRC messages 1714). For example, MAC CE 1716 may indicate TCI state IDs of a plurality of TCI states for activation. MAC CE 1716 may comprise a field indicating a TCI state ID for each of the one or more TCI states activated by MAC CE 1716. The field may be referred to as a TCI state ID field. The TCI states activated by MAC CE 1716 may be referred to as activated TCI states.

MAC CE 1716 may map (e.g., associate) TCI state ID fields, in MAC CE 1716, to TCI codepoints. MAC CE 1716 may comprise a field indicating whether a TCI state codepoint, corresponding to the field, is associated with (e.g., is mapped to) a single TCI state ID or multiple TCI state IDs (e.g., two TCI state IDs). For example, a first value (e.g., 0) of the field may indicate that a (single) TCI codepoint (e.g., 00) is mapped to a TCI state ID field (e.g., the TCI codepoint is mapped to one TCI state ID indicated by one TCI state ID field MAC CE 1716). A second value (e.g., 1) of the field may indicate that a (single) TCI state codepoint (e.g., 00) is mapped to multiple TCI state ID fields (e.g., the TCI codepoint is mapped to two TCI state IDs indicated by two consecutive TCI state ID fields of MAC CE 1716). The ordinal position of the field in MAC CE 1716 may correspond to a TCI state ID field is the same relative ordinal position (e.g., the last field may correspond to the last TCI state ID field in MAC CE 1716). The field may be referred to as a TCI codepoint mapping field.

MAC CE 1716 may comprise a field indicating whether a TCI state ID, indicated by a TCI state ID field (e.g., in the same octet as the field), is an ID of a joint-downlink TCI state or an uplink TCI state. This may enable wireless device 1740 to identify the TCI state ID from a list of joint-downlink TCI states and a list of uplink TCI states. The field indicating whether a TCI state ID is an ID of a joint-downlink TCI state or an uplink TCI state may be referred to as a D/U field (where D refers to TCI states applicable to downlink or to both downlink and uplink, and U refers to TCI states applicable to uplink).

There may be two signaling mechanisms to indicate which TCI state that wireless device 1740 is to use (e.g., apply) among the TCI states configured by one or more RRC messages 1714. MAC CE 1716, in a first signaling mechanism, may indicate (e.g., activation of) to (start to) use/apply a TCI state (e.g., a single TCI state) (without any additional signaling by, e.g., DCI). Additionally or alternatively, MAC CE 1716 may indicate to use (e.g., apply) multiple TCI states in the first mechanism by indicating a mapping for a single TCI codepoint. MAC CE 1716 may indicate to (start to) use/apply multiple TCI states (without any additional signaling by, e.g., DCI), based on the second value (e.g., 1) of the field indicating that a TCI state codepoint, corresponding to the field, is associated with multiple TCI state IDs (e.g., two TCI state IDs).

MAC CE 1716, in a second signaling mechanism, may indicate activation of a plurality of TCI states. The plurality of TCI states may be mapped, by MAC CE 1716, to a plurality of TCI codepoints and DCI may indicate one of the TCI codepoints for wireless device 1740 to use (e.g., apply). For example, as shown in FIG. 17B, wireless device 1740 may receive DCI 1718. DCI 1718 may indicate a TCI state (e.g., a TCI codepoint) among the TCI states activated by MAC CE 1716. For example, DCI 1718 may comprise a field. The value of the TCI state field may indicate the TCI state (e.g., the TCI codepoint value associated with the TCI state). The field may be referred to as a TCI state field. Wireless device 1740 may use/apply (start to use/apply) the TCI state, based on (e.g., the TCI state field of) DCI 1718 indicating the TCI state among the activated TCI states.

A TCI state indicated by MAC CE 1716 and/or DCI 1718 may be referred to as an indicated TCI state or an updated TCI state. The indicating by MAC CE 1716 and/or DCI 1718 may be referred to as updating the TCI state (e.g., the indicated TCI state or the current TCI state). For example, MAC CE 1716 (in the first mechanism) may be said to update the (indicated) TCI state, by indicating a TCI state for downlink and/or uplink. DCI 1718 may be said to update the (indicated) TCI state. DCI 1718 may be said to update the (indicated) TCI state, for example, if MAC CE 1716 indicates activation of a plurality of TCI states and DCI 1718 indicates a TCI state for downlink and/or uplink.

Wireless device 1740 may apply the TCI state to receive downlink receptions and/or send (e.g., transmit) uplink transmissions, after the TCI state is indicated by MAC CE 1716 and/or DCI 1718. The (indicated) TCI state may remain as the TCI state that wireless device 1740 applies to (subsequent) downlink receptions and uplink receptions (e.g., until another TCI state is indicated, or updated, by a subsequent MAC CE and/or DCI).

Wireless device 1740 may receive DCI 1722 from base station 1760 (e.g., after the TCI state indicated by MAC CE 1716 and/or DCI 1718 is applied). DCI 1722 may schedule one or more downlink transmissions 1724 and/or schedule (or triggers) one or more uplink transmissions 1726. Wireless device 1740 may receive one or more downlink transmissions 1724 via the TCI state indicated by MAC CE 1716 and/or DCI 1718. Wireless device 1740 may send (e.g., transmit) one or more uplink transmissions 1726 via the TCI state indicated by MAC CE 1716 and/or DCI 1718.

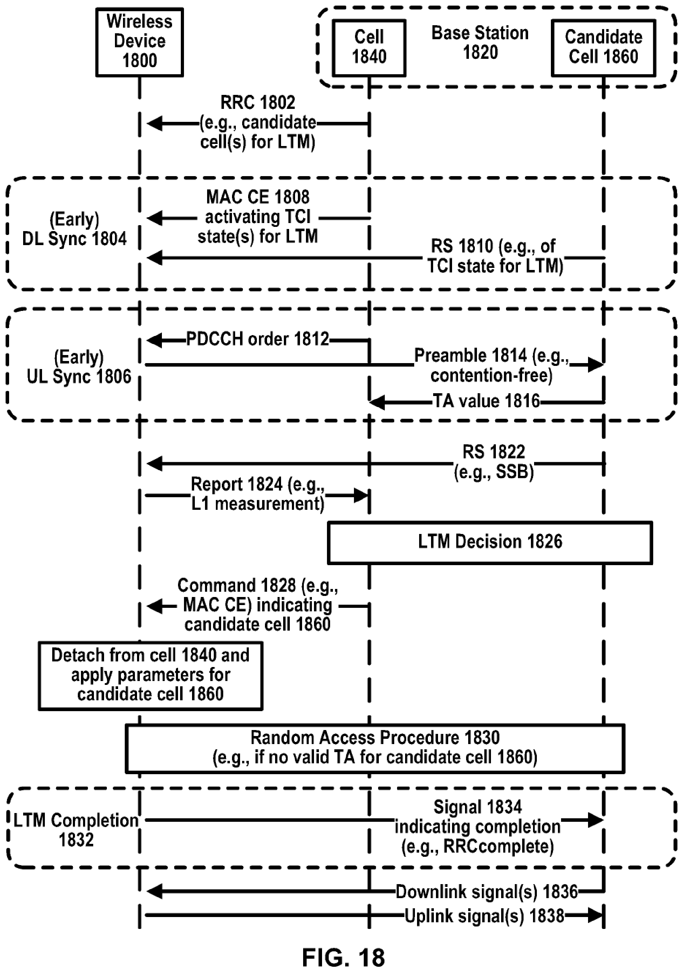

FIG. 18 shows an example procedure of a wireless device 1800 performing a procedure for layer-1/layer-2 triggered mobility (LTM) with a base station 1820. The procedure for LTM may be referred to as a lower-layer triggered mobility, a lower-layer triggered mobility procedure, or an LTM procedure.

A serving cell (e.g., a primary cell, such as a PCell or a PSCell) of wireless device 1800, in the LTM procedure, may be switched from a cell (e.g., a current serving cell) to a candidate cell (e.g., a non-serving cell) for LTM (e.g., among one or more candidate cells for LTM) based on measurements of the candidate cell. Wireless device 1800, as shown in FIG. 18, may perform the LTM procedure for an LTM cell switch (of the serving cell of wireless device 1800) from a cell 1840 to a candidate cell 1860 of base station 1820. The switching of the serving cell of wireless device 1800 based on the LTM procedure may be referred to as an LTM cell switch, a cell switch, an LTM serving cell switch, a serving cell switch, LTM cell switching, cell switching, LTM serving cell switching, or serving cell switching.

Cell 1840 may be the current serving cell of wireless device 1800 (e.g., wireless device 1800 in RRC connected state with, and/or camped on, cell 1840). The cell of a wireless device performing the LTM procedure (such as cell 1840) may be referred to as a source cell, a current serving cell, or a serving cell of the wireless device.

The network (e.g., base station 1820), in the LTM procedure, may indicate for wireless device 1800 to perform a LTM cell switch to a cell among a plurality of candidate cells, such as candidate cell 1860 as shown in FIG. 18. Wireless device 1800, by performing the LTM cell switch, may change the current serving cell, for example, from cell 1840 to candidate cell 1860. A cell (such as candidate cell 1860) that a wireless device performs the LTM cell switch to (e.g., from a source cell or a current serving cell, such as cell 1840, and/or changes a serving cell to) may be referred to as a candidate cell, an LTM candidate cell, a target cell, or an LTM target cell.

Cell 1840 and candidate cell 1860, as shown in FIG. 18, may be cells of base station 1820. An LTM cell switch may be performed between different cells of the same base station. Signaling between wireless device 1800 and base station 1820, before the LTM cell switch, may occur on (e.g., via) cell 1840 (e.g., as cell 1840 is the (current) serving cell of wireless device 1800 before the LTM cell switch is completed). Signaling between wireless device 1800 and base station 1820, after the LTM cell switch, may occur on (e.g., via) candidate cell 1860 (e.g., as candidate cell 1860 becomes a (new) serving cell of wireless device 1800, such as a primary cell of wireless device 1800).

As described herein, cell 1840 and candidate cell 1860 may be cells of (e.g., the same) base station 1820 in FIG. 18. Cell 1840 and candidate cell 1860 may be connected with the same central unit (CU) of base station 1820, which may be referred to as intra-CU LTM. Cell 1840 and candidate cell 1860 may be connected with different distributed units (DUs) of base station 1820, which may be referred to as inter-DU LTM. Cell 1840 and candidate cell 1860 may be connected with the same DU of base station 1820 (and the same CU of base station 1820), which may be referred to as intra-DU LTM.

FIG. 18 shows an example of an LTM procedure in which cell 1840 and candidate cell 1860 may be among cells of the same base station (base station 1820). The example described herein is not particularly limited to performing LTM between cells of a single base station (e.g., the same CU). Cells of different base stations (e.g., via different DUs and CUs, which may be referred to as inter-CU LTM) may also be within the scope of the examples described herein.

Wireless device 1800 may receive one or more RRC messages 1802 on cell 1840. One or more RRC messages 1802 may indicate one or more configuration parameters for LTM. For example, one or more RRC messages 1802 may indicate one or more candidate cells for LTM. The one or more candidate cells, of one or more RRC messages 1802, may comprise candidate cell 1860.

One or more RRC messages 1802 may indicate a candidate LTM configuration for each of the one or more candidate cells. One or more RRC messages 1802 may comprise an LTM candidate configuration for candidate cell 1860. The LTM candidate configuration for candidate cell 1860 may indicate, or comprise, an identifier (ID) of the LTM candidate configuration. The ID of the LTM candidate configuration may be referred to as an LTM candidate configuration ID or a candidate cell ID.

The LTM candidate configuration, of candidate cell 1860, may indicate an ID of candidate cell 1860. For example, the LTM candidate configuration, of candidate cell 1860, may comprise the ID of candidate cell 1860. The ID of candidate cell 1860 may be a physical cell ID (PCI) of candidate cell 1860. The LTM candidate configuration, of candidate cell 1860, may indicate one or more parameters of an RRC message, such as an RRC reconfiguration message, to configure the LTM candidate configuration of candidate cell 1860.

The LTM candidate configuration, of candidate cell 1860, may indicate one or more parameters of a configuration for performing (early) uplink synchronization on candidate cell 1860 (e.g., before wireless device 1800 receives a command indicating to perform the LTM cell switch to candidate cell 1860). The LTM candidate configuration may indicate an (early) uplink synchronization configuration for a normal uplink (NUL) carrier of candidate cell 1860 and/or an (early) uplink synchronization configuration for a supplementary uplink (SUL) carrier of candidate cell 1860. There may be separate (early) uplink synchronization configurations for the NUL carrier and SUL carrier of candidate cell 1860.

One or more RRC messages 1802 may indicate a reference signal for performing synchronization (e.g., time and/or frequency synchronization) for each of the one or more candidate cells. The reference signal for performing synchronization may be an SSB (which may be referred to as a SS/PBCH block).

The LTM candidate configuration, of candidate cell 1860, may indicate a reference signal, of candidate cell 1860, for performing synchronization. An SSB may be used as an example of the reference signal for performing synchronization. The LTM candidate configuration, of candidate cell 1860, may indicate one or more parameters of an SSB of candidate cell 1860. The one or more parameters, for the SSB of candidate cell 1860, may comprise at least one of: a frequency of the SSB, a subcarrier spacing of the SSB, a periodicity of the SSB, a position of the SSB (e.g., in a bitmap of an SSB set), and/or a power of the SSB.

One or more RRC messages 1802 may indicate one or more reference signals for measurement reports of the one or more candidate cells for LTM. The one or more reference signals for measurement reports may be indicated in the LTM candidate configuration for each of the one or more candidate cells.

One or more RRC messages 1802 may indicate one or more reference signals, of candidate cell 1860, for reporting measurement reports. The measurement reports may be CSI reports, such as a radio link quality of the one or more reference signals. The radio link quality reported in the CSI reports may be, such as, an RSRP, a layer-1 RSRP, and/or an SINR of each of the one or more reference signals.

One or more RRC messages 1802 may indicate one or more resources (radio resources) of the one or more reference signals for reporting measurement reports of candidate cell 1860. The one or more resources of the one or more reference signals may be referred to as one or more reference signal resources. The one or more reference signals (e.g., indicated by the one or more resources) may be one or more SSBs and/or one or more CSI-RSs of candidate cell 1860. One or more RRC messages 1802 may indicate a reference signal resource configuration for performing the measurement reports of candidate cell 1860. The reference signal resource configuration may be referred to as an LTM RS resource configuration or an LTM CSI resource configuration. One or more RRC messages 1802 may indicate an ID of the reference signal resource configuration.

One or more RRC messages 1802 may, for each of the one or more candidate cells, indicate a report configuration for measurement reports of the one or more reference signals (e.g., indicated by the LTM candidate configuration). For example, one or more RRC messages 1802 may indicate a report configuration for measurement reports of candidate cell 1860. The report configuration may be referred to as an LTM RS report configuration or an LTM CSI report configuration. The report configuration may indicate a report configuration type of CSI reporting, such as periodic, semipersistent, or aperiodic. The report configuration may indicate an ID of a reference signal resource configuration, which identifies the reference signals to be reported based on the report configuration.

As discussed herein, the measurement reports may be CSI reports, such as a radio link quality of the one or more reference signals. The report configuration, using a layer-1 measurement (e.g., layer-1 RSRP), may indicate contents for the report. For example, the report configuration may indicate that the contents of the report comprise at least one of: a number of cells to be reported (e.g., 1, 2, 3, or 4 cells), a number of reference signals to be reported (e.g., 1, 2, 3, or 4 reference signals), and whether a layer-1 measurement of the current serving cell (e.g., cell 1840) is to be included.

One or more RRC messages 1802 may indicate candidate TCI states, for LTM, of the one or more candidate cells. For example, one or more RRC messages 1802 may comprise one or more configuration parameters of the candidate TCI states, for LTM, of the one or more candidate cells. The one or more configuration parameters, of one or more RRC messages 1802, may comprise a list of candidate TCI states for each candidate cell among the one or more candidate cells indicated by one or more RRC messages 1802. Each list of candidate TCI states may comprise identifiers (IDs) of the one or more candidate TCI states of a (respective) candidate cell. An ID of a candidate TCI state may be referred to as a candidate TCI state ID or a TCI state ID of a candidate TCI state.

One or more RRC messages 1802 may indicate, for candidate cell 1860, a list of candidate TCI states for LTM. The list of candidate TCI states may be a list of TCI states applicable to downlink (e.g., downlink receptions), uplink (e.g., uplink transmissions), or both downlink and uplink (for LTM) on candidate cell 1860.

One or more RRC messages 1802 may indicate separate lists of candidate TCI states, of candidate cell 1860, for LTM. The separate lists of candidate TCI states may comprise a list of candidate TCI states applicable to downlink on candidate cell 1860 and a (separate) list of candidate TCI states applicable to uplink on candidate cell 1860. A list of candidate TCI states applicable to downlink and uplink on candidate cell 1860 may be referred to as a list of joint-downlink TCI states. The lists of TCI states may be similar to the lists of TCI states discussed above in FIG. 17B (e.g., via one or more RRC messages 1714).

One or more RRC messages 1802 may indicate a parameter with a value (e.g., set to joint or separate) that indicates whether a list or separate lists are provided for the candidate TCI states. The parameter may be referred to as a unified TCI state type parameter. The unified TCI state type parameter, based on being set to joint, may indicate that a list of candidate TCI states are (jointly) applicable to downlink and uplink on candidate cell 1860. The unified TCI state type parameter, based on being set to separate, may indicate that a list of candidate TCI states is applicable to downlink (e.g., a list of joint-DL TCI states) and that a list of candidate TCI states is applicable to uplink (e.g., a list of uplink TCI states).

Each candidate TCI state may be associated with (e.g., identified by) an ID (e.g., a candidate TCI state ID). For example, each candidate TCI state may be identified by an ID configured by one or more RRC messages 1802 (e.g., via the list of candidate TCI states indicated by one or more RRC messages 1802).

Each candidate TCI state may indicate one or more reference signals. The one or more reference signals, indicated by the candidate TCI state, may be used for determining channel estimation properties on candidate cell 1860. For example, a reference signal among the one or more reference signals may be for determining spatial domain parameters, such as for a spatial domain filter (uplink, such as an uplink spatial domain transmission filter or uplink spatial domain filter, and/or downlink, such as a downlink spatial domain reception filter or a downlink spatial domain filter) and/or quasi co-location relationship of the reference signal with antenna ports (e.g., DMRS antenna ports).

The candidate TCI state may indicate a QCL type of each of the one or more reference signals (e.g., QCL Type-A, QCL Type-B, QCL Type-C, and QCL Type-D) as discussed above in connection with FIG. 17A and FIG. 17B (via one or more RRC messages 1702 and/or one or more RRC messages 1714). The one or more reference signals, indicated by the candidate TCI state, may comprise one or more SSBs and/or one or more CSI-RSs. The candidate TCI state may indicate an index for each of the one or more reference signals. The candidate TCI state may indicate a pathloss reference signal for candidate cell 1860. For example, candidate TCI state may comprise an ID of a pathloss reference signal for candidate cell 1860.

The candidate TCI state may indicate two reference signals. The candidate TCI state may indicate a QCL type of the first reference signal is for spatial domain parameters (e.g., QCL Type-D). The candidate TCI state may indicate an index of an SSB for the first reference signal (or, alternatively, an index of a CSI-RS for the first reference signal).

The candidate TCI state may indicate a QCL type of the second reference signal is for other channel estimation parameters (e.g., QCL Type-A). The candidate TCI state may indicate an index of an SSB for the second reference signal (or, alternatively, an index of a CSI-RS for the second reference signal). The candidate TCI state may indicate two reference signals. The second reference signal may be optional and may not be indicated by the candidate TCI state (e.g., the candidate TCI state may indicate only the first reference signal).

One or more RRC messages 1802, for separate candidate TCI states for downlink and uplink on candidate cell 1860, may indicate an uplink candidate TCI state. The uplink candidate TCI state may, for example, indicate one reference signal. The uplink candidate TCI state, unlike the candidate TCI state above (e.g., applicable to downlink and uplink or downlink on candidate cell 1860), may not (explicitly) indicate the QCL type of reference signal. The reference signal may be used by wireless device 1800 for an uplink spatial (transmission) filter (similar to QCL-type D). The uplink candidate TCI state, like the candidate TCI state above, may indicate an ID of the uplink candidate TCI state, an index of the reference signal indicated by the uplink candidate TCI state (e.g., an SSB index or an index of a CSI-RS on candidate cell 1860), and/or an ID of a pathloss reference signal for candidate cell 1860.

The candidate TCI state may indicate a group of cells that the same timing advance is applied to by wireless device 1800. The group of cells may be referred to as a timing advance group (TAG). For example, the TCI state may comprise a field (e.g., *tag-Id-ptr)* that indicates the TAG that is associated with the candidate TCI state. A first value of the field may indicate that the candidate TCI state is applied to a first TAG (e.g., configured by one or more RRC messages 1802), and a second value of the field may indicate that the candidate TCI state is applied to a second TAG (e.g., configured by one or more RRC messages 1802).

The candidate TCI state may indicate a set of power control parameters for one or more uplink signals (e.g., PUCCH transmissions, PUSCH transmissions, and/or SRS transmissions) that are to be sent (e.g., transmitted) based on the candidate TCI state. For example, the candidate TCI state may comprise a field (e.g., *ul-powerControl, ul-powerControlId*) that indicates a set of power control parameters from among sets of power control parameters (e.g., configured by one or more RRC messages 1802). The candidate TCI state may not indicate a set (e.g., any set) of power control parameters (e.g., the field may not be configured in the TCI state) based on the uplink BWP of candidate cell 1860 (e.g., a first-active uplink BWP of candidate cell 1860) being configured (e.g., by one or more RRC messages 1802) with a parameter that indicates which set of the sets of power control parameters is to be used.

A candidate TCI state may refer to a TCI state, of candidate cell 1860, to be used for LTM. The candidate TCI state may be referred to as a TCI state for LTM, an LTM TCI state, or an LTM candidate TCI state.

Wireless device 1800 may send (e.g., transmit) (to base station 1820 and/or on cell 1840) an RRC message indicating that parameters indicated by one or more RRC messages 1802 are (successfully) received (and/or stored), after wireless device 1800 receives one or more RRC messages 1802. The RRC message may be RRC reconfiguration completion message (e.g., such as *RRCReconfigurationComplete*)*.*

There may be two optional synchronization mechanisms, in the LTM procedure, that may be used to enable wireless device 1800 to synchronize with candidate cell 1860 before performing an LTM cell switch from cell 1840 to candidate cell 1860 (e.g., before receiving a command from base station 1820 indicating to switch to candidate cell 1860). These optional synchronization mechanisms may reduce the time for wireless device 1800 to perform the LTM cell switch to candidate cell 1860.

The optional synchronization mechanisms may include a mechanism for downlink synchronization with candidate cell 1860 and a mechanism for uplink synchronization with candidate cell 1860. The optional synchronization mechanisms may be referred to individually as early downlink synchronization and early uplink synchronization, respectively. The optional synchronization mechanisms may alternatively be collectively referred to as early synchronization or, early cell synchronization, or synchronization before an LTM cell switch.

Both early downlink synchronization and early uplink synchronization may be optional, such that one of, none of, or both of early downlink synchronization and early uplink synchronization may be performed in an LTM procedure. The network (e.g., base station 1820) may indicate (e.g., request, order, command, or send (e.g., transmit) a signal indicating) to wireless device 1800 to perform early downlink synchronization and/or early uplink synchronization.

FIG. 18 shows that, in LTM procedure, wireless device 1800 performs both an early downlink synchronization 1804 with candidate cell 1860 and an early uplink synchronization 1806 with candidate cell 1860. Wireless device 1800, in early downlink synchronization 1804, may receive a MAC CE 1808 (e.g., from base station 1820 and/or on cell 1840) indicating, for candidate cell 1860, activation of one or more candidate TCI states for LTM. The one or more candidate TCI states activated by MAC CE 1808 may be from among (e.g., the list of) the candidate TCI states indicated (e.g., configured by) one or more RRC messages 1802. MAC CE 1808 may be referred to as a candidate cell TCI states activation/deactivation MAC CE.

Candidate cell 1860 may not be the current serving cell. Wireless device 1800 may activate the one or more candidate TCI states of candidate cell 1860 during early downlink synchronization 1804. For example, the one or more candidate TCI states of candidate cell 1860, indicated by MAC CE 1808, may be activated, and other TCI states of cell 1840 (e.g., the current serving cell of wireless device 1800) may (also) be activated (e.g., based on the procedures shown in FIGs. 17A and 17B). The one or more activated candidate TCI states of candidate cell 1860 may enable wireless device 1800 to reduce the time to perform the LTM cell switch to candidate cell 1860 (e.g., based on/in response to receiving a command from base station 1820 to perform an LTM cell switch to candidate cell 1860).

MAC CE 1808 may indicate activation of one or more candidate TCI states, of candidate cell 1860, for LTM. MAC CE 1808 may indicate a candidate cell ID of candidate cell 1860 (e.g., an ID of an LTM candidate configuration of candidate cell 1860 configured by one or more RRC messages 1802), as an example of indicating the candidate cell 1860. For example, MAC CE 1808 may comprise a field (e.g., in an octet) that indicates the candidate cell ID of candidate cell 1860 (e.g., a value of the field corresponds to the candidate cell ID of candidate cell 1860).

MAC CE 1808 may indicate one or more candidate TCI state IDs, as an example of indicating activation of the one or more candidate TCI states. The one or more candidate TCI state IDs may be from (e.g. the list) of candidate TCI states (e.g., list of candidate TCI state IDs) indicated by one or more RRC messages 1802. For example, MAC CE 1808 may comprise one or more fields indicating one or more candidate TCI state IDs of the one or more candidate TCI states.

Each octet of MAC CE 1808 may comprise a field indicating a candidate TCI state ID. This field may be referred to as a TCI state ID field. The value of the TCI state ID field may correspond to one or more candidate TCI state IDs. MAC CE 1808 may map (e.g., associate) each TCI state ID field to a TCI state codepoint.

The ordinal position of each TCI state ID field in MAC CE 1808 may correspond to a value of a TCI state codepoint. For example, the TCI state ID field that is first in MAC CE 1808 (e.g., listed first, occurs first, or in an earliest octet, or in an octet occurring first among the octets of MAC CE 1808 indicating TCI state IDs) may be mapped to a lowest TCI codepoint value (e.g., a codepoint value of 00), and the TCI state ID field that is last in MAC CE 1808 (e.g., listed last, occurs last, in last octet, or in an octet occurring last among the octets of MAC CE 1808 indicating TCI state IDs) may be mapped to a highest TCI codepoint value (e.g., a codepoint value of 11).

MAC CE 1808 may comprise a field indicating whether the TCI state codepoint is associated with (e.g., is mapped to) a single candidate TCI state ID or multiple candidate TCI state IDs (e.g., two candidate TCI state IDs). The field indicating whether a TCI state codepoint is associated with a single candidate TCI state ID in MAC CE 1808 or multiple candidate TCI state IDs in MAC CE 1808 may be referred to as a Pᵢ field (e.g., a TCI codepoint mapping field, or a field indicating a single-or-multiple mapping of candidate TCI state IDs to codepoints).

A first value (e.g., 0) of the field, as an example of the Pᵢ field of MAC CE 1808, may indicate that a (single) TCI state codepoint is mapped to a TCI state ID field (a single TCI state field). The (single) TCI state codepoint may indicate that only the last candidate TCI state ID is mapped to the highest TCI codepoint value. A second value (e.g., 1) of the field may indicate that a (single) TCI state codepoint is mapped to multiple TCI state ID fields. This may indicate that the second-to-last (penultimate) candidate TCI state ID and the last candidate TCI state ID are (both) mapped to the highest TCI codepoint value.

The ordinal position of the Pᵢ field in MAC CE 1808 may correspond to a TCI state ID field is the same ordinal position. For example, a Pᵢ field that occurs first (e.g., is positioned first, may be listed first, or is earliest) in MAC CE 1808 corresponds to a TCI state ID field that occurs first (e.g., is positioned first, is listed first, or is earliest) in MAC CE 1808 among TCI state IDs of MAC CE 1808. A Pᵢ field that occurs last (e.g., is positioned last, is listed last, or is latest) in MAC CE 1808 may correspond to a TCI state ID field that occurs last (e.g., is positioned last, is listed last, or is latest) in MAC CE 1808 among TCI state IDs of MAC CE 1808.

MAC CE 1808 may (also) comprise a field indicating whether a candidate TCI state ID is an ID of a joint-downlink candidate TCI state or an uplink candidate TCI state. The field indicating whether a candidate TCI state ID is an ID of a (joint-downlink) candidate TCI state or an uplink candidate TCI state may be referred to as a D/U field (where D refers to candidate TCI states applicable to downlink or jointly to uplink and downlink, and U refers to candidate TCI states applicable to uplink).

A first value (e.g., 0) of the D/U field may indicate that the candidate TCI state ID (e.g., in the same octet as the field) is applicable to downlink (on candidate cell 1860) and/or downlink and uplink (on candidate cell 1860). A second value (e.g., 1) of the D/U field may indicate that the candidate TCI state ID (e.g., in the same octet as the field) is applicable to uplink (on candidate cell 1860). This may enable wireless device 1800 to determine which candidate TCI state the candidate TCI state ID identifies (e.g., a candidate TCI state ID from the list of candidate TCI states for uplink and/or from the list of candidate TCI states for downlink and uplink).

Wireless device 1800 may receive a reference signal 1810 from candidate cell 1860, after receiving MAC CE 1808 and during/in early downlink synchronization 1804. Reference signal 1810 may be indicated by a candidate TCI state activated by MAC CE 1808. Wireless device 1800 may perform downlink synchronization using reference signal 1810 (e.g., performs measurements and/or channel estimation based on reference signal 1810).

FIG. 18 shows candidate TCI states of one candidate cell (candidate cell 1860) being activated with a single MAC CE (e.g., MAC CE 1808). Wireless device 1800 may receive (from base station 1820 and/or on cell 1840) a (separate) MAC CE (based on MAC CE 1808) for each candidate cell (e.g., to perform early downlink synchronization 1804).

There may be two approaches to early uplink synchronization. Both approaches may be used for acquiring a timing advance to be (potentially) used for adjusting uplink transmission timing on candidate cell 1860 (e.g., to adjust uplink transmission, in advance, relative to downlink transmissions in order to align uplink and downlink timing at base station 1820, which may be done by all wireless devices on candidate cell 1860).

Wireless device 1800, in a first approach to early uplink synchronization, may estimate (acquires) the timing advance value by performing measurements of downlink signals from candidate cell 1860. The first approach may be used based on a UE capability of wireless device 1800.

One or more RRC messages 1802 may comprise a parameter for candidate cell 1860 (e.g., in the LTM candidate configuration for candidate cell 1860) indicating to (e.g., enabling) wireless device 1800 to perform measurements for wireless device 1800 to estimate (acquire) the timing advance value of candidate cell 1860. The parameter may be referred to as a UE-measured TA parameter. Wireless device 1800 may perform the measurements to estimate (acquire) the timing advance value of candidate cell 1860 based on (e.g., in response to) one or more RRC messages 1802 indicating the parameter and the wireless device 1800 supporting a UE capability (e.g., for estimating the timing advance by measurement).

The network (e.g., base station 1820), in a second approach to early uplink synchronization, may estimate the timing advance value based on uplink signals received from wireless device 1800 on the candidate cell 1860. The second approach may be used, e.g., based on wireless device 1800 not having the UE capability for estimating timing advance on the candidate cell, one or more RRC messages 1802 not comprising the UE-measured TA parameter, and/or based on a timing advance no longer being valid (e.g., a timing advance value received via one or more messages is no longer valid and/or a timing advance value estimated by wireless device 1800, by measurement, is no longer valid). Additionally or alternatively, the second approach may be used based on (e.g., in response to) wireless device 1800 receiving a signal to perform the second approach, such as a PDCCH order. The second approach may be used, and wireless device 1800 may have a (valid) timing advance value.

Early uplink synchronization 1806 may be an example of the second approach in which the network (e.g., base station 1820) estimates the timing advance value based on uplink signals received from wireless device 1800 on the candidate cell 1860. Wireless device 1800 may receive a PDCCH order 1812 (e.g., from base station 1820 and/or on cell 1840) indicating candidate cell 1860.

Wireless device 1800 may send (e.g., transmit) a preamble 1814 to candidate cell 1860, after receiving PDCCH order 1812. Preamble 1814 may be contention free. For example, one or more RRC messages 1802 may comprise physical random-access channel (PRACH) parameters (e.g., PRACH resources) for candidate cell 1860. The PRACH parameters of candidate cell 1860 may be indicated by a (early) uplink synchronization configuration (of one or more RRC messages 1802 discussed above). The (early) uplink synchronization configuration may be for candidate cell 1860 and/or indicated by an LTM candidate configuration of candidate cell 1860. Wireless device 1800 may send (e.g., transmit) preamble 1814 based on the PRACH parameters (e.g., via a PRACH resource) of candidate cell 1860.

Base station 1820 may determine (estimate) a timing advance value 1816 for wireless device 1800, after receiving preamble 1814. Wireless device 1800, for early uplink synchronization 1806, may not monitor for the timing advance value 1816 after sending (e.g., transmitting) preamble 1814. For example, wireless device 1800, based on a typical random-access procedure (not for LTM), may monitor for a random-access response (RAR) comprising timing advance value 1816.

Base station 1820, in early uplink synchronization 1806, may send (e.g., from candidate cell 1860) timing advance value 1816 to cell 1840 (the current serving cell of wireless device 1800). Base station 1820 may send (e.g., transmit) timing advance value 1816 to wireless device 1800 on cell 1860 based on (e.g., in response to) base station 1820 determining to trigger wireless device 1800 to perform an LTM cell switch to candidate cell 1860 (e.g., timing advance value 1816 may be indicated by a command that indicates to perform an LTM cell switch to candidate cell 1860).

As explained herein, downlink synchronization 1804 with candidate cell 1860 and uplink synchronization 1806 with candidate cell 1860 may be optional and wireless device 1800 may perform one of, both of, or none of the (early) synchronization procedures. Wireless device 1800 may perform the (early) synchronization procedures based on being triggered by base station 1820 (e.g., by MAC CE 1808 for early downlink synchronization 1804 and/or PDCCH order 1812 for early uplink synchronization 1806). Wireless device 1800 may perform the (early) synchronization procedures based on being triggered by base station 1820 (e.g., by MAC CE 1808 for early downlink synchronization 1804 and/or PDCCH order 1812 for early uplink synchronization 1806), for example, if wireless device 1800 performs one of, both of, or none of the (early) synchronization procedures,.

The example LTM procedure shown in FIG. 18 may proceed to execution of the LTM cell switch to candidate cell 1860. The wireless device 1800, as shown in FIG. 18, may receive (e.g., from base station 1820 and/or candidate cell 1860) a reference signal 1822 for performing measurements for LTM. One or more RRC messages 1802 may indicate, for candidate cell 1860, one or more resources for reference signal 1822 (e.g., one or more reference signal resources). Additionally or alternatively, one or more RRC messages 1802 may indicate, for candidate cell 1860, one or more parameters for reporting a (e.g., layer-1) measurement report of candidate cell 1860 based on measurements of reference signal 1822. Reference signal 1822 may be an SSB and/or a CSI-RS of candidate cell 1860.

Wireless device 1800 may send (e.g., transmit) a report 1824 based on (e.g., measurements of) reference signal 1822, after receiving reference signal 1822. For example, wireless device 1800 may perform measurements (e.g., layer-1 measurements) on reference signal 1822 (e.g., based on one or more parameters for reporting a measurement report of candidate cell 1860 in one or more RRC messages 1802). Report 1824 may be a type of UCI or a MAC CE. Report 1824 may comprise a field indicating a radio link quality (e.g., a layer-1 RSRP, RSRP, or SINR) of reference signal 1822. Report 1824 may comprise a radio link quality of one or more reference signals of candidate cell 1860. Report 1824 may comprise a radio link quality of one or more reference signals of one or more candidate cells other than candidate cell 1860.

Base station 1820 may determine to indicate to wireless device 1800 to perform the LTM cell switch (e.g., of the serving cell) from cell 1840 to candidate cell 1860, after receiving report 1824. This is shown in FIG. 18 as an LTM decision 1826. LTM decision 1826 may be made on cell 1840 (e.g., by a DU and/or CU of cell 1840).

Base station 1820 may use report 1824 in LTM decision 1826. Base station 1820 may use other factors for LTM decision 1826, such as network congestion, reports from other wireless devices for candidate cell 1860, interference with neighbor cells, and/or power considerations. Base station 1820 may use these other factors for LTM decision 1826 in addition to report 1824 or instead of report 1824 for LTM decision 1826 (e.g., even though base station 1820 receives report 1824, LTM decision 1826 may be made independently from report 1824).

Base station 1820 may send (transmit) a command 1828 to wireless device 1800 indicating to perform the LTM cell switch to cell 1860, after base station 1820 makes LTM decision 1826 in FIG. 18 for wireless device 1800 to perform the LTM cell switch to candidate cell 1860. Base station 1820 may send (e.g., transmit) command 1828 on cell 1840, which is the current serving cell of wireless device 1800, and wireless device 1800 receives command 1828 on cell 1840.

Command 1828 may indicate to perform the LTM cell switch to candidate cell 1860 (e.g., to change the serving cell of wireless device 1800 from cell 1840 to candidate cell 1860). Command 1828 may be a MAC CE. Command 1828 may be referred to as a cell switch command, an LTM cell switch command, a MAC CE indicating to perform a LTM cell switch, and/or an LTM cell switch command MAC CE.

Command 1828 may indicate a configuration for performing an LTM cell switch to candidate cell 1860. For example, command 1828 may comprise a field (e.g., in an octet) that indicates an ID of a configuration (e.g., an LTM candidate configuration, of candidate cell 1860, configured by one or more RRC messages 1802) to use (e.g., apply) for the LTM cell switch (and the configuration may indicate the ID of candidate cell 1860, such as a PCI). The field may be referred to as a configuration ID field, a target configuration ID field, a candidate cell ID field, or a candidate cell configuration ID field.

Command 1828 may indicate a timing advance command for candidate cell 1860. For example, command 1828 may comprise a field (e.g., in one or more octets) indicating the timing advance command. The field may be referred to as a timing advance command field. A value of the timing advance command field may indicate an index of a (valid) timing advance value or that no timing advance value is available.

A predetermined value (e.g., FFF in hexadecimal or all bits of the field being set to 1 in binary), of the timing advance command field, may indicate that no timing advance value is available for candidate cell 1860. The predetermined value of the timing advance command field of command 1828 may indicate (e.g., implicitly) to wireless device 1800 to perform a random-access procedure to candidate cell 1860. Additionally or alternatively, the predetermined value (e.g., FFF or all ones) may indicate for wireless device 2000 to use a timing advance estimated (measured) by wireless device 1800 (e.g., based on the first approach of uplink synchronization 1806). Wireless device 1800 may use (e.g., apply) the estimated (measured) timing advance based on the timing advance value indicating that no timing advance value is available based on (e.g., if, when, or in response to) (e.g., determining that) wireless device 1800 successfully measured the timing advance of candidate cell 1860.

A value (e.g., other than the predetermined value, such as an applicable value, a valid value, or a first value), of the timing advance command field, may indicate an index of a timing advance value to be used, by wireless device 1800, to adjust uplink transmissions to candidate cell 1860. Wireless device 1800, based on the value (e.g., based on the value not being the predetermined value and/or based on the value corresponding to a (valid) timing advance value), may not perform (e.g., skip) a random-access procedure to candidate cell 1860. Wireless device 1800, in performing the LTM cell switch to candidate cell 1860, may switch (e.g., the serving cell) from cell 1840 to candidate cell 1860 without performing a random-access procedure (to candidate cell 1860).

Command 1828, similar to MAC CE 1808, may indicate activation of one or more candidate TCI states of candidate cell 1860. For example, command 1828 may indicate one or more candidate TCI state IDs of one or more candidate TCI states of candidate cell 1860. The one or more candidate TCI states may be from (e.g. the list) of candidate TCI states of candidate cell 1860 (e.g., the list of candidate TCI states indicated by one or more RRC messages 1802, such as the list of joint-downlink candidate TCI states and/or the list of uplink candidate TCI states).

Command 1828 may comprise one or more fields indicating one or more candidate TCI state IDs of the one or more candidate TCI states. The one or more fields, indicating one or more candidate TCI state IDs, may comprise a TCI state ID field and an uplink TCI state ID field. The TCI state ID field and the uplink TCI state ID field may be separate fields (e.g., in different octets). The TCI state ID field may refer to a candidate TCI state applicable to downlink on candidate cell 1860 or a candidate TCI state applicable to downlink and uplink on candidate cell 1860.

Command 1828, unlike MAC CE 1808, may not comprise a D/U field. Wireless device 1800 may determine that a TCI state ID indicated by TCI state ID field of command 1828 is for downlink or both downlink and uplink based whether one or more RRC messages 1802 indicate that the unified TCI state type parameter of the list candidate TCI states is set to joint or set to separate. The TCI state ID field, based on the unified TCI state type parameter being set to joint, may be applicable to both downlink and uplink on candidate cell 1860. The TCI state ID field, based on the unified TCI state being set to separate, may be applicable to downlink on candidate cell 1860.

The uplink TCI state ID field may refer to a candidate TCI state applicable to uplink on candidate cell 1860. The uplink TCI state field may not be included in command 1828. For example, the uplink TCI state ID field, based on the unified TCI state type being set to joint for the list of candidate TCI states for candidate cell 1860, may not be present in command 1828. Additionally or alternatively, the uplink TCI state ID field may not be present in command 1828 based on (e.g., in response to) one or more RRC messages 1802 not indicating a list of uplink candidate TCI states. The uplink TCI state ID field, based on the unified TCI state being set to separate for the list of candidate TCI states for candidate cell 1860, may be present in command 1828. The uplink TCI state ID field, based on the unified TCI state being set to separate, may be applicable to uplink on candidate cell 1860.

Command 1828 may indicate to perform a contention-free random-access procedure to candidate cell 1860. For example, command 1828 may indicate a random-access preamble index for performing the contention-free random-access procedure to candidate cell 1860. Command 1828 may comprise a field indicating the random-access preamble index. The field may be referred to as a random-access preamble index field. The random-access preamble index may correspond to a contention-free random-access resource for performing the random-access procedure to candidate cell 1860.

Command 1828 may comprise a field indicating an index of an SSB for performing the contention-free random-access procedure to candidate cell 1860. In at least some examples, the command 1828 may comprise in addition to the random-access preamble index field for indicating to perform the contention-free random-access procedure to candidate cell 1860. The field may be referred to an SSB index field of command 1828. The SSB index field may indicate (an index of) the SSB that the wireless device 1800 is to use for determining a RACH occasion for performing the preamble transmission based on the contention-free random-access resources indicated by the random-access preamble index field.

Command 1828 may comprise a field indicating a PRACH mask index, as another example that may be included in addition to the random-access preamble index field and the SSB index field for indicating to perform the contention-free random-access procedure to candidate cell 1860. The PRACH mask index may indicate a subset of RACH occasions to be used (among RACH occasions indicated based on the SSB index field). The field indicating the PRACH mask index may be referred to as a PRACH mask index field.

Command 1828 may indicate the uplink carrier to send (e.g., transmit) a preamble based on the contention-free random access procedure, as another example that may be included in addition to the random-access preamble index field, the SSB index field, and the PRACH mask index field for indicating to perform the contention-free random-access procedure to candidate cell 1860. For example, a field of command 1828 may indicate whether to send (e.g., transmit) the preamble on the normal uplink (NUL) carrier of candidate cell 1860 or the supplementary uplink (SUL) carrier of candidate cell 1860. The field may be referred to as an S/U field. A first value (e.g., 0) of the S/U field may indicate to use the SUL carrier of candidate cell 1860. A second value (e.g., a value other than 0, such as 1) of the S/U field may indicate to use the NUL carrier of candidate cell 1860. The SUL carrier and the NUL carrier of candidate cell 1860 may be referred to as the SUL and NUL, respectively, of candidate cell 1860.

Wireless device 1800 may perform the LTM cell switch to candidate cell 1860, after receiving command 1828. For example, wireless device 1800 may switch the current serving cell from cell 1840 to candidate cell 1860. Wireless device 1800 may detach from cell 1840 and/or applies parameters of candidate cell 1860, such as the parameters (e.g., of the LTM candidate configuration of candidate cell 1860 and/or the RRC reconfiguration message of candidate cell 1860) indicated by command 1828 and/or one or more RRC messages 1802.

Wireless device 1800 may perform a random-access procedure 1830 to candidate cell 1860, in order to perform the LTM cell switch to candidate cell 1860. The random-access procedure may be optional and may be, e.g., be performed based on whether a (valid) timing advance is available to wireless device 1800. The LTM procedure, based on random-access procedure 1830 being performed, may be referred to as RACH-based LTM. The LTM procedure, based on random-access procedure 1830 not being performed, may be referred to as RACH-less LTM. Wireless device 1800 may determine to perform random-access procedure 1830 to candidate cell 1860 based on (e.g., in response to) command 1828 indicating that no (valid) timing advance value is available for candidate cell 1860 (e.g., a value of the timing advance command field may be the predetermined value, such as FFF in hexadecimal or all bits being set to 1 in binary).

Wireless device 1800, for performing random-access procedure 1830 (in RACH-based LTM), may determine to perform random-access procedure 1830 to candidate cell 1860 based on the UE capability of wireless device 1800 and a validity of the timing advance value determined based on the UE capability. Wireless device 1800, as discussed herein with respect to (early) uplink synchronization 1806 (i.e., the first approach), may be able to estimate (acquire) the timing advance value of candidate cell 1860 by performing measurements of downlink signals of candidate cell 1860. Wireless device 1800, based on the wireless device 1800 supporting the UE capability and the timing advance value not being available (e.g., not valid, no longer valid), may determine to perform random-access procedure 1830. Wireless device 1800 may determine to perform random-access procedures 1830 based on (e.g., in response to) the timing advance value no longer being available (or valid). Wireless device 1800 may determine to perform random-access procedures 1830 based on (e.g., in response to) the timing advance value no longer being available (or valid), for example, if successfully estimating the timing advance value of candidate cell 1860.

Wireless device may (e.g., determine to) not perform (e.g., skip) random-access procedure 1830. Wireless device 1800, as an example of RACH-less LTM, may determine to not perform random-access procedure 1830 to candidate cell 1860 based on (e.g., in response to) command 1828 indicating that a (valid) timing advance value (e.g., is available) for candidate cell 1860 (e.g., a value, other than the predetermined value, of the timing advance command field as discussed above). Wireless device 1800 may use (e.g., apply) the timing advance value indicated by command 1828 (e.g., the value of the timing advance command field) and not perform random-access procedure 1830 (e.g., instead of performing random-access procedure 1830).

Wireless device 1800, as another example of RACH-less LTM, may determine to not perform random-access procedure 1830 to candidate cell 1860 based on the UE capability of wireless device 1800. For example, wireless device 1800, as discussed herein with respect to (early) uplink synchronization 1806 (i.e., the first approach), may be able to estimate (acquire) the timing advance value of candidate cell 1860 by performing measurements of downlink signals of candidate cell 1860. Wireless device 1800 may determine not to perform random-access procedure 1830 and/or use (e.g., apply) the timing advance measured by wireless device 1800, based on the UE capability and/or the timing advance value, determined based on the UE capability, being available (valid).

Wireless device 1800 may complete the LTM procedure (e.g., determine that the LTM procedure is completed). This is shown in FIG. 18 as LTM completion 1832. Wireless device 1800, in LTM completion 1832, may send/transmit (e.g., to base station 1820 and/or on candidate cell 1860) a signal 1834 that indicates completion of the LTM cell switch. Signal 1834 may indicate that an RRC reconfiguration (to candidate cell 1860) is complete. Additionally or alternatively, signal 1834 may be an RRC message, such as an RRC reconfiguration complete message.

Wireless device 1800 may determine (e.g., consider) that the LTM cell switch to candidate cell 1860 is successful (e.g., successfully completed) in different ways depending on, for example, whether random-access procedure 1830 is performed or not performed (e.g., skipped). Wireless device 1800 may determine that the LTM cell switch is successful (e.g., successfully completed) in different ways depending on, for example, whether the LTM procedure is RACH-based LTM or RACH-less LTM. Wireless device 1800, based on random-access procedure 1830 being performed (e.g., RACH-based LTM), may determine that LTM cell switch to candidate cell 1860 is successfully completed based on (e.g., in response to) random-access procedure 1830 to candidate cell 1860 being (successfully) completed.

Wireless device 1800, based on not performing random-access procedure 1830 (e.g., RACH-less LTM) to candidate cell 1860, may determine that LTM cell switch to candidate cell 1860 is successfully completed based on (e.g., in response to) (successfully) sending (e.g., transmitting) uplink data (e.g., the RRC message indicating that the RRC reconfiguration is complete) on candidate cell 1860. Wireless device 1800 may determine that the LTM cell switch to candidate cell 1860 is successfully completed based on (e.g., in response to) determining that the uplink data is successfully received by base station 1820 and/or on candidate cell 1860.

Wireless device 1800 may communicate on candidate cell 1860 (as the serving cell of wireless device 1800 and/or in RRC-Connected mode) after LTM completion 1832. For example, wireless device 1800 may receive one or more downlink signals 1836 on candidate cell 1860 (e.g., from base station 1820). The one or more downlink signals 1836 may comprise one or more RRC messages, one or more MAC CEs, and/or one or more DCIs. Wireless device 1800 may send (e.g., transmit) one or more uplink signals 1838 on candidate cell 1860 (e.g., to base station 1820). The one or more uplink signals 1838 may comprise one or more RRC messages, one or more MAC CEs, and/or one or more UCIs.

A wireless device may receive a PDCCH order triggering/initiating a random-access procedure to/on a candidate cell, for example, for early uplink synchronization of/for LTM. The wireless device may send (e.g., transmit), for the random-access procedure, a random-access preamble with/using a transmission power.

In at least some technologies, the wireless device may determine/calculate the transmission using (or based on) a downlink pathloss estimate of an SS/PBCH indicated by an SS/PBCH block index field in the PDCCH order. A first TRP may not send/transmit/perform downlink transmissions (e.g., PDCCH, PDSCH, CSI-RS, SS/PBCH block) to the wireless device. A first TRP may not send/transmit/perform downlink transmissions (e.g., PDCCH, PDSCH, CSI-RS, SS/PBCH block) to the wireless device, for example, if the candidate cell operates in asymmetric multi-TRP operation. The wireless device may not determine/calculate a downlink pathloss estimate for the first TRP. The wireless device may determine/calculate the downlink pathloss estimate from downlink transmissions from a second TRP (e.g., or anchor TRP).

In at least some technologies, the wireless device may use (e.g., apply) a pathloss offset in a TCI state indicated for the first TRP to the downlink pathloss estimate of the second TRP. The wireless device may use (e.g., apply) a pathloss offset in a TCI state indicated for the first TRP to the downlink pathloss estimate of the second TRP, for example, if the wireless device may send (e.g., transmit) a random-access preamble to the first TRP. The wireless may not be indicated with a TCI state for the first TRP. The wireless may not be indicated with a TCI state for the first TRP, for example, if the first TRP may be a non-serving cell. The wireless device may not know which pathloss offset to use (e.g., apply). The wireless device may not know which pathloss offset to use (e.g., apply), for example, if the wireless device may send (e.g., transmit) a random-access preamble to the first TRP. Using inaccurate transmission power may result in the first TRP not receiving the random-access preamble successfully leading to increased number of retransmissions and increased latency to complete the random-access procedure.

The example may enhance random-access procedure, for example, if the wireless device may send (e.g., transmit) a random-access preamble to a candidate cell operating in asymmetric multi-TRP operation. Early uplink synchronization configuration may comprise a first pathloss offset to use (e.g., apply) to the downlink pathloss estimate.

Early uplink synchronization configuration may comprise a list of pathloss offsets, and the PDCCH order may indicate a first pathloss offset, among/from the list of pathloss offsets, to use (e.g., apply) to the downlink pathloss estimate. The wireless device may use (e.g., apply) a first pathloss offset to use (e.g., apply) to the downlink pathloss estimate.

The first pathloss offset may be, for example, a lowest pathloss offset among one or more pathloss offsets associated with at least one activated TCI state for the candidate cell. The first pathloss offset may be, for example, a highest pathloss offset among one or more pathloss offsets associated with at least one activated TCI state for the candidate cell.

The first pathloss offset may be, for example, a lowest pathloss offset among one or more pathloss offsets associated with one or more TCI states configured for the candidate cell. The first pathloss offset may be, for example, a highest pathloss offset among one or more pathloss offsets associated with one or more TCI states configured for the candidate cell. The example may result in accurate transmission power calculation/determination for the first TRP, which may lead to reduced number of retransmissions and reduced latency to complete the random-access procedure.

A wireless device may be configured with a list of TCI states (e.g., *TCI-State*) within/by a higher layer parameter *PDSCH-Config* to decode PDSCH according to a detected PDCCH with DCI intended for the wireless device and a given cell (e.g., a given serving cell, a given non-serving/candidate/target cell). A number of TCI states in the list may depend on a UE capability parameter *maxNumberConfiguredTCIstatesPerCC.* Each TCI state (e.g., *TCI-State*) may contain/comprise/include/indicate/have respective parameters for configuring a quasi co-location relationship between one or two downlink reference signals and DM-RS port(s) of a PDSCH, a DM-RS port of a PDCCH, or CSI-RS port(s) of a CSI-RS resource. The quasi co-location relationship may be configured by a higher layer parameter *qcl-Type1* for a first downlink reference signal of the one or more downlink reference signals. The quasi co-location relationship may be configured by a higher layer parameter *qcl-Type2* for a second downlink reference signal of the one or more downlink reference signals. QCL types of the two downlink reference signals may not be the same, regardless of whether the first downlink reference signal and the second downlink reference signal are the same or different. QCL types of the two downlink reference signals may not be the same, regardless of whether the first downlink reference signal and the second downlink reference signal are the same or different, for example, if two downlink reference signals comprising a first downlink reference signal and a second downlink reference signal are indicated by a TCI state. A quasi co-location type corresponding to a downlink reference signal of the one or more downlink reference signals may be given by a higher layer parameter *qcl-Type* in a higher layer parameter *QCL-Info* and may take one of the following values:
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

A wireless device may be configured with a list of TCI states (e.g., up to 128 TCI-State configurations) within/by a higher layer parameter *dl-OrJointTCI-StateList* in *PDSCH-Config.* A TCI state (or a TCI state configuration) in the list of TCI states may contain/include/have/provide/comprise a reference signal for a quasi co-location for i) DM-RS of a PDSCH, ii) DM-RS of a PDCCH in a BWP/cell, and/or iii) a CSI-RS. A TCI state in the list of TCI states may provide/indicate a reference signal for determining uplink transmission spatial filter for i) a dynamic-grant PUSCH, ii) a configured-grant based PUSCH, iii) a PUCCH resource in a BWP/cell, and/or, iv) an SRS.

A wireless device may be configured with a list of TCI states (e.g., up to 64 TCI-UL State configurations) within a higher layer parameter *ul-TCI-StateList* in *BWP-UplinkDedicated.* A TCI state (e.g., *TCI-UL-State* or a TCI state configuration) in the list of TCI states may contain/include/have/provide/comprise a parameter for configuring a reference signal, if applicable, for determining uplink transmission spatial filter for i) dynamic-grant PUSCH transmissions, ii) configured-grant based PUSCH transmissions, iii) PUCCH transmissions via a PUCCH resource in a cell, and SRS transmissions.

A wireless device may receive an activation command (e.g., MAC-CE, DCI) used to map up to a number TCI states and/or pairs of TCI states (e.g., up to 8 TCI states and/or pairs of TCI states), with one TCI state for downlink channels/signals and/or one TCI state for uplink channels/signals, to codepoint(s) of a DCI field 'Transmission Configuration Indication' for one cell or for a set of cells/downlink BWPs, and/or up to a number of sets of TCI states (e.g., up to 8 sets of TCI states). Each set of the number of sets may be comprised of up to a number of TCI state(s) for downlink and uplink signals/channels (e.g., up to two TCI state(s)), or up to a number of TCI state(s) (e.g., up to two TCI state(s)) for downlink channels/signals and up to a number of TCI state(s) (e.g., up to two TCI state(s)) for uplink channels/signals to codepoint(s) of a DCI field *'Transmission Configuration Indication'* for one cell or for a set of cells/downlink BWPs, and if applicable, for one cell or for a set of cells/uplink BWPs. A set of TCI state IDs may be applied by the wireless device to/for all downlink and/or uplink BWPs in the indicated cells (or the applicable list of cells). A set of TCI state IDs may be applied by the wireless device to/for all downlink and/or uplink BWPs in the indicated cells (or the applicable list of cells), for example, if the same set of TCI state IDs are activated, by the activation command, for a set of cells/downlink BWPs and if applicable, for a set of cells/uplink BWPs, where the applicable list of cells may be determined, by the wireless device, by an indicated cell in the activation command. The wireless device may use (e.g., apply) the (indicated) *TCI-State(s)* and/or *TCI-UL-State(s)* to one cell or to a set of cells/downlink BWPs, and if applicable, to one cell or to a set of cells/uplink BWPs once the indicated mapping for the one single TCI codepoint is applied by the wireless device, if the activation command maps *TCI-State(s)* and/or *TCI-UL-State(s)* to only one (or to a single) TCI codepoint.

A wireless device 1) may be configured with *dl-OrJointTCI-StateList* by one or more configuration parameters (e.g., RRC messages/parameters) and activated with *TCI-State* by the activation command, or 2) may be configured with *ul-TCI-StateList* by one or more configuration parameters (e.g., RRC messages/parameters) and activated with *TCI-UL-State* by the activation command may receive a DCI format (e.g., DCI format 1_1/1_2) providing/indicating TCI state(s) (e.g., *TCI-State(s)* and/or *TCI-UL-State(s)*) for a cell or all cells in the same cell list configured by a simultaneous TCI update parameter (e.g., *simultaneousU-TCI-UpdateListl, simultaneousU-TCI-UpdateList2, simultaneousU-TCI-UpdateList3, simultaneousU-TCI-UpdateList4).* A wireless device 1) may be configured with *dl-OrJointTCI-StateList* by one or more configuration parameters (e.g., RRC messages/parameters) and activated with *TCI-State* by the activation command, or 2) may be configured with *ul-TCI-StateList* by one or more configuration parameters (e.g., RRC messages/parameters) and activated with *TCI-UL-State* by the activation command may receive a DCI format (e.g., DCI format 1_1/1_2) providing/indicating TCI state(s) (e.g., *TCI-State(s)* and/or *TCI-UL-State(s)*) for a cell or all cells in the same cell list configured by a simultaneous TCI update parameter (e.g., *simultaneousU-TCI-UpdateList1, simultaneousU-TCI-UpdateList2, simultaneousU-TCI-UpdateList3, simultaneousU-TCI-UpdateList4),* for example if *tci-PresentInDCI* is set as 'enabled' or *tci-PresentDCI-1-2* is configured for a CORESET. The DCI format may be with or without a downlink assignment. The simultaneous TCI update parameter may be a higher layer parameter (e.g., RRC parameter).

The indicated TCI-State(s) may be applied, by the wireless device, starting from a first/starting/earliest slot that is at least a number of symbols (e.g., symbols) after the last symbol of the uplink transmission. The indicated TCI-State(s) may be applied, by the wireless device, starting from a first/starting/earliest slot that is at least a number of symbols (e.g., symbols) after the last symbol of the uplink transmission, for example, if a wireless device configured with *dl-OrJointTCI-StateList* by one or more configuration parameters (e.g., RRC messages/parameters) may send (e.g., transmit) an uplink transmission (e.g., a PUCCH transmission, a PUSCH transmission) with a positive HARQ-ACK corresponding to the DCI format indicating the indicated TCI state(s) (e.g., *TCI-State(s)* and/or *TCI-UL-State(s)*), and if the indicated TCI State(s) is/are different from the previously indicated TCI state(s). The first/starting/earliest slot and the number of symbols may be both determined, by the wireless device, based on an active BWP with the smallest subcarrier spacing among BWP(s) of the cells using (e.g., applying) the indicated TCI-State(s) that are active at the end of the uplink transmission carrying/with the positive HARQ-ACK. The number of symbols may be indicated/provided to the wireless device by RRC messages (e.g., one or more configuration parameters).

A wireless device may receive an activation command (e.g., MAC-CE, DCI) used to map up to 8 combinations of one or two TCI states to codepoint(s) of the DCI field *'Transmission Configuration Indication'.* The wireless device may receive an activation command (e.g., MAC-CE, DCI) used to map up to 8 combinations of one or two TCI states to codepoint(s) of the DCI field *'Transmission Configuration Indication',* for example, if the wireless device supports two TCI states in a codepoint of a DCI field '*Transmission Configuration Indication'*. The wireless device may not expect to receive more than 8 TCI states in the activation command.

A wireless device may determine a transmission power for a physical random access channel (PRACH), *P*_{PRACH},_{*b*,*f*,*c*}(*i*), on active uplink BWP b of carrier *f* of cell *c* based on downlink reference signal (RS) for cell *c* in transmission occasion i as ${P}_{PRACH , b , f , c} \left(i\right) = min \left\{{P}_{CMAX , f , c}\left(i\right),{P}_{PRACH , target , f , c}+{PL}_{b , f , c}\right\} \left[dBm\right] ,$ where
- *P*_{CMAX,*f*,*c*}(*i*) may be the wireless device configured maximum output power for carrier *f* of cell *c* within transmission occasion *i*,
- *P*_{PRACH,target,*f*,*c*} may be the PRACH target reception power *PREAMBLE*_*RECEIVED*_*TARGET*_*POWER* provided by higher layers for the active uplink BWP b of carrier f of cell *c*, and
- *PL*_{*b*,*f*,*c*} may be a pathloss for the active uplink BWP *b* of carrier *f* based on the downlink RS associated with the PRACH transmission on the active downlink BWP of cell *c* and calculated by the wireless device in dB as a higher layer parameter *referenceSignalPower -* higher layer filtered RSRP in dBm.

When/if a PRACH transmission from a wireless device is based on (e.g., in response to) a detection of a PDCCH order, by the wireless device, that triggers a contention-free random access procedure and depending on the downlink reference signal that the DM-RS of the PDCCH order is quasi co-located with:
- when/if the PRACH association indicator is not present in the PDCCH order, or
- when/if the cell indicator field in the PDCCH order is not present or has value 0, or
- when/if a value of a PRACH association indicator field in the PDCCH order is 0 if the wireless device is not provided a higher layer parameter *SSB-MTC-AdditionalPCI*, or
- when/if the PRACH association indicator field in the PDCCH order indicates a *physCellId* associated with the cell of the PDCCH order reception, or depending on an SS/PBCH block indicated by the PDCCH order:
- when/if the PRACH transmission is on a non-serving cell indicated by the cell indicator field in the PDCCH order, or
- when/if a value of a PRACH association indicator field in the PDCCH order is 1 if the wireless device is not provided a higher layer parameter *SSB-MTC-AdditionalPCI*, or
- when/if the PRACH association indicator field in the PDCCH order indicates a *physCellId* that is different that the *physCellId* associated with the cell of the PDCCH order reception,
the higher layer parameter *referenceSignalPower* may be provided by a corresponding higher layer parameter *ss-PBCH-BlockPower.* The higher layer parameter *ss-PBCH-BlockPower* may be an average EPRE of the resources elements that carry secondary synchronization signals in dBm that the base station used for SSB transmission.

A wireless device may expect that the indicated SS/PBCH block in the PDCCH order is configured as *pathlossReferenceRS-Id* of an active TCI state. The wireless device may expect that the indicated SS/PBCH block in the PDCCH order is configured as *pathlossReferenceRS-Id* of an active TCI state, for example, if a value of a PRACH association indicator field in the PDCCH order is 1, if the wireless device is not provided a higher layer parameter *SSB-MTC-AdditionalPCI*, or if the PRACH association indicator field in the PDCCH order indicates a *physCellId* that is different that the *physCellId* associated with the cell of the PDCCH order reception.

The higher layer parameter *referenceSignalPower* may be obtained by the higher layer parameter *ss-PBCH-BlockPower* and a higher layer parameter *powerControlOffsetSS* where the higher layer parameter *powerControlOffsetSS* provides an offset of CSI-RS transmission power relative to SS/PBCH block transmission power, for example, if the wireless device is configured resources for a periodic CSI-RS reception. The wireless device may assume an offset of 0 dB. The wireless device may assume an offset of 0 dB, for example, if the higher layer parameter *powerControlOffsetSS* is not provided to the wireless device.

A PRACH transmission may be with a same SCS as a PRACH transmission initiated by higher layers (e.g., MAC, RRC layers). A PRACH transmission may be with a same SCS as a PRACH transmission initiated by higher layers (e.g., MAC, RRC layers), for example, if a random access procedure is initiated by a PDCCH order to the wireless device.

For a PRACH transmission by a wireless device triggered by a PDCCH order, the PRACH mask index field, if the value of the random access preamble index field is not zero, may indicate the PRACH occasion for the PRACH transmission where the PRACH occasions may be associated with the SS/PBCH block index indicated by the SS/PBCH block index field of the PDCCH order and, if any, a cell indicator field indicates a cell for the PRACH transmission.

DCI format 1_0 may be used for the scheduling of PDSCH in one downlink cell. The following information may be sent (e.g., transmitted) by means of the DCI format 1_0 with CRC scrambled by C-RNTI or CS-RNTI or MCS-C-RNTI:
- Frequency domain resource assignment field: If the CRC of the DCI format 1_0 may be scrambled by C-RNTI and the "Frequency domain resource assignment" field may be set to one, the DCI format 1_0 may be for a random access procedure initiated by a PDCCH order, with all remaining fields set as follows:
- Random Access Preamble index - 6 bits based on (e.g., according to) *ra-PreambleIndex.*
- UL/SUL indicator - 1 bit. If the value of the "Random Access Preamble index" is not all zeros and if the wireless device is configured with *supplementary Uplink* in *ServingCellConfig* in the cell, this field may indicate which UL carrier in the cell to send (e.g., transmit) the PRACH transmission; otherwise, this field may be reserved.
- SS/PBCH index - 6 bits. If the value of the "Random Access Preamble index" is not all zeros, this field may indicate an SS/PBCH that may be used to determine the RACH occasion for the PRACH transmission; otherwise, this field is reserved.
- PRACH Mask index - 4 bits. If the value of the "Random Access Preamble index" is not all zeros, this field may indicate the RACH occasion associated with the SS/PBCH indicated by "SS/PBCH index" for the PRACH transmission; otherwise, this field is reserved.
- Cell indicator - $\left⌈{log}_{2}\left(C+1\right)\right⌉$ bits indicating the cell for the corresponding PRACH transmission if the wireless device is configured with higher layer parameter *EarlyUlSyncConfig*, where C is the number of candidate cells configured with higher layer parameter *EarlyUlSyncConfig*; 0 bit otherwise.
- PRACH association indicator - 0 or 1 bit
   o 1 bit if the wireless device is provided/configured/indicated, by the base station, with a higher layer parameter *tag-Id2*, and the wireless device is not provided/configured/indicated *coresetPoolIndex* or is provided *coresetPoolIndex* with value 0 for the first CORESETs, and is provided *coresetPoolIndex* with value 1 for the second CORESETs, or
      - This field may indicate the PCI associated with the PRACH transmission if the wireless device is provided *SSB-MTC-AddtionalPCI.* The bit field index 0 of this field may be mapped to the PCI of the serving cell, and the bit field index 1 of this field may be mapped to the active additional PCI.
      - This field may indicate the PL-RS for the PRACH transmission if the wireless device is not provided/configured/indicated a higher layer parameter *SSB-MTC-AddtionalPCI.* The bit field index 0 of this field may be mapped to the DL RS that the DM-RS of the PDCCH order is quasi co-located with, and the bit field index 1 of this field may be mapped to the SS/PBCH indicated by the SS/PBCH index field in this DCI format.
   ∘ 0 bit otherwise.

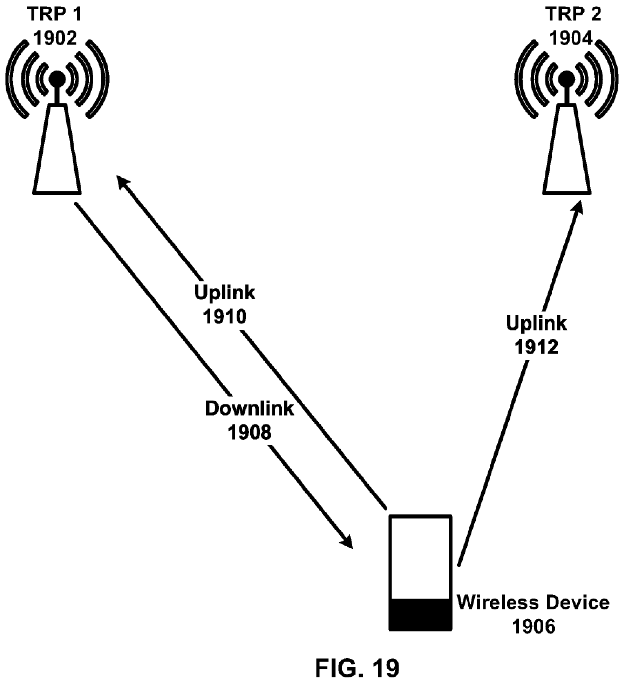

A wireless device, in an asymmetric multi-TRP operation, may receive downlink receptions (e.g., PDCCH, PDSCH, CSI-RS, SS/PBCH blocks) from a first TRP (e.g., TRP 1 in FIG. 19). The first TRP may send (e.g., transmit) (or may be configured to send/transmit), to the wireless device, the downlink receptions (e.g., PDCCH, PDSCH, CSI-RS, SS/PBCH blocks). The wireless device may not receive downlink receptions (e.g., PDCCH, PDSCH, CSI-RS, SS/PBCH blocks) from a second TRP (e.g., TRP 2 in FIG. 19). The second TRP may not send (e.g., transmit) (or may be configured not to send/transmit), to the wireless device, downlink transmissions (e.g., PDCCH, PDSCH, CSI-RS, SS/PBCH blocks). The wireless device may send (e.g., transmit) first uplink transmissions (e.g., PUCCH, PUSCH, SRS) to the first TRP. The first TRP may receive, from the wireless device, the first uplink transmissions. The wireless device may send (e.g., transmit) second uplink transmissions (e.g., PUCCH, PUSCH, SRS) to the second TRP. The second TRP may receive, from the wireless device, the second uplink transmissions. The wireless device may send (e.g., transmit) uplink transmissions (e.g., PUCCH, PUSCH, SRS) to both the first TRP and the second TRP.

A wireless device may receive downlink receptions (e.g., PDCCH, PDSCH, CSI-RS, SS/PBCH blocks) from both a first TRP (e.g., TRP 1 in FIG. 19) and a second TRP (e.g., TRP 2 in FIG. 19). The wireless device may receive downlink receptions (e.g., PDCCH, PDSCH, CSI-RS, SS/PBCH blocks) from both a first TRP (e.g., TRP 1 in FIG. 19) and a second TRP (e.g., TRP 2 in FIG. 19), for example, if asymmetric multi-TRP operation is not configured/enabled (e.g., in a symmetric multi-TRP operation). Both the first TRP and the second TRP may send (e.g., transmit), to the wireless device, downlink receptions. The wireless device may send (e.g., transmit) uplink transmissions (e.g., PUCCH, PUSCH, SRS) to both the first TRP and the second TRP.

A number of TRPs in the uplink and the downlink, in the asymmetric multi-TRP operation, may not be the same. For example, the wireless device may be served by (e.g., receive from) a single TRP in the downlink. The wireless device may be served by (e.g., send/transmit) two TRPs in the uplink. At least one TRP may not send/transmit (or may be configured not to send/transmit), to the wireless device, downlink receptions/transmissions (e.g., PDSCH, PDCCH, CSI-RS, RS). The at least one TRP may receive (or may be configured to receive), from the wireless device, uplink transmissions (e.g., PUSCH, PUCCH, SRS).

A TRP may be a physical point for network transmission and/or reception. Such a physical point may correspond, for example, to one or more sites within a cell or to geographically separated antennas of a distributed-antenna system. Communication involving a wireless device (e.g., UE), in multi-TRP operation, may include downlink multi-point transmission and/or uplink multi-point reception. Downlink multi-point transmission may include downlink transmission from multiple points or TRPs to the same wireless device. Uplink multi-point reception may include reception at multiple points or TRPs of uplink transmissions from the same wireless device.

Communication involving the wireless device, in asymmetric multi-TRP operation, may include only downlink multi-point transmission or only uplink multi-point reception. An example shown in FIG. 19 includes a wireless device and TRP 1 1902 and TRP 2 1904. TRP 1 1902 and TRP 2 1904 may be associated with a single base station or multiple base stations 1906. For example, TRP 1 1902 may be associated with a first base station (e.g., a macro cell or a macro gNB) and TRP 2 1904 may be associated with a second base station (e.g., a microcell, a picocell, or a femtocell). TRP 1 1902 may support or enable both downlink transmission 1908 to the wireless device 1906 and uplink reception 1910 from the wireless device 1906. TRP 2 1904 may support or enable only uplink reception 1912 from the wireless device 1906. TRP 1 1902, which supports or enables downlink transmission 1908 to the wireless device 1906 may be referred to as an "anchor" or a "primary" TRP. TRP 2 1904, which supports or enables only uplink reception 1912 from the wireless device 1906 may be referred to as an "uplink-only" or a "secondary" TRP.

Communication between the wireless device and the base station, in an example shown in FIG. 19, may include uplink multi-point reception, and may not include downlink multi-point transmission. The wireless device may send (e.g., transmit) uplink transmissions 1910 & 1912 to both TRP 1 1902 and TRP 2 1904 and may receive downlink transmissions 1908 from TRP 1 1902 only. Such an asymmetric multi-TRP operation may be referred to as a downlink single TRP and uplink multi-TRP (DL sTRP/UL mTRP) operation.

Communication between the wireless device and the base station, in another example (not shown in FIG. 19), may include downlink multi-point transmission, and may not include uplink multi-point reception. For example, the wireless device may receive downlink transmissions from both TRP 1 and TRP 2, and may send (e.g., transmit) uplink transmissions to TRP 1 only. Such an asymmetric multi-TRP operation may be referred to as downlink multi-TRP and uplink single TRP (DL mTRP/UL sTRP) operation.

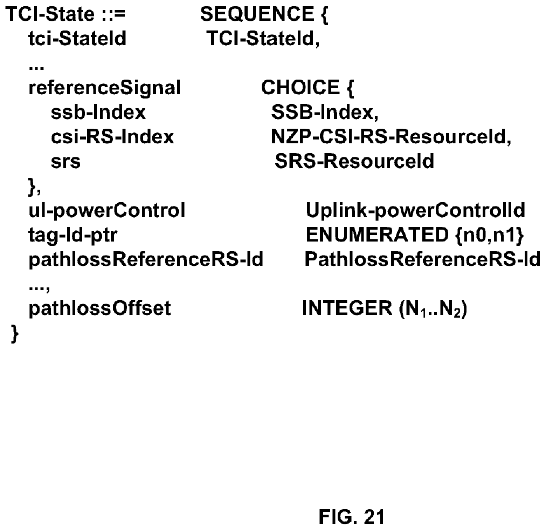

A wireless device, in sending (e.g., transmitting) to a TRP, may use/apply a TCI state configured/activated/indicated for the TRP. The wireless device may use the TCI state to determine a beam (or a spatial domain filter) for an uplink transmission to the TRP. The TCI state, as shown in FIG. 21, may indicate one or more reference signals (e.g., *SSB, CSI-RS, SRS)* that the wireless device may use to determine the spatial domain filter for the uplink transmission to the TRP. The wireless device may assume that a beam established for reception of the one or more reference signals may also be used for sending (e.g., transmitting) the uplink transmission to the TRP, after receiving the one or more reference signals.

Additionally, a wireless device may use power control to regulate its uplink transmit power for an uplink transmission to the TRP. Each TRP, in symmetric multi-TRP operation, may be used for both downlink transmission and for uplink reception. The wireless device may use downlink transmissions from a TRP to estimate a pathloss of a downlink channel from the TRP to the wireless device. A downlink pathloss reference signal (DL PL-RS) may be sent (e.g., transmitted) from the TRP to enable the wireless device to measure/estimate the pathloss of the downlink channel. An identifier of the downlink pathloss reference signal (e.g., *pathlossReferenceRS-Id*), as shown in FIG. 21, may be indicated in the TCI state configured/activated/indicated for the TRP. The wireless device, assuming reciprocity between the downlink channel from the TRP and an uplink channel to the TRP, may use the measured/estimated pathloss of the downlink channel to determine a transmit power for an uplink transmission to the TRP.

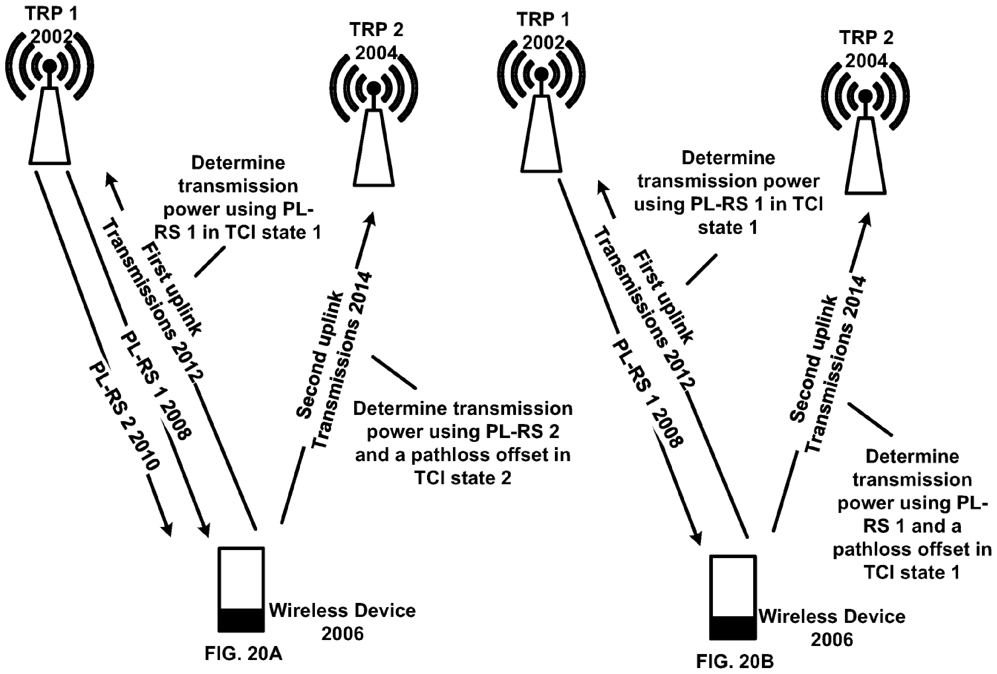

A problem, in asymmetric multi-TRP operation, that arises is that the wireless device may not receive downlink transmissions from an uplink-only TRP. The wireless device thus may not be able to measure/estimate a pathloss for use in uplink power control for uplink transmissions to the uplink-only TRP. A solution to this problem assumes that a channel from the uplink-only TRP to the wireless device may be related to a channel from an anchor TRP to the wireless device. The pathloss to be used for power control for uplink transmissions to the uplink-only TRP may be related to the pathloss to be used for power control for uplink transmissions to the anchor TRP. The solution may include indicating in the TCI state configured/activated/indicated for the uplink-only TRP a downlink reference signal, sent (e.g., transmitted) by the anchor TRP, for measuring/estimating a pathloss and a pathloss offset for using(e.g., applying) to the measured/estimated pathloss. FIG. 20A and FIG. 20B show examples of such a solution. The examples shown in FIG. 20A and FIG. 20B include a wireless device 2006 and TRP 1 2002 and TRP 2 2004 described with reference to FIG. 19 above. As discussed herein, TRP 1 2002 may be an anchor TRP, and TRP 2 2004 may be an uplink-only TRP. The pathloss offset of an uplink-only TRP may be configured in a TCI state indicated for the uplink-only TRP. If asymmetric multi-TRP is supported in a candidate cell, and if the PRACH transmission of an early synchronization is to an uplink-only TRP of a candidate cell, since there is no TCI state indicated for the candidate cell, the wireless may not know which/how pathloss offset to apply for the PRACH transmission. As described herein, if/when a wireless device receives a PDCCH order triggering a random-access procedure to a candidate cell, if a pathloss indicator field in the PDCCH order indicates to apply pathloss offset for PRACH transmission, the wireless device applies a pathloss offset configured in early uplink synchronization configuration (e.g., EarlyUL-SyncConfig) of the candidate cell.

A first TCI state (e.g., TCI state 1 in FIG. 20A) may be configured/activated/indicated for TRP 1 2002, and a second TCI state (e.g., TCI state 2 in FIG. 20A) may be configured/activated/indicated for TRP 2. The first TCI state may indicate a first downlink pathloss reference signal (e.g., PL-RS 1 2008). The second TCI state may indicate a second downlink pathloss reference signal (e.g., PL-RS 2 2010). The first and second downlink pathloss reference signals may be the same or different. Additionally, as shown in FIG. 20A, the second TCI state may indicate a pathloss offset.

TRP 1 2002 may be configured to send (e.g., transmit) both the first and second downlink pathloss reference signals 2008 & 2010. To send (e.g., transmit) a first uplink transmission 2012 (e.g., PUSCH, PUCCH, SR) to TRP 1 2002, the wireless device 2006 may be configured to measure/estimate a first pathloss based on receiving the first downlink pathloss reference signal (e.g., PL-RS 1 2008) and to use the first pathloss to determine a first transmit power for the first uplink transmission to TRP 1 2002. The wireless device 2006 may send (e.g., transmit) the first uplink transmission 2012 to TRP 1 2002 using the first transmit power. The wireless device 2006 may be configured to measure/estimate a second pathloss based on receiving the second downlink pathloss reference signal (e.g., PL-RS 2 2010) and to adjust the second pathloss using the pathloss offset indicated in the second TCI state, to send (e.g., transmit) a second uplink transmission to TRP 2 2014. The wireless device 2006 may add the pathloss offset to the second pathloss or may subtract the pathloss offset from the second pathloss, to obtain an adjusted second pathloss. The wireless device 2006 may use the adjusted second pathloss to determine a second transmit power for the second uplink transmission to TRP 2 2004. The wireless device 2006 may send (e.g., transmit) the second uplink transmission 2014 to TRP 2 2004 using the second transmit power.

A first TCI state (e.g., TCI state 1 in FIG. 20B), in FIG. 20B, may be configured/activated/indicated for TRP 1 2002 and TRP 2 2004. The first TCI state may indicate a first downlink pathloss reference signal (e.g., PL-RS 1 2008). Additionally, the first TCI state, as shown in FIG. 20B, may indicate a pathloss offset.

TRP 1 2002 may be configured to send (e.g., transmit) the first downlink pathloss reference signal. The wireless device 2006 may be configured to measure/estimate a first pathloss based on receiving the first downlink pathloss reference signal (e.g., PL-RS 1 2008) and to use the first pathloss to determine a first transmit power for the first uplink transmission to TRP 1 2002, to send (e.g., transmit) a first uplink transmission 2012(e.g., PUSCH, PUCCH, SR) to TRP 1 2002. The wireless device 2006 may not be configured to adjust the first pathloss using the pathloss offset indicated in the first TCI state, to send (e.g., transmit) the first uplink transmission 2012 to TRP 1 2002. The wireless device may send (e.g., transmit) the first uplink transmission 2012 to TRP 1 2002 using the first transmit power. The wireless device may be configured to adjust the first pathloss using the pathloss offset indicated in the first TCI state, to send (e.g., transmit) a second uplink transmission 2014 to TRP 2 2004. The wireless device 2006 may add the pathloss offset to the first pathloss or may subtract the pathloss offset from the first pathloss, to obtain an adjusted first pathloss. The wireless device 2006 may use the adjusted first pathloss to determine a second transmit power for the second uplink transmission 2014 to TRP 2 2004. The wireless device 2006 may send (e.g., transmit) the second uplink transmission to TRP 2 2014 using the second transmit power.

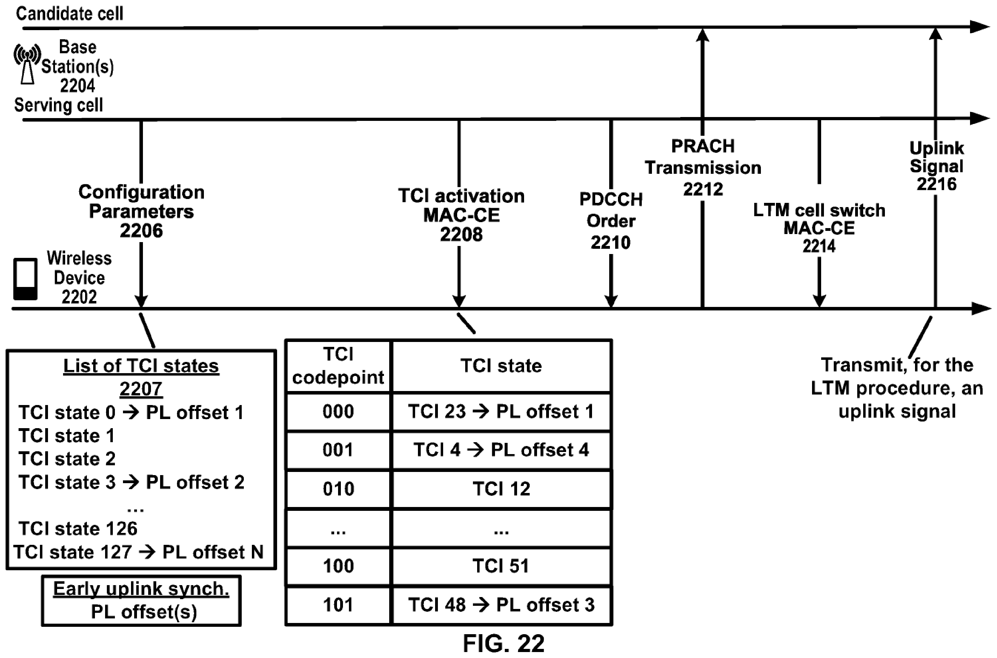

FIG. 21 shows an example of TCI state configuration. FIG. 22 shows an example of application of pathloss for LTM.

A wireless device 2202 may receive one or more messages. The wireless device 2202 may receive the one or more messages from a base station 2204. The wireless device may receive the one or more messages from a relay node. The wireless device may receive the one or more messages from another wireless device (e.g., TRP, vehicle, remote radio head, and the like). The one or more messages may comprise one or more configuration parameters (e.g., Configuration parameters 2206 in FIG. 22).

One or more messages may be RRC message(s). The one or more messages may be RRC reconfiguration message(s).

One or more configuration parameters may be RRC configuration parameter(s). The one or more configuration parameters may be RRC reconfiguration parameter(s). The one or more configuration parameters may be for one or more cells.

One or more cells may comprise a cell. The cell may be, for example, a serving cell. At least one configuration parameter of the one or more configuration parameters may be for the cell. The cell may be a primary cell (PCell). The cell may be a secondary cell (SCell). The cell may be a secondary cell configured with PUCCH (e.g., PUCCH SCell). The cell may be an unlicensed cell, e.g., operating in an unlicensed band. The cell may be a licensed cell, for example, operating in a licensed band. The cell may operate in a first frequency range (FR1). The FR1 may, for example, comprise frequency bands below 6 GHz. The cell may operate in a second frequency range (FR2). The FR2 may, for example, comprise frequency bands from 24 GHz to 52.6 GHz. The cell may operate in a third frequency range (FR3). The FR3 may, for example, comprise frequency bands from 52.6 GHz to 71 GHz. The FR3 may, for example, comprise frequency bands starting from (or above) 52.6 GHz.

A wireless device may receive, via the serving cell, the one or more messages. The one or more cells may comprise a candidate cell (or a non-serving cell or a neighbor cell, or an LTM candidate cell, or a target cell, or an LTM target cell, and the like) for an LTM procedure.

A wireless device may perform uplink transmissions (e.g., PUSCH, PUCCH, PUCCH) via/of the cell in a first time and in a first frequency. The wireless device may perform downlink receptions (e.g., PDCCH, PDSCH) via/of the cell in a second time and in a second frequency. The cell may operate in a time-division duplex (TDD) mode. The first frequency and the second frequency, in the TDD mode, may be the same. The first time and the second time, in the TDD mode, may be different. The cell may operate in a frequency-division duplex (FDD) mode. The first frequency and the second frequency, in the FDD mode, may be different. The first time and the second time, in the FDD mode, may be the same.

A wireless device may be in an RRC connected mode. The wireless device may be in an RRC idle mode. The wireless device may be in an RRC inactive mode.

A cell may comprise a plurality of BWPs. The plurality of BWPs may comprise one or more uplink BWPs comprising an uplink BWP of the cell. The plurality of BWPs may comprise one or more downlink BWPs comprising a downlink BWP of the cell.

A BWP of the plurality of BWPs may be in one of an active state and an inactive state. The wireless device, in the active state of a downlink BWP of the one or more downlink BWPs, may monitor a downlink channel/signal (e.g., PDCCH, DCI, CSI-RS, PDSCH) on/for/via the downlink BWP. The wireless device, in the active state of a downlink BWP of the one or more downlink BWPs, may receive a PDSCH on/via/for the downlink BWP. The wireless device, in the inactive state of a downlink BWP of the one or more downlink BWPs, may not monitor a downlink channel/signal (e.g., PDCCH, DCI, CSI-RS, PDSCH) on/via/for the downlink BWP. The wireless device. In the inactive state of a downlink BWP of the one or more downlink BWPs, may stop monitoring (or receiving) a downlink channel/signal (e.g., PDCCH, DCI, CSI-RS, PDSCH) on/via/for the downlink BWP. The wireless device, in the inactive state of a downlink BWP of the one or more downlink BWPs, may not receive a PDSCH on/via/for the downlink BWP. The wireless device, In the inactive state of a downlink BWP of the one or more downlink BWPs, may stop receiving a PDSCH on/via/for the downlink BWP.

A wireless device, in the active state of an uplink BWP of the one or more uplink BWPs, may send (e.g., transmit) an uplink signal/channel (e.g., PUCCH, preamble, PUSCH, PRACH, PUCCH, etc) on/via the uplink BWP. The wireless device, in the inactive state of an uplink BWP of the one or more uplink BWPs, may not send (e.g., transmit) an uplink signal/channel (e.g., PUCCH, preamble, PUSCH, PRACH, PUCCH, etc) on/via the uplink BWP.

A wireless device may activate the downlink BWP of the one or more downlink BWPs of the cell. The activating the downlink BWP may comprise setting (or switching to) the downlink BWP as an active downlink BWP of the cell. The activating the downlink BWP may comprise setting the downlink BWP in the active state. The activating the downlink BWP may comprise switching the downlink BWP from the inactive state to the active state.

A wireless device may activate the uplink BWP of the one or more uplink BWPs of the cell. The activating the uplink BWP may comprise that the wireless device sets (or switches to) the uplink BWP as an active uplink BWP of the cell. The activating the uplink BWP may comprise setting the uplink BWP in the active state. The activating the uplink BWP may comprise switching the uplink BWP from the inactive state to the active state.

One or more configuration parameters may be for the (active) downlink BWP of the cell. At least one configuration parameter of the one or more configuration parameters may be for the downlink BWP of the cell.

One or more configuration parameters may be for the (active) uplink BWP of the cell. At least one configuration parameter of the one or more configuration parameters may be for the uplink BWP of the cell.

One or more configuration parameters may indicate a subcarrier spacing (or a numerology) for the downlink BWP. One or more configuration parameters may indicate a subcarrier spacing (or a numerology) for the uplink BWP.

A value of the subcarrier spacing (of the downlink BWP and/or the uplink BWP) may be/indicate, for example, 15 kHz (mu = 0). A value of the subcarrier spacing may be/indicate, for example, 30 kHz (mu = 1). A value of the subcarrier spacing may be/indicate, for example, 60 kHz (mu = 2). A value of the subcarrier spacing may be/indicate, for example, 120 kHz (mu = 3). A value of the subcarrier spacing may be/indicate, for example, 240 kHz (mu = 4). A value of the subcarrier spacing may be/indicate, for example, 480 kHz (mu = 5). A value of the subcarrier spacing may be/indicate, for example, 960 kHz (mu = 6). For example, 480 kHz may be valid/applicable in FR3. 960 kHz may be valid/applicable in FR3. 240 kHz may be valid/applicable in FR3. 120 kHz may be valid/applicable in FR3.

One or more configuration parameters may comprise one or more LTM configuration parameters (e.g., *LTM-Candidate* in *LTM-Config*) of the candidate cell.

One or more LTM configuration parameters may be interchangeably used with an LTM candidate configuration of the candidate cell. The one or more LTM configuration parameters may comprise an early uplink synchronization configuration (e.g., *Itm-EarlyUL-SyncConfig)* used to perform an early uplink synchronization procedure over an uplink carrier (e.g., NUL, SUL) of/on the candidate cell. The early uplink synchronization configuration may indicate/configure random access resources for the early uplink synchronization procedure, for example, for PRACH transmission on the candidate cell.

An early uplink synchronization procedure may be interchangeably used with one or more early uplink synchronization configuration parameters. The one or more early uplink synchronization configuration parameters may comprise, for example, frequency information (e.g., *frequencyInfoUL*) that comprises parameters of the uplink carrier for the PRACH transmission on the candidate cell. The one or more early uplink synchronization configuration parameters may comprise, for example, RACH parameters (e.g., *rach-ConfigGeneric*) for performing a random-access procedure on the candidate cell.

One or more LTM configuration parameters may comprise a TCI state parameter (e.g., *LTM-TCI-Info*)*.* The TCI state parameter may be used to configure (or may configure/indicate) TCI related information for the LTM candidate configuration to be used in activation of TCI state(s) and/or upon the reception of the LTM cell switch command.

TCI state parameter may comprise a TCI state list parameter (e.g., *ltm-DL-OrJointTCI-StateToAddModList, ltm-UL-TCI-StateToAddModList*) indicating a list of TCI states for the candidate cell (e.g., List of TCI states 2207 in FIG. 22). The list of TCI states may be interchangeably used with a list of candidate TCI states (e.g., *CandidateTCI-State, CandidateTCI-UL-State*)*.*

A list of TCI states may be, for example, a list of joint TCI states that are applicable to both uplink transmissions (e.g., PUSCH/PUCCH/SRS) via the candidate cell and downlink receptions (e.g., PDSCH/PDCCH/CSI-RS) via the candidate cell. The list of TCI states may be, for example, a list of uplink TCI states that are applicable to uplink transmissions (e.g., PUSCH/PUCCH/SRS) via the candidate cell. The list of uplink TCI states may not be applicable to downlink receptions (e.g., PDSCH/PDCCH/CSI-RS) via the candidate cell.

A list of TCI states may comprise one or more TCI states (or one or more candidate TCI states). For example, in FIG. 22, the list of TCI states are TCI state 0, TCI state 1, TCI state 2, TCI state 3, ..., and TCI state 127.

A use of the term "candidate cell" is an example and is not intended to limit the scope of the invention. Alternative terms, that may be substituted, may include "LTM candidate cell," "target cell," "non-serving cell", "LTM target cell," among others.

One or more configuration parameters may indicate, for the one or more TCI states, one or more TCI state identifiers/indexes/identities (e.g., *TCI-StateId, tci-UL-StateId*)*.* The one or more configuration parameters may indicate, for each TCI state of the one or more TCI states, a respective TCI state identifier of the one or more TCI state identifiers. Each TCI state of the one or more TCI states may be indicated/identified by a respective TCI state identifier of the one or more TCI state identifiers. For example, the one or more configuration parameters may indicate, for a first TCI state of the one or more TCI states, a first TCI state identifier of the one or more TCI state identifiers. The one or more configuration parameters may indicate, for a second TCI state of the one or more TCI states, a second TCI state identifier of the one or more TCI state identifiers.

One or more configuration parameters may indicate the one or more TCI states that indicate a unified TCI state for the candidate cell. The TCI state parameter may comprise a unified-TCI-state-type parameter (e.g., *unifiedtci-StateType*). The unified-TCI-state-type parameter may indicate the unified TCI state type for the candidate cell (or for the LTM candidate configuration).

A unified-TCI-state-type parameter may be set to "Joint". The wireless device may use/apply the one or more TCI states (e.g., provided/indicated by *ltm-dl-OrJoint-TCIStateList*) for both uplink transmissions (e.g., PUSCH/PUCCH/SRS transmissions) of/via the candidate cell and downlink receptions (e.g., PDCCH/PDSCH/CSI-RS receptions) of/via the candidate cell, for example, based on the unified-TCI-state-type parameter being set to "Joint". The one or more TCI states may be, for example, one or more joint TCI states.

A unified-TCI-state-type parameter may be set to "Separate". The wireless device may use/apply the one or more TCI states (e.g., provided/indicated by a higher layer parameter *ltm-UL-TCI-StateToAddModList)* for uplink transmissions (e.g., PUSCH/PUCCH/SRS transmissions) of/via the candidate cell, for example, based the unified-TCI-state-type parameter being set to "Separate". The wireless device may not use/apply the one or more TCI states for downlink receptions (e.g., PDCCH/PDSCH/CSI-RS receptions) of/via the candidate cell, for example, based on the unified-TCI-state-type parameter being set to "Separate". The one or more TCI states may be, for example, one or more uplink TCI states.

One or more configuration parameters (or the one or more LTM configuration parameters or the TCI state list parameter or TCI state parameter) may indicate, for at least one TCI state of the one or more TCI states in the TCI state list, one or more pathloss offsets (e.g., *PathlossOffset, PlOffset, PathlossOffset* in FIG. 21 and the like). The one or more configuration parameters may indicate, for each TCI state of the at least one TCI state, a respective pathloss offset of the one or more pathloss offsets. Each TCI state of the at least one TCI state may be associated with a respective pathloss offset of the one or more pathloss offsets. For example, the one or more configuration parameters may indicate, for a first TCI state of the at least one TCI state, a first pathloss offset of the one or more pathloss offsets. The one or more configuration parameters may indicate, for a second TCI state of the at least one TCI state, a second pathloss offset of the one or more pathloss offsets.

One or more TCI states in the TCI state list may comprise at least one second TCI state that is not associated with a pathloss offset. The at least one TCI state (shown in FIG. 22) associated with pathloss offset is TCI state 0, TCI state 3 and TCI state 127. TCI state 0 may be associated with Pathloss offset 1, TCI state 3 is associated with Pathloss offset 2, and TCI state 127 is associated with Pathloss offset N. The at least one second TCI state that are not associated with pathloss offset may be TCI state 1, TCI state 2, and TCI state 126.

A TCI state configuration (e.g., *CandidateTCI-State, CandidateTCI-UL-State*) of each TCI state of the at least one TCI state may comprise a respective pathloss offset parameter (e.g., *PathlossOffset, PlOffset, PathlossOffset* in FIG. 21 and the like) indicating a pathloss offset applied to the TCI state (e.g., joint TCI state or uplink TCI state). The one or more LTM configuration parameters (or the TCI state list parameter or TCI state parameter) may comprise/indicate at least one TCI state configuration for/of the at least one TCI state. Each TCI state configuration of the at least one TCI state configuration may be for/of a respective TCI state of the at least one TCI state. The at least one TCI state configuration may comprise one or more pathloss offset parameters (e.g., *PathlossOffset, PlOffset, PathlossOffset* in FIG. 21 and the like) indicating the one or more pathloss offsets. Each TCI state configuration of the at least one TCI state configuration may comprise a respective pathloss offset parameter of the one or more pathloss offset parameters. Each pathloss offset parameter of the one or more pathloss offset parameters may indicate a respective pathloss offset of the one or more pathloss offsets.

A first TCI state configuration of a first TCI state may comprise a first pathloss offset parameter (e.g., *PathlossOffset* in FIG. 21) indicating a first pathloss offset applied to the first TCI state. A second TCI state configuration of a second TCI state may comprise a second pathloss offset parameter (e.g., *PathlossOffset* in FIG. 21) indicating a second pathloss offset applied to the second TCI state. The at least one TCI state configuration may comprise the first TCI state configuration and the second TCI state configuration. The at least one TCI state may comprise the first TCI state and the second TCI state. The one or more pathloss offset parameters may comprise the first pathloss offset parameter and the second pathloss offset parameter.

A wireless device may receive an activation command (e.g., MAC-CE, MAC-CE, DCI, RRC, one or more control commands, one or more downlink control commands/messages, one or more control commands/messages, Candidate Cell TCI States Activation/Deactivation MAC CE, TCI activation MAC-CE 2208 in FIG. 22, and the like). The activation command may indicate activation of at least one TCI state, among/from the one or more TCI states (e.g., *ltm-DLorJoint-TCIStateList, ltm-UL-TCI-StateToAddModList*), of/for the candidate cell. The at least one (activated) TCI state may be, for example, at least one joint TCI state among/from the one or more joint TCI states. The at least one (activated) TCI state may be, for example, at least one uplink TCI state among/from the one or more uplink TCI states. The one or more TCI states may be, for example, initially deactivated upon configuration (or reconfiguration). The at least one TCI state may be, for example, deactivated before (or prior to) receiving the activation command. The at least one TCI state may be, for example, activated after receiving the activation command.

A base station may activate the at least one TCI state, for example, by sending/transmitting the activation command. The wireless device may map the at least one (activated) TCI state to one or more TCI codepoints of/for the candidate cell. The activation command may indicate mapping of the at least one (activated) TCI state to the one or more TCI codepoints. The wireless device may map respective TCI state(s) of the at least one (activated) TCI state to a respective TCI codepoint of the one or more TCI codepoints. The one or more TCI codepoints may indicate/comprise the at least one (activated) TCI state. Each TCI codepoint of the one or more TCI codepoints may indicate (or may be mapped to) respective TCI state(s) of the at least one (activated) TCI state..

For example, the one or more TCI codepoints, in FIG. 22, may be/comprise TCI codepoint 000, TCI codepoint 001, TCI codepoint 010, ..., TCI codepoint 100, and TCI codepoint 101. The at least one (activated) TCI state may be/comprise TCI state 23, TCI state 4, TCI state 12, TCI state 51, and TCI state 48. TCI codepoint 000 may comprise/indicate (or may be mapped to) TCI state 23. TCI codepoint 001 may comprise/indicate (or may be mapped to) TCI state 4. TCI codepoint 010 may comprise/indicate (or may be mapped to) TCI state 12. TCI codepoint 100 may comprise/indicate (or may be mapped to) TCI state 51. TCI codepoint 101 may comprise/indicate (or may be mapped to) TCI state 48. TCI state 23, TCI state 4, TCI state 12, TCI state 51, and TCI state 48 may be identified by TCI state ID 23, TCI state ID 4, TCI state ID 12, TCI state ID 51, and TCI state ID 48, respectively.

An activation command may comprise a plurality of fields. A first field (e.g., Candidate Cell ID) of the plurality of fields may indicate an identity of the candidate cell for which the activation command applies.

A second field (e.g., Pᵢ) of the plurality of fields may indicate whether each TCI codepoint has multiple TCI states or single TCI state. The *i*^{th} TCI codepoint may include/comprise/indicate a downlink TCI state and an uplink TCI state. The *i*^{th} TCI codepoint may include/comprise/indicate a downlink TCI state and an uplink TCI state, for example, if the second field corresponding to a TCI codepoint i (e.g., Pᵢ field) is set to 1. The *i*^{th} TCI codepoint may include/comprise/indicate only a downlink/joint TCI state or only an uplink TCI state. The *i*^{th} TCI codepoint may include/comprise/indicate only a downlink/joint TCI state or only an uplink TCI state, for example, if the second field corresponding to a TCI codepoint i (e.g., Pᵢ field) is set to 0. The codepoint to which a TCI state is mapped may be determined by its ordinal position among all the TCI state ID fields.

A third field (e.g., D/U) of the plurality of fields may indicate whether a TCI state identifier (ID) in the same octet as the third field is for a joint/downlink TCI state or an uplink TCI state. The TCI state ID in the same octet may be for a joint/downlink TCI state. The TCI state ID in the same octet may be for a joint/downlink TCI state, for example, if the third field is set to 1. The TCI state ID in the same octet may be for an uplink TCI state. The TCI state ID in the same octet may be for an uplink TCI state, for example, if the third field is set to 0. A fourth field (e.g., TCI state ID) of the plurality of fields may comprise/be a TCI state identifier (e.g., *TCI-StateId*) indicating a TCI state among the one or more TCI states (e.g., *TCI-StateId* in *ltm-DLorJoint-TCIStateList, TCI-UL-StateId* in *ltm-UL-TCI-StateToAddModList).*

A plurality of fields may comprise at least one TCI state identifier (e.g., TCI state ID) indicating/identifying the at least one (activated) TCI state. The one or more TCI state identifiers of the one or more TCI states may comprise the at least one TCI state identifier. Each TCI state identifier of the at least one TCI state identifier may indicate/identify a respective TCI state of the at least one (activated) TCI state.

One or more configuration parameters may indicate, for one or more activated TCI states of/from/among the at least one activated TCI state, at least one pathloss offset (e.g., *PathlossOffset, PlOffset, PathlossOffset* in FIG. 21 and the like). The one or more configuration parameters may indicate, for each TCI state of the one or more activated TCI states, a respective pathloss offset of the at least one pathloss offset. Each TCI state of the one or more activated TCI states may be associated with a respective pathloss offset of the at least one pathloss offset. For example, the one or more configuration parameters may indicate, for a first TCI state (e.g., TCI state 23 in FIG. 22) of the one or more TCI activated states, a first pathloss offset (e.g., PL offset 1) of the at least one pathloss offset. The one or more configuration parameters may indicate, for a second TCI state (e.g., TCI state 4 in FIG. 22) of the one or more TCI activated states, a second pathloss offset (e.g., PL offset 4) of the at least one pathloss offset.

One or more pathloss offsets (e.g., *PathlossOffset, PlOffset, PathlossOffset* in FIG. 21 and the like) associated with the at least one TCI state of the one or more TCI states in the TCI state list may comprise the at least one pathloss offset associated with the one or more activated TCI states. The at least one TCI state, of the one or more TCI states, associated with pathloss offset may comprise the one or more activated TCI states associated with pathloss offset.

At least one activated TCI state, shown in FIG. 22, may comprise TCI state 23, TCI state 4, TCI state 12, TCI state 51, and TCI state 48. The one or more activated TCI states associated with pathloss offset may comprise TCI state 23, TCI state 4, and TCI state 48. The at least one TCI state, of the one or more TCI states, associated with pathloss offset may comprise TCI state 0, TCI state 3 and TCI state 127.

A wireless device may receive/detect a PDCCH order (e.g., PDCCH order 2210 in FIG. 22) triggering/initiating a random-access procedure. The PDCCH order may trigger/initiate the random-access procedure for/via the candidate cell.

The random-access procedure may be, for example, a contention-free random-access procedure. The random-access procedure may be, for example, a contention-based random-access procedure.

PDCCH order may be, for example, a DCI format 1_0. The wireless device may initiate/trigger the random-access procedure based on receiving/detecting the PDCCH order.

A wireless device may receive/detect the PDCCH order via a coreset. For example, the active downlink BWP of the serving cell may comprise the coreset. The wireless device may receive/detect the PDCCH order via/on the serving cell.

PDCCH order (or the DCI format 1_0) may comprise a cell indicator field. A value of the cell indicator field may indicate (or may be mapped) to a cell. A first value (e.g., 0) of the cell indicator field may indicate (or may be mapped to) the serving cell. A second value (e.g., 1, 2 , 3...) of the cell indicator field may indicate (or may be mapped to) the candidate cell. The PDCCH order (or the DCI format 1_0) may comprise the cell indicator field, for example, based on the one or more LTM configuration parameters comprising the early uplink synchronization configuration (e.g., *Itm-EarlyUL-SyncConfig).* A size/length of the cell indicator field may be based on a number of candidate cells configured/provided with early uplink synchronization configuration (e.g., *ltm-EarlyUL-SyncConfig*).

A cell indicator field (or the value of the cell indicator field) may indicate the candidate cell for a PRACH transmission of the random-access procedure. The cell indicated by the cell indicator field may be the candidate cell, for example, based on the value of the cell indicator field being set/equal to the second value.

A wireless device may send (e.g., transmit) a PRACH transmission (or a random-access preamble, PRACH transmission 2212 in FIG. 22) for the random-access procedure. The wireless device may send (e.g., transmit) the PRACH transmission (or the random-access preamble) for the random-access procedure, for example, based on receiving/detecting the PDCCH order triggering/initiating the random-access procedure. The wireless device may send (e.g., transmit), via/on the candidate cell, the PRACH transmission.

A wireless device may send (e.g., transmit) the PRACH transmission with/using a transmission power. The wireless device may determine/calculate/compute the transmission power based on (or using) a pathloss estimate.

PDCCH order may comprise a SS/PBCH index field indicating/identifying an SS/PBCH (or an SS/PBCH block). The wireless device may determine/calculate/compute, based on (or using) the SS/PBCH indicated by the SS/PBCH index field, a downlink pathloss estimate used for calculation of the transmission power of/for the PRACH transmission. A pathloss reference signal for the PRACH transmission may be the SS/PBCH indicated by the SS/PBCH index field. The wireless device may determine/calculate/compute, based on (or using) the SS/PBCH indicated by the SS/PBCH index field, the downlink pathloss estimate, for example, based on the PRACH transmission being on the candidate cell indicated by the cell indicator field. The wireless device may determine/calculate/compute, based on (or using) the SS/PBCH indicated by the SS/PBCH index field, the downlink pathloss estimate, for example, based on the cell indicator field indicating the candidate cell different from the serving cell.

A wireless device may determine/calculate/compute the downlink pathloss estimate based on determining/measuring/assessing a radio link quality (e.g., RSRP, L3-RSRP, higher layer filtered RSRP, L1-RSRP) of the SS/PBCH. The wireless device may determine/calculate/compute the downlink pathloss estimate based on a higher layer parameter *ss-PBCH-BlockPower* corresponding to (or associated with) the SS/PBCH. For example, the one or more configuration parameters may indicate, for the SS/PBCH, the higher layer parameter *ss-PBCH-BlockPower.* The PDCCH order may comprise a field (e.g., pathloss offset indicator field, pathloss offset field, pathloss offset association field, and the like) with a value.

One or more configuration parameters may comprise a parameter (e.g., *pathlossOffsetIndicationDCI-1-0, pathlossOffset-PresentInDCI)* indicating whether the field is present or absent in a DCI format (e.g., DCI format 1_0). The wireless device may consider/assume/determine the field to be absent/disabled in the DCI format. The wireless device may consider/assume/determine the field to be absent/disabled in the DCI format, for example, if the parameter is absent in the one or more configuration parameters. The wireless device may consider/assume/determine the field to be present/enabled in the DCI format. The wireless device may consider/assume/determine the field to be present/enabled in the DCI format, for example, if the parameter is present/enabled in the one or more configuration parameters.

PDCCH order may comprise the field, for example, based on the one or more configuration parameters comprising the parameter (e.g., *pathlossOffsetIndicationDCI-1-0, pathlossOffset-PresentInDCI*)*.* The PDCCH order may comprise the field, for example, based on the parameter being present/enabled (or being set/configured to be enabled) in the one or more configuration parameters.

PDCCH order may comprise the field, for example, based on at least one TCI state configured for the serving cell being associated/configured with a pathloss offset parameter (e.g., *PathlossOffset, PlOffset, PathlossOffset* in FIG. 21 and the like). The one or more configuration parameters may indicate/configure, for the serving cell, the at least one TCI state associated with the pathloss offset parameter. The PDCCH order may comprise the field, for example, based on TCI state configuration of the at least one TCI state comprising the pathloss offset parameter.

PDCCH order may comprise the field, for example, based on at least one TCI state, configured for at least one candidate cell that is configured/provided with early uplink synchronization configuration (e.g., *Itm-EarlyUL-SyncConfig),* being associated/configured with a pathloss offset parameter (e.g., *PathlossOffset, PlOffset, PathlossOffset* in FIG. 21 and the like). The PDCCH order may comprise the field, for example, based on TCI state configuration of the at least one TCI state comprising the pathloss offset parameter.

PDCCH order may comprise the field, for example, based on early uplink synchronization configuration (e.g., *Itm-EarlyUL-SyncConfig)* configured for at least one candidate cell being associated/configured with a pathloss offset parameter (e.g., *PathlossOffset, PlOffset, PathlossOffset* in FIG. 21 and the like). The PDCCH order may comprise the field, for example, based on early uplink synchronization configuration (e.g., *Itm-EarlyUL-SyncConfig)* configured for at least one candidate cell comprising the pathloss offset parameter.

A number of candidate cells configured/provided with early uplink synchronization configuration (e.g., *Itm-EarlyUL-SyncConfig)* may be two. At least one TCI state, configured/indicated for a first candidate cell configured/provided with early uplink synchronization configuration, may be associated/configured with a pathloss offset parameter. At least one TCI state, configured/indicated for a second candidate cell configured/provided with early uplink synchronization configuration, may or may not be associated/configured with a pathloss offset parameter. The PDCCH order may comprise the field based on the at least one TCI state, configured/indicated for the first candidate cell, being associated/configured with the pathloss offset parameter.

A number of candidate cells configured/provided with early uplink synchronization configuration (e.g., *Itm-EarlyUL-SyncConfig)* may be two. At least one TCI state, configured/indicated for a first candidate cell configured/provided with early uplink synchronization configuration, may not be associated/configured with a pathloss offset parameter. At least one TCI state, configured/indicated for a second candidate cell configured/provided with early uplink synchronization configuration, may not be associated/configured with a pathloss offset parameter. The PDCCH order may not comprise the field based on the at least one TCI state, configured/indicated for the first candidate cell, not being associated/configured with the pathloss offset parameter and the at least one TCI state, configured/indicated for the second candidate cell, not being associated/configured with the pathloss offset parameter.

A field (e.g., pathloss offset indicator field, pathloss offset field, pathloss offset association field, and the like) may be reserved (or a reserved field), for example, based on a cell (e.g., serving cell or candidate cell) indicated by the cell indicator field not being configured with at least one TCI state associated/configured with the pathloss offset parameter. The wireless device may ignore the field (or the value of the field), for example, based on the field being reserved.

A first value (e.g. 0) of the field may indicate that no pathloss offset is applied to the PRACH transmission. The first value (e.g. 0) of the field may indicate that no pathloss offset is applied to the PRACH transmission, for example, if the cell indicated by the cell indicator field is the candidate cell. The first value (e.g. 0) of the field may be interchangeably used with a bit field index 0 of the field.

A second value (e.g. 1) of the field may indicate that a first pathloss offset is applied to the PRACH transmission. The second value (e.g. 1) of the field may indicate that a first pathloss offset is applied to the PRACH transmission, for example, if the cell indicated by the cell indicator field is the candidate cell. The first pathloss offset may be, for example, in dB. The second value (e.g. 1) of the field may be interchangeably used with a bit field index 1 of the field.

A first value (e.g. 0) of the field may indicate that no pathloss offset is applied to the PRACH transmission. The first value (e.g. 0) of the field may indicate that no pathloss offset is applied to the PRACH transmission, for example, if the cell indicated by the cell indicator field is the serving cell (and not a candidate cell) and there is one indicated joint/uplink TCI state.

A second value (e.g. 1) of the field may indicate that a pathloss offset configured in the indicated joint/uplink TCI state is applied for the PRACH transmission. The second value (e.g. 1) of the field may indicate that a pathloss offset configured in the indicated joint/uplink TCI state is applied for the PRACH transmission, for example, if the cell indicated by the cell indicator field is the serving cell (and not a candidate cell) and there is one indicated joint/uplink TCI state.

A first value (e.g. 0) of the field may indicate that a pathloss offset configured in a first indicated joint/uplink TCI state of the two indicated joint/uplink TCI states is applied for the PRACH transmission. The first value (e.g. 0) of the field may indicate that a pathloss offset configured in a first indicated joint/uplink TCI state of the two indicated joint/uplink TCI states is applied for the PRACH transmission, for example, if the cell indicated by the cell indicator field is the serving cell (and not a candidate cell) and there are two indicated joint/uplink TCI states.

A second value (e.g. 1) of the field may indicate that a pathloss offset configured in a second indicated joint/uplink TCI state of the two indicated joint/uplink TCI states is applied for the PRACH transmission. The second value (e.g. 1) of the field may indicate that a pathloss offset configured in a second indicated joint/uplink TCI state of the two indicated joint/uplink TCI states is applied for the PRACH transmission, for example, if the cell indicated by the cell indicator field is the serving cell (and not a candidate cell) and there are two indicated joint/uplink TCI states. The value of the field may be equal/set to the first value (e.g., 0).

A pathloss estimate used to determine/calculate the transmission power of/for the PRACH transmission may be (or may be equal to) the downlink pathloss estimate of the SS/PBCH, for example, based on the value of the field being set/equal to the first value (e.g., 0). The wireless device may not use/apply a pathloss offset for/in determination/calculation of the pathloss estimate. The wireless device may not use/apply a pathloss offset to the downlink pathloss estimate of the SS/PBCH to calculate/determine the transmission power of the PRACH transmission. The wireless device may not determine, for the PRACH transmission, the pathloss estimate based on (or using) a pathloss offset, for example, based on the value of the field being set/equal to the first value (e.g., 0). The wireless device may determine/calculate/compute, based on (or using) the SS/PBCH indicated by the SS/PBCH index field, the pathloss estimate. The wireless device may determine/calculate/compute, based on (or using) the SS/PBCH indicated by the SS/PBCH index field, the pathloss estimate, for example, if the value of the field is set/equal to the first value (e.g., 0). The value of the field may be equal/set to the second value (e.g., 1).

A pathloss estimate used to determine/calculate the transmission power of/for the PRACH transmission may be based on both the downlink pathloss estimate of the SS/PBCH and the first pathloss offset, for example, based on the value of the field being set/equal to the second value (e.g., 1). The wireless device may use/apply the first pathloss offset for/in determination/calculation of the pathloss estimate. The wireless device may use/apply the first pathloss offset to the downlink pathloss estimate of the SS/PBCH to calculate/determine the transmission power of the PRACH transmission. The wireless device may determine, for the PRACH transmission, the pathloss estimate based on (or using) the first pathloss offset, for example, based on the value of the field being set/equal to the second value (e.g., 1). The wireless device may determine/calculate/compute, based on (or using) the SS/PBCH indicated by the SS/PBCH index field and the first pathloss offset, the pathloss estimate. The wireless device may determine/calculate/compute, based on (or using) the SS/PBCH indicated by the SS/PBCH index field and the first pathloss offset, the pathloss estimate, for example, When the value of the field is set/equal to the second value (e.g., 1).

A wireless device may determine, for the PRACH transmission, the pathloss estimate based on (or using) both the downlink pathloss estimate of the SS/PBCH and the first pathloss offset, for example, based on (or when) the value of the field being set/equal to the second value (e.g., 1). The wireless device may use both the downlink pathloss estimate of the SS/PBCH and the first pathloss offset to determine the pathloss estimate for the PRACH transmission, for example, based on (or when) the value of the field being set/equal to the second value (e.g., 1). The wireless device may determine, for the PRACH transmission, the pathloss estimate based on (or using) both the downlink pathloss estimate of the SS/PBCH and the first pathloss offset, for example, based on (or when) the field indicating to use (e.g., apply) the first pathloss offset for the PRACH transmission.

A wireless device may determine, for the PRACH transmission, the pathloss estimate (e.g., *PL)* based on a subtraction of the first pathloss offset (e.g., *PL*_{offset}) from the downlink pathloss estimate of the SS/PBCH (e.g., *PL_{downlink}*)*.* The pathloss estimate may be, for example, equal to the downlink pathloss estimate of the SS/PBCH minus the first pathloss offset (e.g., *PL* = *PL_{downlink}* - *PL*_{offset}). The wireless device may set, for the PRACH transmission, the pathloss estimate to the downlink pathloss estimate of the SS/PBCH minus the first pathloss offset.

An early uplink synchronization configuration (e.g., *ltm-EarlyUL-SyncConfig* or the one or more early uplink synchronization configuration parameters) may comprise a pathloss offset parameter (e.g., *PathlossOffset, PlOffset, PathlossOffset*)*.* The pathloss offset parameter may indicate the first pathloss offset. A value of the pathloss offset parameter may be set/equal to the first pathloss offset.

An early uplink synchronization configuration (e.g., *ltm-EarlyUL-SyncConfig* or the one or more early uplink synchronization configuration parameters) may comprise/indicate a list/set of pathloss offsets. The list/set of pathloss offsets may comprise the first pathloss offset. The value of the field may indicate/select the first pathloss offset among/from the list/set of pathloss offsets. Bit field indexes of the field may be mapped to the list of pathloss offsets in an ascending order of the bit field indexes.

A first bit field index (e.g., 0) of the field may, for example, indicate a pathloss offset that occurs first in the list of pathloss offsets. A second bit field index (e.g., 1) of the field may, for example, indicate a pathloss offset that occurs second in the list of pathloss offsets. The lowest value (e.g., 0) of the field may, for example, indicate a pathloss offset that occurs first in the list of pathloss offsets. The second lowest value (e.g., 1) of the field may, for example, indicate a pathloss offset that occurs second in the list of pathloss offsets.

First pathloss offset may be, for example, a lowest pathloss offset among the at least one pathloss offset associated with the one or more activated TCI states. The first pathloss offset may be, for example, a highest pathloss offset among the at least one pathloss offset associated with the one or more activated TCI states.

First pathloss offset may be, for example, a lowest pathloss offset among the one or more pathloss offsets associated with the at least one TCI state of the one or more TCI states in the TCI state list. The first pathloss offset may be, for example, a highest pathloss offset among the one or more pathloss offsets associated with the at least one TCI state of the one or more TCI states in the TCI state list.

First pathloss offset may be, for example, a pathloss offset indicated by an activated TCI state among the one or more activated TCI states associated with pathloss offset. The at least one pathloss offset associated with the one or more activated TCI states may comprise the pathloss offset indicated by the activated TCI state.

Activated TCI state may be with (or indicated/identified by) a lowest TCI state identifier among one or more second TCI state identifiers of the one or more activated TCI states. For example, the activated TCI state may be with (or indicated/identified by) a highest TCI state identifier among one or more second TCI state identifiers of the one or more activated TCI states.

At least one TCI state identifier (e.g., TCI state ID) indicating/identifying the at least one (activated) TCI state may comprise the one or more second TCI state identifiers of the one or more activated TCI states. Each TCI state identifier of the one or more second TCI state identifiers may indicate/identify a respective activated TCI state among the one or more activated TCI states.

A first pathloss offset may be, for example, a pathloss offset indicated by a TCI state among the at least one TCI state, of the one or more TCI states in the TCI state list, associated with pathloss offset. The one or more pathloss offsets associated with the at least one TCI state may comprise the pathloss offset indicated by the TCI state.

TCI state may be with (or indicated/identified by) a lowest TCI state identifier among at least one second TCI state identifier of the at least one TCI state. For example, the TCI state may be with (or indicated/identified by) a highest TCI state identifier among at least one second TCI state identifier of the at least one TCI state.

One or more TCI state identifiers of/indicating/identifying the one or more TCI states may comprise the at least one second TCI state identifier of the at least one TCI state. Each TCI state identifier of the least one second TCI state identifier may indicate/identify a respective TCI state among the at least one TCI state.

One or more activated TCI states associated with pathloss offset may be mapped to TCI codepoint(s) of the one or more TCI codepoints of/for the candidate cell. Each TCI codepoint of the TCI codepoint(s) may have/comprise/indicate (or be mapped to) a respective activated TCI state of the one or more activated TCI states. The first pathloss offset may be, for example, a pathloss offset indicated by a TCI state in the lowest TCI codepoint among the TCI codepoint(s). The first pathloss offset may be, for example, a pathloss offset indicated by a TCI state in the highest TCI codepoint among the TCI codepoint(s).

A wireless device may receive an activation command (e.g., MAC-CE, DCI, RRC, control command, downlink message, downlink control command, LTM Cell Switch Command MAC CE, cell switch command, LTM cell switch MAC-CE 2214 in FIG. 22). The activation command may trigger/initiate an LTM cell switch to the candidate cell.

LTM cell switch may be interchangeably used with an LTM cell switch procedure. The LTM cell switch may be, for example, RACH-less LTM cell switch. The LTM cell switch may be, for example, RACH-based LTM cell switch.

An activation command may comprise a first field (e.g., Target Configuration ID) indicating the LTM candidate configuration of candidate cell. The first may indicate an index of the LTM candidate configuration to use (e.g., apply) for the LTM cell switch.

An activation command may comprise a second field (e.g., timing advance command) indicating whether a timing advance (TA) is valid for the candidate cell. A first value (e.g., FFF) of the second field may indicate that no valid timing adjustment is available for a primary timing advance group (PTAG) of the candidate cell. A second value of the second field different from the first value (e.g., FFF) of the second field may indicate a timing advance value used to control the amount of timing adjustment that a MAC entity of the wireless device has to use (e.g., apply). The wireless device may skip a random access procedure for the LTM cell switch, for example, based on the second field being set/equal to the second value.

An activation command may indicate a first TCI state (e.g., *CandidateTCI-State* and/or *CandidateTCI-UL-State*)*.* The activation command may comprise a third field set/equal to a first TCI state identifier indicating/identifying the first TCI state. The one or more TCI state identifiers may comprise the first TCI state identifier. The first TCI state may be, for example, for downlink receptions and/or uplink transmissions via/on the candidate cell. The first TCI state may be, for example, a first uplink TCI state. The first TCI state may be, for example, a first joint TCI state.

An activation command may indicate the first TCI state, for example, from/among the at least one activated TCI state. The at least one TCI state identifier of the at least one activated TCI state may comprise the first TCI state identifier.

An activation command may indicate the first TCI state, for example, from/among the one or more TCI states in the TCI state list (e.g., *ltm-DL-OrJointTCI-StateToAddModList* and/or *ltm-UL-TCI-StateToAddModList*)*.* The activation command may both activate and indicate the first TCI state. The activation command may both activate and indicate the first TCI state, for example, if When the activation command indicates the first TCI state from/among the one or more TCI states in the TCI state list.

A wireless device may receive a PDSCH reception. The wireless device may receive the PDSCH reception, for example, on/via the serving cell. The PDSCH reception may comprise the activation command triggering/initiating the LTM cell switch to the candidate cell.

A wireless device may start/initiate/execute/perform/trigger the LTM cell switch to the candidate cell, for example, based on (or after) receiving the activation command. The wireless device may switch, for the LTM cell switch, to the candidate cell, for example, based on (or after) receiving the activation command.

One or more configuration parameters (or the one or more LTM configuration parameters or the TCI state list parameter or TCI state parameter) may indicate, for the first TCI state, a first reference signal (e.g., *referenceSignal*)*.* A first TCI state configuration of the first TCI state may comprise/have/indicate/provide a first reference signal index (e.g., *ssb-Index, csi-RS-Index*/ *NZP-CSI-RS-ResourceId, SRS-ResourceId* in FIG. 21) indicating/identifying the first reference signal. The first reference signal (e.g., CSI-RS, TRS) may be quasi co-located with a first source reference signal (e.g., a first SSB/PBCH block). The first reference signal may be quasi co-located with the first source reference signal, for example, with respect to QCL-TypeD. The at least one TCI state configuration for/of the at least one TCI state may comprise the first TCI state configuration.

One or more configuration parameters (or the one or more LTM configuration parameters or the TCI state list parameter or TCI state parameter) may indicate, for the first TCI state, a first uplink power control set (e.g., *ul-powerControl*)*.* The first TCI state configuration of the first TCI state may comprise/have/indicate/provide a first uplink power control index (e.g., *ul-powerControlId* in FIG. 21) indicating/identifying the first uplink power control set. The first uplink power control set may indicate/comprise one or more first uplink power control parameters. The one or more first uplink power control parameters may comprise, for example, a target received power (e.g., P0). The one or more first uplink power control parameters may comprise, for example, a closed-loop index. The one or more first uplink power control parameters may comprise, for example, a pathloss compensation factor.

One or more configuration parameters (or the one or more LTM configuration parameters or the TCI state list parameter or TCI state parameter) may indicate, for the first TCI state, a first reference signal (e.g., *PathlossReferenceRS-Id* in FIG. 21) for pathloss estimation. The first TCI state configuration of the first TCI state may comprise/have/indicate/provide a first pathloss reference RS index (e.g., *PathlossReferenceRS-Id)* indicating/identifying the first reference signal. The first reference signal may be a first pathloss reference signal used for pathloss estimation of uplink transmissions using/applying the first TCI state.

A wireless device may use (e.g., apply) the first TCI state to a first uplink transmission (e.g., PUSCH/PUCCH/SRS/PRACH) via the candidate cell for the LTM cell switch. The wireless device may use (e.g., apply) the first TCI state to a first uplink transmission (e.g., PUSCH/PUCCH/SRS/PRACH) via the candidate cell in the LTM cell switch. The wireless device may use (e.g., apply) the first TCI state to a first uplink transmission (e.g., PUSCH/PUCCH/SRS/PRACH) via the candidate cell after the LTM cell switch is completed and before a new TCI state is applied by the wireless device for the candidate cell.

Using (e.g., applying) the first TCI state to the first uplink transmission may comprise sending/transmitting/performing the first uplink transmission (e.g., step 2216) with/using a first spatial domain transmission/transmit filter/beam determined based on the first reference signal indicated by the first TCI state. The wireless device may determine, for the first uplink transmission, the first spatial domain transmission/transmit filter/beam based on the first reference signal indicated by (or of) the first TCI state The wireless device may send (e.g., transmit) the first uplink transmission with/using the first spatial domain transmission/transmit filter/beam that is the same as (or substantially same as) a spatial domain reception/receiving filter/beam used to receive the first reference signal (e.g., SSB, CSI-RS). The wireless device may send (e.g., transmit) the first uplink transmission with/using the first spatial domain transmission/transmit filter/beam that is the same as (or substantially same as) a spatial domain transmission/transmit filter/beam used to send (e.g., transmit) the first reference signal (e.g., SRS).

A wireless device may send/transmit/perform the first uplink transmission (e.g., step 2216) with/using a first transmission/transmit power. The wireless device may determine/calculate the first transmission/transmit power, for example, based on the one or more first uplink power control parameters indicated by (or mapped to or associated with) the first TCI state.

A wireless device may determine/calculate the first transmission/transmit power, for example, based on a pathloss estimate. The wireless device may determine/calculate/compute, based on (or using) the first reference signal (e.g., *PathlossReferenceRS-Id)* indicated by (or mapped to or associated with) the first TCI state, a downlink pathloss estimate used for calculation of the first transmission power of/for the first uplink transmission.

A wireless device may determine/calculate/compute the downlink pathloss estimate based on determining/measuring/assessing a radio link quality (e.g., RSRP, L3-RSRP, higher layer filtered RSRP, L1-RSRP) of the first reference signal (e.g., *PathlossReferenceRS-Id).* The wireless device may determine/calculate/compute the downlink pathloss estimate based on a higher layer parameter *ss-PBCH-BlockPower* corresponding to (or associated with) the first reference signal (e.g., *PathlossReferenceRS-Id).* For example, the one or more configuration parameters may indicate, for the first reference signal (e.g., *PathlossReferenceRS-Id),* the higher layer parameter *ss-PBCH-BlockPower.*

An uplink power control index may be (or may be interchangeably used with) an uplink power control identity. For example, an uplink power control index may be (or may be interchangeably used with) an uplink power control identifier.

A pathloss reference RS index may be (or may be interchangeably used with) a pathloss reference RS identity. For example, a pathloss reference RS index may be (or may be interchangeably used with) a pathloss reference RS identifier.

A first TCI state may not be associated with a pathloss offset. The at least one TCI state of the one or more TCI states in the TCI state list may not comprise the first TCI state. The at least one second TCI state that are not associated with pathloss offset may comprise the first TCI state.

A pathloss estimate used to determine/calculate the first transmission power of/for the first uplink transmission may be (or may be equal to) the downlink pathloss estimate of the first reference signal, for example, based on the first TCI state not being associated with a pathloss offset. The pathloss estimate used to determine/calculate the first transmission power of/for the first uplink transmission may be (or may be equal to) the downlink pathloss estimate of the first reference signal, for example, based on the activation command (e.g., LTM cell switch MAC-CE 2214 in FIG. 22) not indicating a pathloss offset. The pathloss estimate used to determine/calculate the first transmission power of/for the first uplink transmission may be (or may be equal to) the downlink pathloss estimate of the first reference signal, for example, based on the fifth field in the activation command (e.g., LTM cell switch MAC-CE 2214 in FIG. 22) being set/equal to the second value.

A wireless device may not use/apply a pathloss offset for/in determination/calculation of the pathloss estimate. The wireless device may not use/apply a pathloss offset to the downlink pathloss estimate of the first reference signal to calculate/determine the first transmission power of the first uplink transmission. The wireless device may not determine, for the first uplink transmission, the pathloss estimate based on (or using) a pathloss offset, for example, based on the first TCI state not being associated with a pathloss offset. The wireless device may not determine, for the first uplink transmission, the pathloss estimate based on (or using) a pathloss offset, for example, based on the activation command (e.g., LTM cell switch MAC-CE 2214 in FIG. 22) not indicating a pathloss offset. The wireless device may not determine, for the first uplink transmission, the pathloss estimate based on (or using) a pathloss offset, for example, based on the fifth field in the activation command (e.g., LTM cell switch MAC-CE 2214 in FIG. 22) being set/equal to the second value. The wireless device may determine/calculate/compute, based on (or using) the first reference signal, the pathloss estimate.

A first TCI state may be associated with a first pathloss offset. The at least one TCI state of the one or more TCI states in the TCI state list may comprise the first TCI state. The one or more pathloss offsets associated with the at least one TCI state may comprise the first pathloss offset.

One or more configuration parameters (or the one or more LTM configuration parameters or the TCI state list parameter or TCI state parameter) may indicate, for the first TCI state, the first pathloss offset (e.g., *PathlossOffset, PlOffset, PathlossOffset* in FIG. 21 and the like). The first TCI state configuration of the first TCI state may comprise/have/indicate/provide a first pathloss offset parameter (e.g., *PathlossOffset, PlOffset, PathlossOffset* in FIG. 21 and the like) indicating the first pathloss offset applied to the first TCI state. The one or more pathloss offset parameters (e.g., *PathlossOffset, PlOffset, PathlossOffset* in FIG. 21 and the like) indicating the one or more pathloss offsets may comprise the first pathloss offset parameter.

A pathloss estimate used to determine/calculate the transmission power of/for the PRACH transmission may be based on both the downlink pathloss estimate of the first reference signal and the first pathloss offset, for example, based on the first TCI state being associated with the first pathloss offset. The wireless device may use/apply the first pathloss offset for/in determination/calculation of the pathloss estimate. The wireless device may use/apply the first pathloss offset to the downlink pathloss estimate of the first reference signal to calculate/determine the first transmission power of the first uplink transmission. The wireless device may determine, for the first uplink transmission, the pathloss estimate based on (or using) the first pathloss offset, for example, based on the first TCI state being associated with the first pathloss offset. The wireless device may determine/calculate/compute, based on (or using) both the first reference signal and the first pathloss offset, the pathloss estimate.

A wireless device may determine, for the first uplink transmission, the pathloss estimate based on (or using) both the downlink pathloss estimate of the first reference signal and the first pathloss offset, for example, based on (or when) the first TCI state being associated with the first pathloss offset. The wireless device may use both the downlink pathloss estimate of the first reference signal and the first pathloss offset to determine the pathloss estimate for the first uplink transmission, for example, based on (or when) the first TCI state being associated with the first pathloss offset.

A wireless device may determine, for the first uplink transmission, the pathloss estimate (e.g., *PL)* based on a subtraction of the first pathloss offset (e.g., *PL*_{offset}) from the downlink pathloss estimate of the first reference signal (e.g., *PL_{downlink}*)*.* The pathloss estimate may be, for example, equal to the downlink pathloss estimate of the first reference signal minus the first pathloss offset (e.g., *PL = PL_{downlink} - PL*_{offset}). The wireless device may set, for the first uplink transmission, the pathloss estimate to the downlink pathloss estimate of the first reference signal minus the first pathloss offset.

An activation command may comprise a fourth field indicating a second pathloss offset. The activation command may comprise a fifth field indicating presence of the fourth field that indicates the second pathloss offset. A first value of the fifth field may indicate presence of the fourth field. A second value of the fifth field may indicate absence of the fourth field.

An activation command may comprise the fourth field indicating the second pathloss offset, for example, based on the fifth field being set to the first value. The activation command may not comprise the fourth field indicating a pathloss offset, for example, based on the fifth field being set to the second value.

A pathloss estimate used to determine/calculate the transmission power of/for the PRACH transmission may be based on both the downlink pathloss estimate of the first reference signal and the second pathloss offset indicated by the activation command, for example, based on the activation command indicating the second pathloss offset. The pathloss estimate used to determine/calculate the transmission power of/for the PRACH transmission may be based on both the downlink pathloss estimate of the first reference signal and the second pathloss offset indicated by the activation command, for example, based on the fifth field in the activation command being set/equal to the first value.

A wireless device may use/apply the second pathloss offset for/in determination/calculation of the pathloss estimate. The wireless device may use/apply the second pathloss offset to the downlink pathloss estimate of the first reference signal to calculate/determine the first transmission power of the first uplink transmission. The wireless device may determine, for the first uplink transmission, the pathloss estimate based on (or using) the second pathloss offset, for example, based on the activation command indicating the second pathloss offset. The wireless device may determine, for the first uplink transmission, the pathloss estimate based on (or using) the second pathloss offset, for example, based on the fifth field in the activation command being set/equal to the first value. The wireless device may determine/calculate/compute, based on (or using) both the first reference signal and the second pathloss offset, the pathloss estimate.

A wireless device may determine, for the first uplink transmission, the pathloss estimate based on (or using) both the downlink pathloss estimate of the first reference signal and the second pathloss offset, for example, based on the activation command indicating the second pathloss offset. The wireless device may determine, for the first uplink transmission, the pathloss estimate based on (or using) both the downlink pathloss estimate of the first reference signal and the second pathloss offset, for example, based on the fifth field in the activation command being set/equal to the first value.

A wireless device may use both the downlink pathloss estimate of the first reference signal and the second pathloss offset to determine the pathloss estimate for the first uplink transmission, for example, based on (or when) the activation command indicating the second pathloss offset. The wireless device may use both the downlink pathloss estimate of the first reference signal and the second pathloss offset to determine the pathloss estimate for the first uplink transmission, for example, based on (or when) the fifth field in the activation command being set/equal to the first value.

A wireless device may determine, for the first uplink transmission, the pathloss estimate (e.g., *PL)* based on a subtraction of the second pathloss offset (e.g., *PL*_{offset}) from the downlink pathloss estimate of the first reference signal (e.g., *PL_{downlink}*)*.* The pathloss estimate may be, for example, equal to the downlink pathloss estimate of the first reference signal minus the second pathloss offset (e.g., *PL = PL_{downlink} - PL*_{offset}). The wireless device may set, for the first uplink transmission, the pathloss estimate to the downlink pathloss estimate of the first reference signal minus the second pathloss offset.

An activation command may comprise the fourth field indicating the second pathloss offset, for example, based on the first TCI state being associated with the first pathloss offset. The activation command may not comprise the fourth field indicating a pathloss offset, for example, based on the first TCI state not being associated with a pathloss offset.

A fourth field may indicate the second pathloss offset, for example, for the first TCI state. The fourth field may update the first pathloss offset configured/indicated for the first TCI state with the second pathloss offset. The fourth field may update the first pathloss offset configured/indicated by the first pathloss offset parameter for the first TCI state with the second pathloss offset.

A range of an indicated pathloss offset in the activation command may be from N1 dB (e.g., -12 dB) to N2 dB (e.g., 60 dB) with a step size of X dB (e.g., 4 dB). The field value 0 of the fourth field may correspond to N1 dB, the field value 1 of the fourth field may correspond to N1+X dB and so on.

A pathloss estimate used to determine/calculate the transmission power of/for the PRACH transmission may be based on both the downlink pathloss estimate of the first reference signal and the second pathloss offset indicated by the activation command, for example, based on the activation command indicating the second pathloss offset. The pathloss estimate used to determine/calculate the transmission power of/for the PRACH transmission may be based on both the downlink pathloss estimate of the first reference signal and the second pathloss offset indicated by the activation command, for example, based on the fifth field in the activation command being set/equal to the first value.

A wireless device may use/apply the second pathloss offset for/in determination/calculation of the pathloss estimate. The wireless device may use/apply the second pathloss offset to the downlink pathloss estimate of the first reference signal to calculate/determine the first transmission power of the first uplink transmission. The wireless device may determine, for the first uplink transmission, the pathloss estimate based on (or using) the second pathloss offset, for example, based on the activation command indicating the second pathloss offset. The wireless device may determine, for the first uplink transmission, the pathloss estimate based on (or using) the second pathloss offset, for example, based on the fifth field in the activation command being set/equal to the first value. The wireless device may determine/calculate/compute, based on (or using) both the first reference signal and the second pathloss offset, the pathloss estimate.

A wireless device may determine, for the first uplink transmission, the pathloss estimate based on (or using) both the downlink pathloss estimate of the first reference signal and the second pathloss offset, for example, based on the activation command indicating the second pathloss offset. The wireless device may determine, for the first uplink transmission, the pathloss estimate based on (or using) both the downlink pathloss estimate of the first reference signal and the second pathloss offset, for example, based on the fifth field in the activation command being set/equal to the first value.

A wireless device may use both the downlink pathloss estimate of the first reference signal and the second pathloss offset to determine the pathloss estimate for the first uplink transmission, for example, based on (or when) the activation command indicating the second pathloss offset. The wireless device may use both the downlink pathloss estimate of the first reference signal and the second pathloss offset to determine the pathloss estimate for the first uplink transmission, for example, based on (or when) the fifth field in the activation command being set/equal to the first value.

A wireless device may determine, for the first uplink transmission, the pathloss estimate (e.g., *PL)* based on a subtraction of the second pathloss offset (e.g., *PL*_{offset}) from the downlink pathloss estimate of the first reference signal (e.g., *PL_{downlink}*). The pathloss estimate may be, for example, equal to the downlink pathloss estimate of the first reference signal minus the second pathloss offset (e.g., *PL* = *PL_{downlink} - PL*_{offset}). The wireless device may set, for the first uplink transmission, the pathloss estimate to the downlink pathloss estimate of the first reference signal minus the second pathloss offset.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: receiving, by a wireless device, one or more radio resource control (RRC) messages comprising a layer 1/layer 2 triggered mobility (LTM) candidate configuration of a candidate cell for LTM, wherein the LTM candidate configuration comprises an early uplink synchronization configuration indicating a first pathloss offset.

Clause 1B. The method of clause 1A, further comprising: receiving a physical downlink control channel (PDCCH) order triggering a random-access procedure, wherein the PDCCH order comprises: a cell indicator field indicating the candidate cell for a physical random-access channel (PRACH) transmission; and a pathloss offset indicator field with a value indicating to apply a pathloss offset for the PRACH transmission.

Clause 1C. The method of clause 1B, further comprising: sending an uplink signal for the random-access procedure using a transmission power that is based on the first pathloss offset in the early uplink synchronization configuration. Reference to clause 1 herein may refer to one or each of clause 1A, clause 1B, and clause 1C.

Clause 2. The method of clause 1, further comprising: receiving an LTM cell switch Media Access Control Protocol Control Element (MAC-CE) indicating the candidate cell, wherein the LTM cell switch MAC-CE comprises a transmission configuration indicator (TCI) state identifier indicating a TCI state of the candidate cell; and sending, via the candidate cell and after receiving the LTM cell switch MAC-CE, a first uplink transmission using a first transmission power.

Clause 3. The method of any one of clauses 1-2, further comprising: determining a downlink pathloss estimate using synchronization signal/physical broadcast channel (SS/PBCH); and calculating, based on a pathloss estimate, the transmission power for the PRACH transmission, wherein: the PDCCH order comprises an SS/PBCH index field indicating the SS/PBCH; and the pathloss estimate is based on the downlink pathloss estimate of the SS/PBCH and the first pathloss offset indicated by the early uplink synchronization configuration.

Clause 4. The method of any one of clauses 1-3, further comprising: reserving the pathloss offset indicator field if a cell indicated by the cell indicator field is not configured with at least one TCI state associated with a pathloss offset parameter.

Clause 5. The method of any one of clauses 1-4, further comprising: initiating the random-access procedure based on receiving the PDCCH order.

Clause 6. The method of any one of clauses 1-5, wherein the sending the uplink signal comprises sending a PRACH transmission comprising the uplink signal.

Clause 7. The method of any one of clauses 1-6, wherein the PDCCH order comprises the pathloss offset indicator field based on the early uplink synchronization configuration configured for at least one LTM candidate configuration, among one or more LTM candidate configurations indicated by the one or more RRC messages, being associated with a pathloss offset parameter.

Clause 8. The method of any one of clauses 1-7, wherein the pathloss offset indicator field comprises a value, and wherein the value comprises one of: a first value, if no pathloss offset is applied to the PRACH transmission; and a second value, if pathloss offset is applied to the PRACH transmission.

Clause 9. The method of any one of clauses 1-8, wherein the early uplink synchronization configuration comprises a pathloss offset parameter indicating the first pathloss offset.

Clause 10. The method of any one of clauses 1-9, wherein the PDCCH order comprises a downlink control information (DCI) format 1_0.

Clause 11. The method of any one of clauses 1-10, wherein the random-access procedure is a contention-free random-access procedure.

Clause 12. The method of any one of clauses 1-11, wherein a value of the cell indicator field is mapped to the candidate cell.

Clause 13. The method of any one of clauses 1-12, wherein the PRACH transmission is via the candidate cell.

Clause 14. The method of any one of clauses 1-13, wherein the first pathloss offset, applied for the PRACH transmission, is indicated by at least one of: a candidate TCI state, among a list of TCI states configured for the candidate cell, with a lowest TCI state identifier; a candidate TCI state, among one or more TCI states activated for the candidate cell by a TCI state activation MAC-CE, with a lowest TCI state identifier;a candidate TCI state, among a list of TCI states configured for the candidate cell, associated with a lowest pathloss offset; a candidate TCI state, among a list of TCI states configured for the candidate cell, associated with a highest pathloss offset; a candidate TCI state, among one or more TCI states activated for the candidate cell by a TCI state activation MAC-CE, associated with a lowest pathloss offset; or a candidate TCI state, among one or more TCI states activated for the candidate cell by a TCI state activation MAC-CE, associated with a highest pathloss offset.

Clause 15. The method of any one of clauses 2-14, further comprising: determining the first transmission power based on: a downlink pathloss estimate of a first pathloss reference signal indicated by the TCI state; and a second pathloss offset.

Clause 16. The method of any one of clauses 2-15, wherein: the TCI state is associated with a second pathloss offset; or the LTM cell switch MAC-CE comprises a pathloss offset field indicating the second pathloss offset.

Clause 17. The method of any one of clauses 2-16, wherein the LTM cell switch MAC-CE comprises a field indicating presence of a pathloss offset field, wherein the field comprises one of: a first value, if the pathloss offset field is present; and a second, if the pathloss offset field is absent.

Clause 18A. A method comprising: receiving, by a wireless device, one or more radio resource control (RRC) messages comprising a layer 1/layer 2 triggered mobility (LTM) candidate configuration of a candidate cell for LTM, wherein the LTM candidate configuration comprises an early uplink synchronization configuration indicating a first pathloss offset.

Clause 18B. The method of clause 18A, further comprising: receiving an LTM cell switch Media Access Control Protocol Control Element (MAC-CE) indicating the candidate cell, wherein: the LTM cell switch MAC-CE comprises a transmission configuration indicator (TCI) state identifier indicating a TCI state of the candidate cell.

Clause 18C. The method of clause 18B, further comprising: sending, via the candidate cell and after receiving the LTM cell switch MAC-CE, a first uplink transmission using a first transmission power. Reference to clause 18 herein may refer to one or each of clause 18A, clause 18B, and clause 18C.

Clause 19. The method of clause 18, further comprising: determining the first transmission power based on: a downlink pathloss estimate of a first pathloss reference signal indicated by the TCI state; and a second pathloss offset.

Clause 20. The method of any one of clauses 18-19, wherein: the TCI state is associated with a second pathloss offset; or the LTM cell switch MAC-CE comprises a pathloss offset field indicating the second pathloss offset.

Clause 21. The method of any one of clauses 18-20, wherein the LTM cell switch MAC-CE comprises a field indicating presence of a pathloss offset field, wherein the field comprises one of: a first value, if the pathloss offset field is present; and a second, if the pathloss offset field is absent.

Clause 22. The method of any one of clauses 18-21, wherein the early uplink synchronization configuration comprises a pathloss offset parameter indicating the first pathloss offset.

Clause 23A. A method comprising: sending, by a base station, one or more radio resource control (RRC) messages comprising a layer 1/layer 2 triggered mobility (LTM) candidate configuration of a candidate cell for LTM, wherein: the LTM candidate configuration comprises an early uplink synchronization configuration indicating a first pathloss offset.

Clause 23B. The method of clause 23A, further comprising: sending a physical downlink control channel (PDCCH) order triggering a random-access procedure, wherein the PDCCH order comprises: a cell indicator field indicating the candidate cell for a physical random-access channel (PRACH) transmission; and a pathloss offset indicator field with a value indicating to apply a pathloss offset for the PRACH transmission.

Clause 23C. The method of clause 23B, further comprising: receiving an uplink signal for the random-access procedure using a transmission power that is based on the first pathloss offset in the early uplink synchronization configuration. Reference to clause 23 herein may refer to one or each of clause 23A, clause 23B, and clause 23C.

Clause 24. The method of clause 23, wherein the PDCCH order comprises a downlink control information (DCI) format 1_0.

Clause 25. The method of any one of clauses 23-24, wherein the random-access procedure is a contention-free random-access procedure.

Clause 26. The method of any one of clauses 23-25, wherein a value of the cell indicator field is mapped to the candidate cell.

Clause 27. The method of any one of clauses 23-26, wherein the PRACH transmission is via the candidate cell.

Clause 28. The method of any one of clauses 23-27, wherein the first pathloss offset, applied for the PRACH transmission, is indicated by at least one of: a candidate TCI state, among a list of TCI states configured for the candidate cell, with a lowest TCI state identifier; a candidate TCI state, among one or more TCI states activated for the candidate cell by a TCI state activation MAC-CE, with a lowest TCI state identifier; a candidate TCI state, among a list of TCI states configured for the candidate cell, associated with a lowest pathloss offset; a candidate TCI state, among a list of TCI states configured for the candidate cell, associated with a highest pathloss offset; a candidate TCI state, among one or more TCI states activated for the candidate cell by a TCI state activation MAC-CE, associated with a lowest pathloss offset; or a candidate TCI state, among one or more TCI states activated for the candidate cell by a TCI state activation MAC-CE, associated with a highest pathloss offset.

Clause 29. The method of any one of clauses 23-28, wherein the PDCCH order comprises the pathloss offset indicator field based on the early uplink synchronization configuration configured for at least one LTM candidate configuration, among one or more LTM candidate configurations indicated by the one or more RRC messages, being associated with a pathloss offset parameter.

Clause 30. The method of any one of clauses 23-29, wherein: the receiving the uplink signal comprises receiving a PRACH transmission comprising the uplink signal.

Clause 31. The method of any one of clauses 23-30, wherein the early uplink synchronization configuration comprises a pathloss offset parameter indicating the first pathloss offset.

Clause 32. The method of any one of clauses 23-31, wherein the PDCCH order comprises the pathloss offset indicator field based on the early uplink synchronization configuration configured for at least one LTM candidate configuration, among one or more LTM candidate configurations indicated by the one or more RRC messages, being associated with a pathloss offset parameter.

Clause 33. The method of any one of clauses 23-32, wherein the pathloss offset indicator field comprises a value, and wherein the value comprises one of: a first value, if no pathloss offset is applied to the PRACH transmission; and a second value, if pathloss offset is applied to the PRACH transmission.

A wireless device may perform a method comprising multiple operations. The wireless device may receive one or more radio resource control (RRC) messages comprising a layer 1/layer 2 triggered mobility (LTM) candidate configuration of a candidate cell for LTM, wherein the LTM candidate configuration may comprise an early uplink synchronization configuration indicating a first pathloss offset; may receive a physical downlink control channel (PDCCH) order triggering a random-access procedure, wherein the PDCCH order may comprise: a cell indicator field indicating the candidate cell for a physical random-access channel (PRACH) transmission; and a pathloss offset indicator field with a value indicating to apply a pathloss offset for the PRACH transmission; may send an uplink signal for the random-access procedure using a transmission power that is based on the first pathloss offset in the early uplink synchronization configuration; may receive an LTM cell switch Media Access Control Protocol Control Element (MAC-CE) indicating the candidate cell, wherein the LTM cell switch MAC-CE may comprise a transmission configuration indicator (TCI) state identifier indicating a TCI state of the candidate cell; may send, via the candidate cell and after receiving the LTM cell switch MAC-CE, a first uplink transmission using a first transmission power; may determine a downlink pathloss estimate using synchronization signal/physical broadcast channel (SS/PBCH); may calculate, based on a pathloss estimate, the transmission power for the PRACH transmission, wherein: the PDCCH order may comprise an SS/PBCH index field indicating the SS/PBCH; and the pathloss estimate may be based on the downlink pathloss estimate of the SS/PBCH and the first pathloss offset indicated by the early uplink synchronization configuration; may reserve the pathloss offset indicator field if a cell indicated by the cell indicator field is not configured with at least one TCI state associated with a pathloss offset parameter; may initiate the random-access procedure based on receiving the PDCCH order, wherein the sending the uplink signal may comprise sending a PRACH transmission comprising the uplink signal; wherein the PDCCH order may comprise the pathloss offset indicator field based on the early uplink synchronization configuration configured for at least one LTM candidate configuration, among one or more LTM candidate configurations indicated by the one or more RRC messages, being associated with a pathloss offset parameter; wherein the pathloss offset indicator field may comprise a value, and wherein the value may comprise one of: a first value, if no pathloss offset is applied to the PRACH transmission; and a second value, if pathloss offset is applied to the PRACH transmission; wherein the early uplink synchronization configuration may comprise a pathloss offset parameter indicating the first pathloss offset; wherein the PDCCH order may comprise a downlink control information (DCI) format 1_0; wherein the random-access procedure may be a contention-free random-access procedure; wherein a value of the cell indicator field may be mapped to the candidate cell; wherein the PRACH transmission may be via the candidate cell; wherein the first pathloss offset, applied for the PRACH transmission, may be indicated by at least one of: a candidate TCI state, among a list of TCI states configured for the candidate cell, with a lowest TCI state identifier; a candidate TCI state, among one or more TCI states activated for the candidate cell by a TCI state activation MAC-CE, with a lowest TCI state identifier; a candidate TCI state, among a list of TCI states configured for the candidate cell, associated with a lowest pathloss offset; a candidate TCI state, among a list of TCI states configured for the candidate cell, associated with a highest pathloss offset; a candidate TCI state, among one or more TCI states activated for the candidate cell by a TCI state activation MAC-CE, associated with a lowest pathloss offset; or a candidate TCI state, among one or more TCI states activated for the candidate cell by a TCI state activation MAC-CE, associated with a highest pathloss offset. The wireless device may determine the first transmission power based on: a downlink pathloss estimate of a first pathloss reference signal indicated by the TCI state; and a second pathloss offset, wherein: the TCI state may be associated with a second pathloss offset; or the LTM cell switch MAC-CE may comprise a pathloss offset field indicating the second pathloss offset; wherein the LTM cell switch MAC-CE may comprise a field indicating presence of a pathloss offset field, wherein the field may comprise one of: a first value, if the pathloss offset field is present; and a second, if the pathloss offset field is absent.A computing device may comprise: one or more processors; and memory storing instructions that, when executed by the one or more processors, cause the computing device to perform the described method, additional operations and/or include the additional elements. A system comprising: a wireless device configured to perform the described method, additional operations, and/or include the additional elements; and a base station configured to send the one or more RRC messages. A computer-readable medium storing instructions that, when executed, cause performance of the described method, additional operations and/or include the additional elements.

A wireless device may perform a method comprising multiple operations. The wireless device may receive one or more radio resource control (RRC) messages comprising a layer 1/layer 2 triggered mobility (LTM) candidate configuration of a candidate cell for LTM, wherein the LTM candidate configuration may comprise an early uplink synchronization configuration indicating a first pathloss offset; may receive an LTM cell switch Media Access Control Protocol Control Element (MAC-CE) indicating the candidate cell, wherein: the LTM cell switch MAC-CE may comprise a transmission configuration indicator (TCI) state identifier indicating a TCI state of the candidate cell; may send, via the candidate cell and after receiving the LTM cell switch MAC-CE, a first uplink transmission using a first transmission power; may determine the first transmission power based on: a downlink pathloss estimate of a first pathloss reference signal indicated by the TCI state; and a second pathloss offset, wherein: the TCI state may be associated with a second pathloss offset; or the LTM cell switch MAC-CE may comprise a pathloss offset field indicating the second pathloss offset; wherein the LTM cell switch MAC-CE may comprise a field indicating presence of a pathloss offset field, wherein the field may comprise one of: a first value, if the pathloss offset field is present; and a second, if the pathloss offset field is absent; wherein the early uplink synchronization configuration may comprise a pathloss offset parameter indicating the first pathloss offset. A computing device may comprise: one or more processors; and memory storing instructions that, when executed by the one or more processors, cause the computing device to perform the described method, additional operations and/or include the additional elements. A system comprising: a wireless device configured to perform the described method, additional operations, and/or include the additional elements; and a base station configured to send the one or more RRC messages. A computer-readable medium storing instructions that, when executed, cause performance of the described method, additional operations and/or include the additional elements.

A base station may perform a method comprising multiple operations. The base station may send one or more radio resource control (RRC) messages comprising a layer 1/layer 2 triggered mobility (LTM) candidate configuration of a candidate cell for LTM, wherein: the LTM candidate configuration may comprise an early uplink synchronization configuration indicating a first pathloss offset; may send a physical downlink control channel (PDCCH) order triggering a random-access procedure, wherein the PDCCH order may comprise: a cell indicator field indicating the candidate cell for a physical random-access channel (PRACH) transmission; and a pathloss offset indicator field with a value indicating to apply a pathloss offset for the PRACH transmission; may receive an uplink signal for the random-access procedure using a transmission power that is based on the first pathloss offset in the early uplink synchronization configuration, wherein the PDCCH order may comprise a downlink control information (DCI) format 1_0; wherein the random-access procedure may be a contention-free random-access procedure; wherein a value of the cell indicator field may be mapped to the candidate cell; wherein the PRACH transmission may be via the candidate cell; wherein the first pathloss offset, applied for the PRACH transmission, may be indicated by at least one of: a candidate TCI state, among a list of TCI states configured for the candidate cell, with a lowest TCI state identifier; a candidate TCI state, among one or more TCI states activated for the candidate cell by a TCI state activation MAC-CE, with a lowest TCI state identifier; a candidate TCI state, among a list of TCI states configured for the candidate cell, associated with a lowest pathloss offset; a candidate TCI state, among a list of TCI states configured for the candidate cell, associated with a highest pathloss offset; a candidate TCI state, among one or more TCI states activated for the candidate cell by a TCI state activation MAC-CE, associated with a lowest pathloss offset; or a candidate TCI state, among one or more TCI states activated for the candidate cell by a TCI state activation MAC-CE, associated with a highest pathloss offset; wherein the PDCCH order may comprise the pathloss offset indicator field based on the early uplink synchronization configuration configured for at least one LTM candidate configuration, among one or more LTM candidate configurations indicated by the one or more RRC messages, being associated with a pathloss offset parameter; wherein: the receiving the uplink signal may comprise receiving a PRACH transmission comprising the uplink signal; wherein the early uplink synchronization configuration may comprise a pathloss offset parameter indicating the first pathloss offset; wherein the PDCCH order may comprise the pathloss offset indicator field based on the early uplink synchronization configuration configured for at least one LTM candidate configuration, among one or more LTM candidate configurations indicated by the one or more RRC messages, being associated with a pathloss offset parameter; wherein the pathloss offset indicator field may comprise a value, and wherein the value may comprise one of: a first value, if no pathloss offset is applied to the PRACH transmission; and a second value, if pathloss offset is applied to the PRACH transmission. A computing device may comprise: one or more processors; and memory storing instructions that, when executed by the one or more processors, cause the computing device to perform the described method, additional operations and/or include the additional elements. A system comprising: a base station configured to perform the described method, additional operations, and/or include the additional elements; and a wireless device configured to receive the one or more RRC messages. A computer-readable medium storing instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a wireless device, one or more radio resource control (RRC) messages comprising a layer 1/layer 2 triggered mobility (LTM) candidate configuration of a candidate cell for LTM, wherein the LTM candidate configuration comprises an early uplink synchronization configuration indicating a first pathloss offset;
receiving a physical downlink control channel (PDCCH) order triggering a random-access procedure, wherein the PDCCH order comprises:
a cell indicator field indicating the candidate cell for a physical random-access channel (PRACH) transmission; and
a pathloss offset indicator field with a value indicating to apply a pathloss offset for the PRACH transmission; and
sending an uplink signal for the random-access procedure using a transmission power that is based on the first pathloss offset in the early uplink synchronization configuration.

2. The method of claim 1, further comprising:
determining a downlink pathloss estimate using synchronization signal/physical broadcast channel (SS/PBCH); and
calculating, based on a pathloss estimate, the transmission power for the PRACH transmission, wherein:
the PDCCH order comprises an SS/PBCH index field indicating the SS/PBCH; and
the pathloss estimate is based on the downlink pathloss estimate of the SS/PBCH and the first pathloss offset indicated by the early uplink synchronization configuration.

3. The method of any one of claims 1-2, further comprising:
reserving the pathloss offset indicator field if a cell indicated by the cell indicator field is not configured with at least one TCI state associated with a pathloss offset parameter.

4. The method of any one of claims 1-3, further comprising:
initiating the random-access procedure based on receiving the PDCCH order.

5. The method of any one of claims 1-4, wherein the sending the uplink signal comprises sending a PRACH transmission comprising the uplink signal.

6. The method of any one of claims 1-5, wherein the PDCCH order comprises the pathloss offset indicator field based on the early uplink synchronization configuration configured for at least one LTM candidate configuration, among one or more LTM candidate configurations indicated by the one or more RRC messages, being associated with a pathloss offset parameter.

7. The method of any one of claims 1-6, wherein the pathloss offset indicator field comprises a value, and wherein the value comprises one of:
a first value, if no pathloss offset is applied to the PRACH transmission; and
a second value, if pathloss offset is applied to the PRACH transmission.

8. The method of any one of claims 1-7, wherein the early uplink synchronization configuration comprises a pathloss offset parameter indicating the first pathloss offset.

9. The method of any one of claims 1-8, further comprising:
receiving an LTM cell switch Media Access Control Protocol Control Element (MAC-CE) indicating the candidate cell, wherein the LTM cell switch MAC-CE comprises a transmission configuration indicator (TCI) state identifier indicating a TCI state of the candidate cell; and
sending, via the candidate cell and after receiving the LTM cell switch MAC-CE, a first uplink transmission using a first transmission power.

10. The method of claim 9, further comprising:
determining the first transmission power based on:
a downlink pathloss estimate of a first pathloss reference signal indicated by the TCI state; and
a second pathloss offset.

11. The method of any one of claims 9-10, wherein:
the TCI state is associated with a second pathloss offset; or
the LTM cell switch MAC-CE comprises a pathloss offset field indicating the second pathloss offset.

12. The method of any one of claims 9-11, wherein the LTM cell switch MAC-CE comprises a field indicating presence of a pathloss offset field, wherein the field comprises one of:
a first value, if the pathloss offset field is present; and
a second, if the pathloss offset field is absent.

13. A computing device comprising:
one or more processors; and
memory storing instructions that, when executed by the one or more processors, cause the computing device to perform the method of any one of claims 1-12.

14. A system comprising:
a wireless device configured to perform the method of any one of claims 1-12; and
a base station configured to send the one or more RRC messages.

15. A computer-readable medium storing instructions that, when executed, cause performance of the method of any one of claims 1-12.
